# EUROPEAN PATENT APPLICATION

(11) **EP 4 807 535 A1**
(43) Date of publication of application: **16.09.2026**
(21) Application number: 26164379.5
(22) Date of filing: 12.03.2026
(51) Int. Cl.: G06F 8/41

(54) **TILE PROGRAM OPTIMIZATION USING SUB-TILES**

(30) Priority: 14.03.2025 WO PCT/CN2025/082728; 04.02.2026 US 202619530265
(71) Applicant: Nvidia Corporation, Santa Clara, CA 95051 (US)
(72) Inventor: ZHAO, Wenyi, Santa Clara, 95051 (US); YIN, Wenzhi, Santa Clara, 95051 (US); SHI, Yining, Santa Clara, 95051 (US); JIANG, Shuhao, Santa Clara, 95051 (US); ZHU, Kai, Santa Clara, 95051 (US)
(74) Representative: Mathys & Squire

(57) **Abstract**

Processors, systems, and techniques to cause a compiler to partition a tile of a tile program into a plurality of sub-tiles and perform tile program operations on the sub-tiles in a determined order. In at least one embodiment a compiler is to partition a tile of a tile program into a plurality of sub-tiles, wherein the compiler determines a size of the sub-tiles based, at least in part, on one or more accelerator hardware characteristics. The compiler is further to generate a plurality of instruction groups to be performed on corresponding sub-tiles of the plurality of sub-tiles, wherein the instruction groups are based, at least in part, on a tile operation to be performed on the tile of the tile program, determine an order to perform individual instruction groups of the plurality of instruction groups, and generate code to cause individual instruction groups to be performed in the determined order.

## Description

### CLAIM OF PRIORITY

This application claims the benefit of PCT International Application No. PCT/CN/2025/082728, entitled "INSTRUCTION SCHEDULING OPTIMIZATION TECHNIQUE," filed March 14, 2025, the entire contents of which is incorporated herein by reference.

### CROSS-REFERENCE TO RELATED APPLICATIONS

This application incorporates by reference for all purposes the full disclosure of co-pending U.S. Patent Application No. 19/530,265, entitled "SCHEDULING TILE PROGRAM OPERATIONS" (Attorney Docket No. 0112912-F77US0).

### TECHNICAL FIELD

At least one embodiment pertains to performing compiler optimization on program code that performs parallel processing on tiles of data. For example, at least one embodiment pertains to compilers that partition tiles into sub-tiles according to accelerator hardware characteristics and generating execution schedules for tile program operations on the sub-tiles. As another example, at least one embodiment pertains to compilers that generate instruction schedules using dependencies between operations on tiles and constraints on usage of functional units of accelerator hardware.

### BACKGROUND

Performing computational operations can use significant memory, time, or computing resources. Parallel processors, such as Graphics Processing Units (GPUs), can perform computational operations in parallel, thereby reducing the time needed to perform the operations. Application programs that use parallel processors can be produced from source code and compiled into executable instructions by a compiler. In order to improve performance of executable instructions produced, compilers may apply optimizations that remove, combine, or rearrange operations so that they can be performed more efficiently by a parallel processor. However, techniques for applying such optimizations may be improved.

### SUMMARY

The invention is defined by the claims. In order to illustrate the invention, aspects and embodiments which may or may not fall within the scope of the claims are described herein.

Processors, systems, and techniques to cause a compiler to partition a tile of a tile program into a plurality of sub-tiles and perform tile program operations on the sub-tiles in a determined order. In at least one embodiment a compiler is to partition a tile of a tile program into a plurality of sub-tiles, wherein the compiler determines a size of the sub-tiles based, at least in part, on one or more accelerator hardware characteristics. The compiler is further to generate a plurality of instruction groups to be performed on corresponding sub-tiles of the plurality of sub tiles, wherein the instruction groups are based, at least in part, on a tile operation to be performed on the tile of the tile program, determine an order to perform individual instruction groups of the plurality of instruction groups, and generate code to cause individual instruction groups to be performed in the determined order.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF DRAWINGS

FIG. 1 illustrates a block diagram of an example scheduling system, in accordance with at least one embodiment;
FIG. 2 illustrates an example of a tile divided into multiple atoms, in accordance with at least one embodiment;
FIG. 3 illustrates example transformations of tile-level program code to atom-level program code, in accordance with at least one embodiment;
FIG. 4 illustrates an example of atom code, in accordance with at least one embodiment;
FIG. 5 illustrates an example transformation of tile-level program code for a machine learning application, in accordance with at least one embodiment;
FIG. 6 illustrates example atom-level code for a machine learning application, which is generated by a loop merge transform from atom-level program code that has separate loops, in accordance with at least one embodiment;
FIG. 7 illustrates an example data dependency graph and an example resource reservation table, in accordance with at least one embodiment;
FIG. 8 illustrates an example schedule of operations, in accordance with at least one embodiment;
FIG. 9 illustrates an example of a process to generate a schedule of operations for a tile program according to at least one embodiment;
FIG. 10 illustrates an example of a system that can include software and hardware to generate a schedule of operations for a tile program or otherwise perform any of the operations described herein, according to at least one embodiment;
FIG. 11 illustrates an example data center system, in accordance with at least one embodiment;
FIG. 12 illustrates an system-on-a-chip (SOC), in accordance with at least one embodiment;
FIG. 13A illustrates a parallel processor, in accordance with at least one embodiment;
FIG. 13B illustrates a processing cluster, in accordance with at least one embodiment;
FIG. 13C illustrates a graphics multiprocessor, in accordance with at least one embodiment;
FIG. 14 illustrates an accelerator processor, in accordance with at least one embodiment;
FIG. 15A illustrates a central processing unit, in accordance with at least one embodiment;
FIG. 15B illustrates a core of central processing unit in FIG. 15A, in accordance with at least one embodiment;
FIG. 16 illustrates another accelerator processor, in accordance with at least one embodiment;
FIG. 17 illustrates a neuromorphic processor, in accordance with at least one embodiment;
FIG. 18 illustrates a supercomputer, in accordance with at least one embodiment;
FIG. 19 illustrates another accelerator processor, in accordance with at least one embodiment;
FIG. 20 illustrates another processor, in accordance with at least one embodiment;
FIG. 21 illustrates another accelerator processor, in accordance with at least one embodiment;
FIG. 22 illustrates a tensor processing unit, in accordance with at least one embodiment;
FIG. 23 illustrates a RISC-V-compatible processor, in accordance with at least one embodiment;
FIGS. 24A and 24B illustrate a language processing unit, in accordance with at least one embodiment;
FIG. 25 illustrates a software stack of a programming platform, in accordance with at least one embodiment;
FIG. 26 illustrates software that is supported by a programming platform, in accordance with at least one embodiment;
FIG. 27 illustrates compiling code to execute on programming platforms of FIG. 26, in accordance with at least one embodiment;
FIG. 28 illustrates an example of an autonomous vehicle and its system architecture, in accordance with at least one embodiment;
FIG. 29A illustrates inference and/or training logic, in accordance with at least one embodiment;
FIG. 29B illustrates inference and/or training logic, in accordance with at least one embodiment; and
FIG. 29C illustrates training and deployment of a neural network, in accordance with at least one embodiment.

### DETAILED DESCRIPTION

In the following description, numerous specific details are set forth to provide a more thorough understanding of at least one embodiment. However, it will be apparent to one skilled in the art that the inventive concepts may be practiced without one or more of these specific details.

Tile-based programming simplifies the task of writing program code to perform computational tasks on hardware accelerators, such as Graphics Processing Units (GPUs), by providing high-level interfaces for writing GPU kernel program code. In tile-based programming, a data set is divided into tiles. The tiles may be n-dimensional tensors. For example, a tile can be a scalar, 2-dimensional matrix, or a higher-dimensional object. Using tile-based programming constructs, a data set can be divided into multiple smaller tiles, each of which has data elements corresponding to a portion of the data set.

A tile program calls tile APIs to perform tile operations, such as matrix multiplication, on the tiles. Tile programs can include instructions that operate on tiles, e.g., by calling tile operations to load tiles from global memory into registers, multiply tiles, and store the results in global memory. The tile program may specify a tile size appropriate for the particular GPU hardware on which the program is to run, but need not specify how individual threads are to operate on individual tile elements. Instead, the tile program calls tile operations as if the tile program is to be executed by a single logical thread. The tile program may, however, specify the number of threads to be used to execute tile operations, without specifically indicating the instructions to be performed by each thread, or the data on which each thread is to operate. Instead, the tile program compiler automatically generates program code to map threads to individual elements of the tiles and execute the tile operations using multiple threads. The compiler determines how to best utilize available accelerator hardware to process the individual elements of the tiles, using the multiple threads. For example, the compiler may determine which lanes, warps, and cooperative thread array(s) (CTAs) to use for the threads.

Tile-based programs can be simpler and shorter than programs that use lower-level APIs and programming languages for writing GPU kernels, such as C++. In tile-based programming, developers write high-level code using tiles (e.g., submatrices of data sets) instead of managing low-level threads directly. However, in tile-based programs, a compiler automatically determines details of computations such as how to divide large tiles into smaller units of data to be loaded into GPU memory for efficient processing by GPU instructions. The size of data units, such as tiles or portions of tiles, to be processed by GPU instructions is referred to as the granularity of the instructions. The compiler can also perform instruction scheduling of the GPU instructions generated by the compiler. Instruction scheduling on a GPU involves determining an order in which low-level memory and compute instructions are to be executed across hardware threads to improve parallel throughput while respecting the ordering of instructions as needed for correct program behavior.

Using larger instruction granularities can increase throughput because larger batches of data can be processed, but instructions that process larger batches of data are more difficult to schedule efficiently because they use GPU hardware units for longer periods of time, thereby preventing other instructions from being executed and allowing other GPU hardware units to be underutilized. Accordingly, the efficiency of a tile program can be improved by generating instruction schedules in which instructions can be executed in parallel on multiple different hardware units of a GPU, for example.

A compiler and/or runtime system for a tile-based language or API can improve efficiency of tile programs by optimizing (i.e., tuning or otherwise adjusting) the tile programs using information in the tile program source code. For example, the compiler can determine how to divide tiles into smaller data units, and determine how to schedule accelerator instructions using information available in the tile program source code. However, tile-based languages or APIs often abstract low-level details of computation, such as thread management, memory access patterns and their use of memory hierarchies, and synchronization. As a result, the amount of granular information or instructions usable by the compiler and/or runtime may be reduced in tile-based languages or APIs compared to lower-level languages or APIs. Using this abstraction implies that low-level details, such as efficient memory access patterns, or instructions to efficiently perform operations related to such low-level details, are not directly provided to the compiler through the tile program's source code. As a result, tile programs rely on the compiler to perform optimizations to handle low-level details. If the tile program does not provide sufficient information to the compiler, the compiler may be unable to optimize the tile program to the same extent that a programmer can optimize an equivalent program for the same task written in a lower-level language, in which low-level details are handled by program source code. Consequently, the accelerator instructions generated by the compiler for the tile program may consume more computing resources (e.g., processor time and/or memory) than equivalent programs written in lower-level languages or APIs for the same tasks.

A tile program compiler can reduce the resource usage of tile programs that perform tile operations on tiles by splitting the tiles into smaller sub-tiles, also referred to herein as atoms, having sizes that can be processed more efficiently than the tiles by an accelerator. A tile operation, such as matrix multiplication, which is to be performed on a tile, is also referred to herein as a tile-level operation. The compiler may determine that partitioning the tile into a number of smaller sub-tiles and performing a portion of the tile operation multiple times on the smaller sub-tiles to process the entire tile would be more efficient than performing the single tile-level operation on the entire tile. The portion of the tile operation to be performed on an atom is referred to herein as an "atom-level operation" ("atom operation"). The tile may be divided into N equal-sized atoms, each having a size that corresponds to 1/N of the tile. The compiler determines the atom size using rules or heuristics applied to the accelerator's hardware characteristics. The atom size may be specified as the dimensions of an atom, e.g., a number of rows and columns, or the number of elements in an atom, for example. The compiler determines an atom size that balances the increase in the amount of parallelism attainable by using smaller atoms, which can be processed using more threads, with the decrease in throughput caused by reducing atom size.

The compiler transforms a tile-level operation in the tile program code, such as a matrix multiplication operation on a tile, to a number of atom-level operations on the atoms (e.g., a matrix multiplication operation on each atom). The atom-level operations can be called in a loop in which each loop iteration calls the atom-level operation for a different portion of a tile that has been split into atoms. The compiler then generates a dependency graph in which each node represents an atom operation to be performed on an atom, and schedules the performance of these atom operations in accordance with the graph. Atom operations can be performed in parallel when indicated by the dependency graph. The compiler then translates the atom operations into accelerator instructions. The instructions for a given atom-level operation are performed sequentially as a group, but multiple groups of instructions that operate on multiple corresponding atoms can be performed in parallel when indicated by the dependency graph.

Instruction scheduling involves assigning operations or instructions to accelerator resources (e.g., memory and other functional units) to maximize throughput while still satisfying resource constraints Resource constraints include, e.g., constraints on usage of registers, shared memory, tensor memory, and functional units of an accelerator, such as matrix multiplication accelerators, symmetric multiprocessors, and the like. When a compiler generates accelerator instructions, it may generate an execution schedule for the instructions independently of resource allocation constraints, e.g., without adjusting the schedule to satisfy resource constraints. The compiler may analyze data dependencies between tiles and reorder instructions such that memory accesses and computations do not interfere with each other. The compiler performs resource constraint checking and reduces the tile size as needed so that tile data fits in the available memory. The compiler may also determine whether tile data fits in the available registers, and, if not, moves the data from registers to local memory. However, these remedial actions may affect the performance characteristics of the generated GPU instructions (e.g., latency, throughput, resource utilization, and so on), and adjustments to the schedule may be needed to maintain the schedule's performance characteristics. The adjustments may cause other resource constraint violations, requiring further modifications.

The compiler can ensure that the scheduled instructions satisfy resource constraints of the available hardware, including constraints on usage of particular functional units of the hardware. In particular, the compiler generates a candidate schedule by applying a scheduling algorithm to the dependency graph and determining which accelerator functional units would be used during particular periods of the candidate schedule. The compiler then determines whether the candidate schedule satisfies the resource constraints. If not, the compiler adjusts the dependency graph to require some of the instructions to be performed in serial rather than in parallel, and generates a new schedule based on the adjusted dependency graph. The compiler may repeatedly adjust the dependency graph and generate a new schedule until the result is a schedule that satisfies constraints on both dependencies between operations and the constraints on resource usage.

Although the atom size selected by the compiler can be effective for generating efficient atom instruction schedules, the selected atom size may be larger than the maximum tensor or matrix size that can be processed by an accelerator instruction. Accordingly, the compiler may divide the atoms into finer-grained atoms, each of which is small enough to be processed by an accelerator instruction. The schedule can be generated using the coarser-grained atoms, and the accelerator instructions, which use the finer-grained atoms, can be executed in an order corresponding to the order of coarse-grained atom-level instructions. For example, the instructions for a given coarse-grained atom operation, which may include instructions for multiple fine-grained atoms, may be performed sequentially as a group, but multiple groups of instructions that operate on multiple corresponding coarse-grained atoms can be performed in parallel when indicated by the dependency graph.

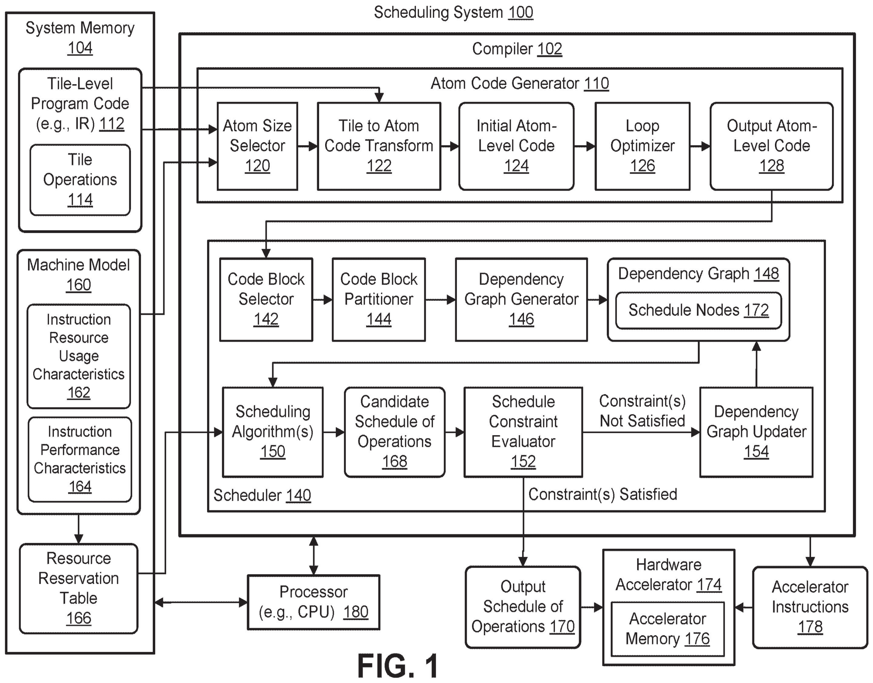

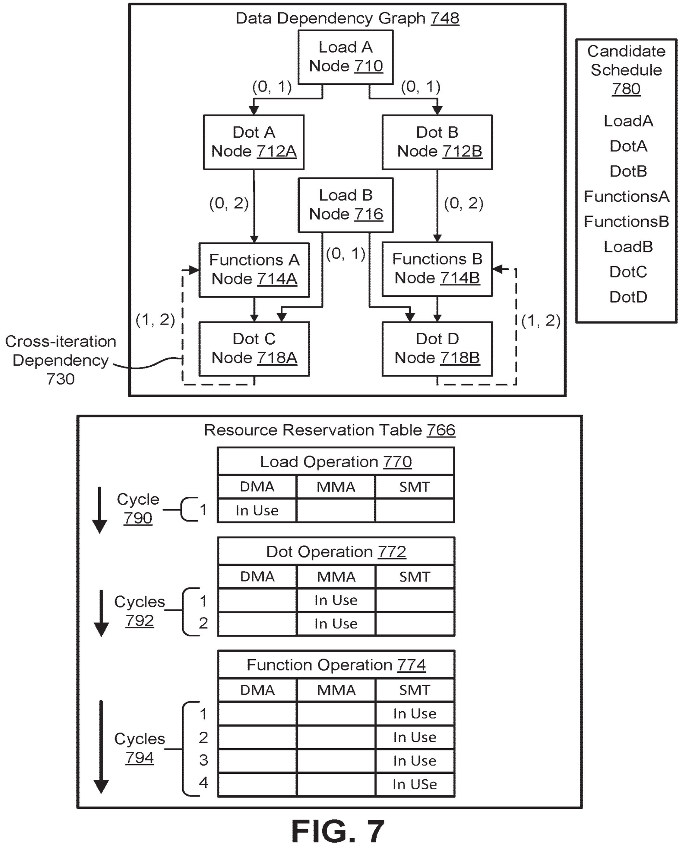

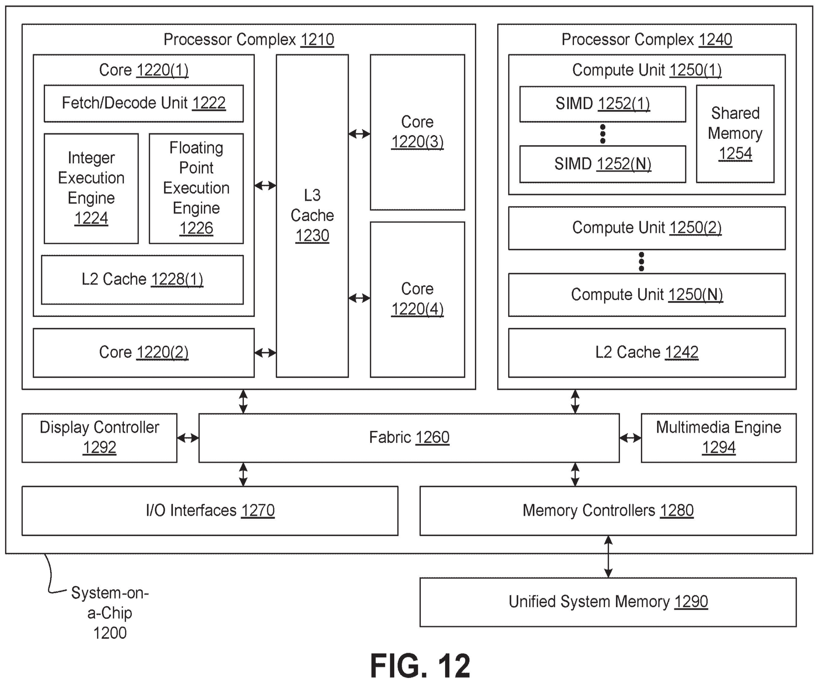

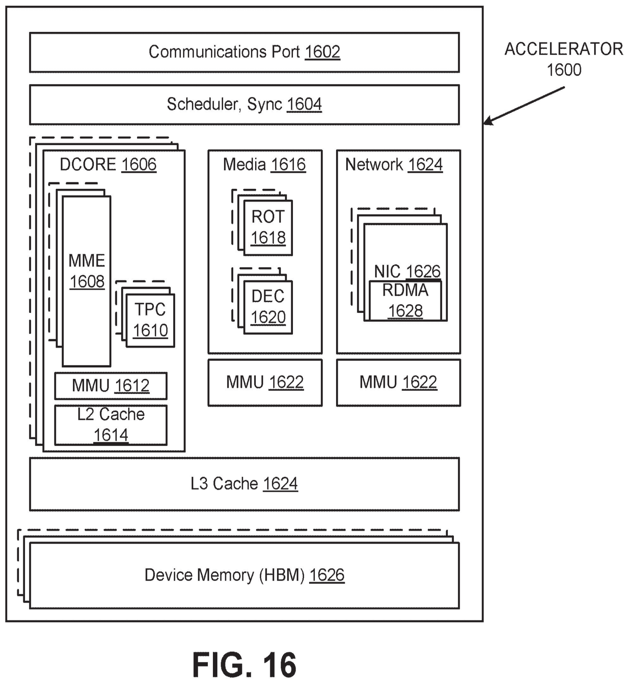

FIG. 1 illustrates a block diagram of an example scheduling system 100, in accordance with at least one embodiment. The scheduling system 100 may be a computer system or other processing device that includes one or more processors 180 and a system memory 104 in which data and program code to be executed by the processor(s) are stored. In at least one embodiment, the processors 180 include one or more Central Processing Units (CPUs). The processors 180 can store and retrieve data to and from the system memory 104. In at least one embodiment, the processor(s) include one or more parallel processing units, which can be hardware accelerators 174 such as Graphics Processing Units (GPUs) or the like. Accelerator 174 includes accelerator memory 176. The memory 176 can be global memory or other memory accessible by the processor 180 and the hardware accelerator 174. The accelerator memory 176 can be shared memory, tensor memory, registers, on-chip memory, or other memory in which data to be processed by the hardware accelerator 174 is stored. The hardware accelerator 174 may load data from the system memory 104 into the accelerator memory 176, and may store data from the accelerator memory 176 to the system memory 104 via appropriate memory interfaces of the scheduling system 100, such as a memory bus, interconnect, switching fabric, or the like. In at least one embodiment, the scheduling system 100 includes one or more computing devices such as servers. The scheduling system 100 may include and/or may be implemented using computing unit 1106 of FIG. 7, for example. The processor 180 may be processor complex 1210 of FIG. 12, for example. The system memory 104 may be unified system memory 1290, for example. The hardware accelerator 174 may be processor complex 1240 and/or AI accelerator 1600 of FIG. 16, for example. The accelerator memory 176 may be shared memory 1254, for example.

A machine model 160 stored in the system memory 104 includes data that describes characteristics of the processor(s). In at least one embodiment, the machine model 160 describes characteristics of instructions of a processor instruction set. The machine model 160 includes instruction resource usage characteristics 162 and/or instruction performance characteristics 164. The instruction resource usage characteristics 162 indicate which functional unit(s) are used by particular processor instructions and/or operations to be executed on or translated to instructions of a processor. The instruction performance characteristics 164 indicate how many resources, e.g., clock cycles, are used by particular processor instructions.

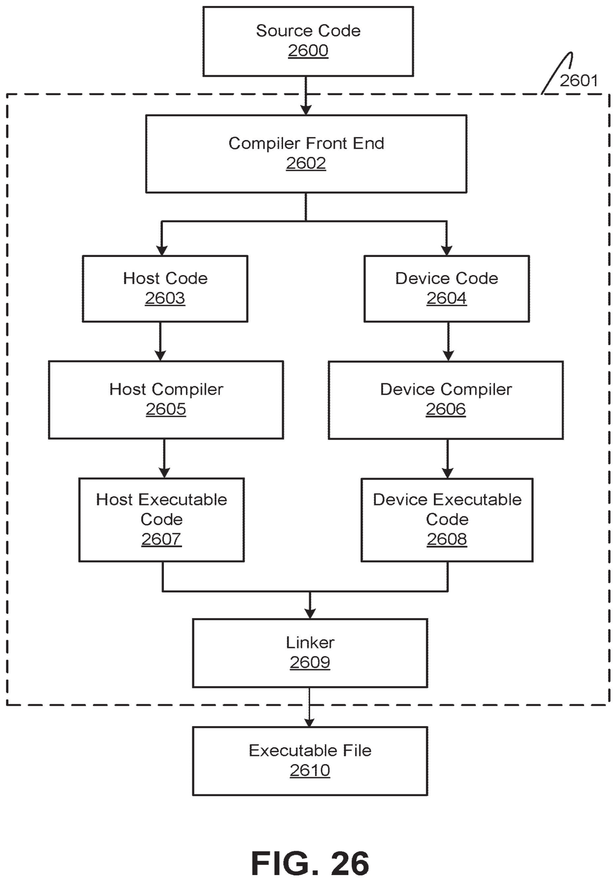

Tile-level program code 112 stored in the system memory 104 includes one or more tile operations 114. The tile-level program code 112 is a representation of a tile program, e.g., an intermediate representation ("IR") in which tile program operations are encoded. The tile-level program code 112 can be generated from tile program source code or other format representing a tile program by compiler 102 or other component of scheduling system 100. The tile program source code can be in a programming language such as PYTHON, C++, a tile programming language, or the like. In at least one embodiment, the tile-level program code 112 includes a sequence of tile operations. A tile may be an array or matrix, a portion of an array or matrix, or a scalar, for example. A tile can include a data set that is partitioned (e.g., tensors with multiple dimensions), a data set indexed by any number of indices (e.g., 1, 2, 3, 4, etc.), or data divided in any other way. A tile can include data divided into multiple sets, some or all of which may overlap. A tile has associated dimensions, e.g., x and y dimensions for a 2-dimensional tile, or m, n, and k dimensions for a 3-dimensional tile. Each tile may be stored in accelerator memory 176 system memory 104, or other memory of scheduling system 100. The accelerator memory 176 and/or system memory 104 can include any suitable memory, e.g., registers, shared memory, tensor memory, on-chip memory, and so on. In at least one embodiment, the system memory 104 is on-chip memory of the processor. Tile operations 114 in tile-level program code 112 perform operations such as loading data from memory into tiles, storing memory from tiles to memory, and computations on tiles, such as dot products, matrix multiplication, and so on. Compiler 102 translates the tile-level program code 112 to accelerator instructions 178, which may be executed by accelerator 174 to perform the operations specified by tile-level program code 112, including the tile operations 114. Compiler 102 may correspond to compiler 260 of FIG. 26, for example.

A tile program may be represented as tile program source code, which specifies tile operations, including tile memory access operations such as tile load operations and tile store operations. The tile operations may also include computation operations (e.g., matrix multiplication, dot products, convolution, and so on). A tile load operation loads a tile from system memory 104 into accelerator memory 176. A tile store operation stores data from a tile in accelerator memory 176 to system memory 104. An example tile program that calls a tile load operation, a compute function to process a tile, and a tile store operation is as follows: $b = tile_load \left(a, shape=\left(M, N\right)\right)$ $c = compute \left(b\right)$ tile_store (a, c)

The "tile_load" operation loads an input tile of shape MxN from a data set (e.g., a matrix) in system memory 104 and stores the input tile in accelerator memory 176, e.g., for subsequent processing. The data set to be loaded is at a memory address specified by the variable "a" (e.g., in system memory 104). The tile_load operation returns a memory address of the loaded input tile (e.g., in accelerator memory 176). The memory address returned by the tile_load operation is stored in a variable "b". The input tile may be a portion of the data set, for example. The "compute" operation performs a computation on the input tile, e.g., a mathematical transformation, and returns a variable "c" containing a memory address of a tile computed by the "compute" operation. The computed tile is in accelerator memory 176, for example. The "tile_store" operation stores the computed tile at the same memory address "a" in memory 104 from which the tile_load operation loaded the initial tile.

Compiler 102 translates tile program source code to an intermediate representation (IR) such as tile-level program code 112. The tile-level program code 112 includes a sequence of tile IR operations. The tile-level program code 112 may represent the same sequence of operations as the tile program source code, but in an IR format that can be more efficiently processed than tile program source code by compiler 102. Example tile-level program code 112 representing the example program described herein is as follows: $% rb = load % ra ;$ $% rc = compute \left(%rb\right) ;$ store %ra, %rc;

A simpler form of the same tile-level program code 112 is used in examples herein as follows:
Load tile $result_tile = compute \left(tile\right)$
store result_tile

The "tile_load" operation called in the tile program source code is translated (e.g., by compiler 102) to a "%rb = load %ra" tile IR operation, which loads a tile from a memory address (e.g., %ra) in memory 104 to a memory address (e.g., %rb) in accelerator memory 176. The "compute" operation called in the tile program source code is translated to a "compute" tile IR operation (e.g. a call to a function named "compute" with the loaded tile %rb as a parameter), which stores the result of the computation in accelerator memory 176 at a location %rc or result_tile. The "tile_store" operation called in the tile program source code is translated to a "store" tile IR operation to store the result of the compute operation (e.g., %rc or result_tile) in memory 104.

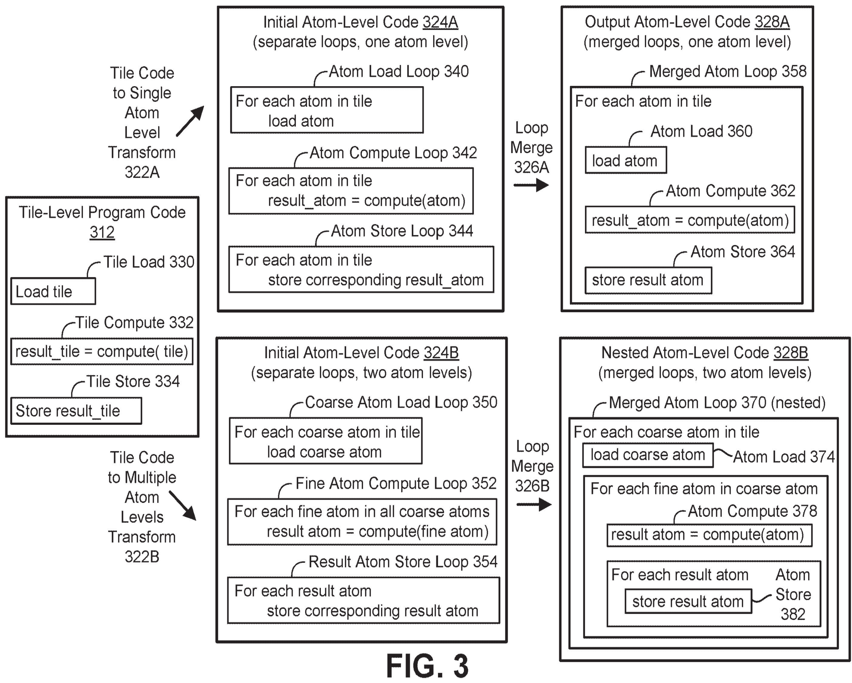

The compiler 102 includes an atom code generator 110 that determines an appropriate atom size for the hardware accelerator 174 and generates output atom-level code 128 from the tile-level program code 112. More specifically, the atom code generator 110 includes an atom size selector 120, a tile to atom code transform 122, and a loop optimizer 126. The atom size selector 120 determines an atom size, which corresponds to the number of atoms per tile to be used by initial atom-level code 124. The tile to atom code transform 122 translates the tile-level program code 112 to initial atom-level code 124, which uses the atom size to split tiles into atoms and perform operations on the atoms. More specifically, the tile to atom code transform 122 translates tile-level operations in the tile-level program code 112 to atom-level operations in the initial atom-level code 124 using the atom size determined by the atom size selector 120. Each call to a tile-level operation, such as a tile load operation, is translated to program code to perform multiple calls to the operation to process the atoms. For example, FIG. 3 shows a tile load operation 330 of tile-level program code 312 translated to an atom load loop 340 of initial atom-level code 324A. The operation called on the atoms (e.g., "load atom" in atom load loop 340) is referred to as an atom-level operation. The atom-level operation may be the same as the tile-level operation (e.g., "load tile" in tile-level program code 312), except for the smaller size of data processed by the atom-level operation. Accordingly, an atom-level operation may be a tile-level operation that is performed on an atom.

The tile to atom code transform 122 translates each tile-level operation, which is to be performed on a tile, to multiple atom-level operations, which are to be performed on the atoms that are portions of the tile. The compiler 102 may translate a tile-level operation to a loop that calls the atom-level operation multiple times with different parameters. The loop is to perform an iteration that calls the atom-level operation for each atom. Alternatively or additionally, the compiler 102 may translate the tile-level operation to a sequence of multiple atom-level operations instead of using a loop. The compiler 102 may generate the sequence of multiple atom-level operations if, e.g., the number of atoms is small. For example, if there are two atoms per tile, then the compiler 102 may generate two calls to the atom-level operation, one for each atom, instead of generating a loop that calls the atom-level operation for each atom. The multiple calls may be more efficient than the loop if the number of atoms per tile is below a threshold, e.g., 2 or 4 atoms per tile. The compiler 102 may generate the loop and subsequently unroll the loop to form the multiple calls if the number of atoms per tile is below the threshold.

If the tile to atom code transform 122 generates initial atom-level code 124 that uses loops to call the atom-level operations, then the initial atom-level code 124 is likely to contain multiple loops, each corresponding to a tile-level operation. For example, if the tile-level program code 112 calls a tile load operation, a compute operation, and a tile store operation, then the initial atom-level code 124 includes a separate loop for each of those operations to perform the operations on atoms. The separate loops are likely to be performed for the same number of iterations because the number of iterations corresponds to the number of atoms per tile. It would be more efficient to merge the separate loops into a single loop, e.g., so that separate loop counters or variables need not be used for each separate loop. Accordingly, the atom code generator 110 performs a loop optimizer 126 to merge the separate loops into a single loop. The loop optimizer 126 generates output atom-level code 128 in which loops in the initial atom-level code 124 may have been merged together. Such merged loops may be formed by merging two or more loops having the same looping conditions (e.g., the same number of iterations).

Thus, if the tile to atom code transform 122 generates initial atom-level code 124 that uses loops, then the atom code generator 110 uses the loop optimizer 126 to merge separate loops together where possible, and provides the resulting output atom-level code 128 as input to the scheduler 140. Alternatively or additionally, if the tile to atom code transform 122 generates initial atom-level code 124 that calls the atom-level operations without using loops, e.g., by unrolling loops of initial atom-level code 124, then the atom code generator 110 provides the initial atom-level code 124 having unrolled loops to the scheduler 140 (without performing loop optimizer 126).

An atom includes a subset of the elements of a tile. An atom has one or more dimensions, and one or more elements in each dimension. The elements are data values, e.g., integer, decimal, floating-point, alphanumeric, or other suitable type(s) of data values. For example, a 2-dimensional atom has x and y dimensions, or a 3-dimensional atom has m, n, and k dimensions. A 2-dimensional atom having 128 elements in the x dimension and 64 elements in the y dimension is referred to as a 128x64 atom, for example. The dimensions of an atom are also referred to as a size the atom. The dimensions of an atom operation, e.g., a matrix multiply accumulate (mma) operation, are referred to as a shape of the atom operation. In at least one embodiment, an atom is a portion of a tile. For example, a tile is divided into multiple atoms. In at least one embodiment, the term "atom" herein refers to unit of data to be scheduled by the scheduler 140. In at least one embodiment, an atom is a minimum-size unit to be included in a schedule by the scheduler 140. An atom can include a data set that is partitioned (e.g., tensors with multiple dimensions), a data set indexed by any number of indices (e.g., 1, 2, 3, 4, etc.), or data divided in any other way. An atom can include data divided into multiple sets, some or all of which may overlap.

The output atom-level code 128 can be translated, by compiler 102, or other component of scheduling system 100, to lower-level instructions, which are referred to as accelerator instructions 178. The accelerator instructions 178 may be instructions of an instruction set of accelerator 174, for example. The accelerator instructions 178 can be e.g., PTX instructions, SASS instructions, which can be translated to still lower-level hardware instructions to be executed by an accelerator 174 or other processor.

As an example, an MMA operation is a mathematical operation that, if performed by processor 180, computes a value *D*: $D = AB + D$ where *A*, *B*, and *D* are matrices, submatrices, submatrix fragments, or tiles, or sets of numeric values. *A* and *B* are input matrices, *D* on the right-hand side is an optional input matrix which, if specified is an accumulator matrix, and *D* on the left-hand side is an output matrix in which the result of the MMA operation is stored. *AB* is the product of matrix *A* and matrix *B. A* is of size *M* × *K* (*M* rows by *K* columns), *B* is of size *K* × *N* (*K* rows by *N* columns), and *D* is of size *M* × *N* (*M* rows by *N* columns). An MMA operation having these dimensions has an MMA shape of *M* × *N* × *K*, also referred to herein as MMA shape *mMnNkK*, where *M, N,* and *K* are integer values indicating the dimensions of the input matrices A and B and also of the result matrix D.

For example, a tile-level MMA instruction having an MMA shape of MxNxK = 256x256x64 can be translated by the compiler 102 to four atom-level MMA instructions, each having an MMA shape of 128x128x64. The tile-level MMA instruction has an input tile of size 256x64 for matrix A, an input tile of size 64x256 for matrix B, and an output tile of size 256x256 for matrix D. Each atom-level MMA instruction has an input atom of size 128x64 for matrix A, an input atom of size 128x64 for matrix B, and an output atom of size 128x128 for matrix D. The atom-level input matrices A and B are each represented by four atoms per tile. The atom-level output matrix D is represented by one atom per tile.

Further, the compiler 102 can translate each atom-level MMA instruction to finer-grained accelerator instructions 178, such as an accelerator-level MMA instruction to be executed by hardware accelerator 174. Each accelerator-level MMA instruction has an MMA shape of, e.g., MxNxK = 128x128x16. The example accelerator-level MMA instruction has an input tile of size MxK=128x16 for matrix A, an input tile of size KxN=16x128 for matrix B, and an output tile of size MxN=128x128 for matrix D. The accelerator-level input matrices A and B are each represented by four accelerator-level matrices per atom. The accelerator-level output matrix D is represented by one accelerator-level matrix per atom. Although particular shapes and sizes of atoms and tiles are described in examples herein, atoms and tiles can have any suitable shapes in other examples.

As an example, atom code generator 110 may convert each tile operation 114 of tile-level program code 112 to multiple atom-level operations of the atom code 128. The atom operations, upon being executed, are to compute the same results as the tile operations 114, but do so using multiple operations, each of which processes an atom that corresponds to a portion of the tile. The multiple atom operations can be performed by multiple corresponding threads. In at least one embodiment, the two or more atom operations can be scheduled to be performed separately, e.g., in parallel at overlapping times if input data is available, or at different times. Scheduler 140 may generate an output schedule of operations 170 that specifies an order and/or cycle or other timing information for execution of atom code 128.

The atom code 128 includes one or more atom code blocks. Each such code block includes one or more atom-level operations converted from one or more tile-level operations. For example, a code block can correspond to a loop, including the operations to be performed by the loop. As another example, a code block can include the operations to be performed by the loop. If the loop is a nested loop, each nesting level of the nested loop can correspond to a different code block. In at least one embodiment, atom code 128 includes operations to be performed in parallel. For example, output atom-level code 128 can include two or more code blocks that do not have a data dependency relation (e.g., two code blocks that have different input data). The code blocks that do not have data dependency can be performed in in parallel.

An atom size can be represented similarly to a tile size. For example, an atom of size 64x64 has 4096 elements, which is one-fourth of the size of the 128x128 tile. An atom operation operates on an atom of a particular size. The atom size can be an input parameter to the atom operation. Since the atom operation processes an atom of one-fourth the size of the tile, the atom operation is called four times to process the same amount of data as a single call to the tile operation. The tile to atom code transform 122 can transform a tile operation 114 to one or more atom operations in the atom code 128. An atom load operation, for example, loads an atom of a specified size from global memory into shared memory. The atom load operation can be called four times to load four 64x64 atoms. In contrast, a tile load operation can be called one time to load a 128x128 tile. Accordingly, the tile to atom code transform 122 can generate four calls to the atom load operation, e.g., a sequence of four calls using appropriate parameters, or a loop that performs four iterations, each of which calls the atom load operation once using appropriate parameters.

In another example, an atom can have any selected size, such as 128x128 (e.g., if the atom is a portion of a 256x256 tile). If the atom size is 128x128, then a call to the atom load operation can load a 128x128 atom. The particular atom size is selected by the atom size selector 120 using the tile size of a tile operation 114 and characteristics of an accelerator 174 (e.g., GPU) or other processor on which the atom code 128 is to be executed. For example, the atom size selector 120 selects an atom size to maximize one or more performance metrics for the atom code 128, such as execution speed, memory efficiency, and so on.

In at least one embodiment, the atom size selector 120 selects an atom size that is smaller than a corresponding tile size specified in an input tile operation 114. The atom size selector 120 selects the atom size by applying one or more rules or heuristics to processor characteristics specified by machine model 160. The processor characteristics include instruction resource usage characteristics 162, such as indications of which functional units are used by each instruction (e.g., ALU (arithmetic logic unit), SMT (simultaneous multithreading), DMA (direct memory access), MMA units, and the like).

The atom size selector 120 may select an atom size to maximize the amount of parallelism that is possible in the atom code 128, so that pipelining and/or other optimizations can be applied to the atom code 128 to maximize throughput while satisfying the hardware constraints specified by the machine model 160. The data size granularity of the operation being selected may conflict with the amount of resources (e.g., memory and/or execution units) available for scheduling. Operations with larger data size granularity can increase execution throughput. For example, if the operations are executed by very high granularity instructions that operate on large amounts of data, then scheduling operations to improve performance is more difficult. To resolve this tradeoff, rule-based heuristics are used to reduce the size of the tiles to smaller atoms by slicing the tile data prior to scheduling. A heuristic can determine an atom size by evaluating the expected throughput of different shapes or sizes of the instruction, for example.

The tile to atom code transform 122 transforms each tile operation 114 in tile-level program code 112 to one or more atom operations that use the selected atom size, and adds the atom operations to the initial atom-level code 124. The tile to atom code transform 122 identifies the atom operation that corresponds to the tile operation. For example, if the tile operation is a "load tile" operation, then the atom operation is a "load atom" operation. If the selected atom size is smaller than the tile size, then the initial atom-level code 124 determines the number "N" of atoms in the tile and generates N calls to the identified atom operation. The N calls can be a sequence of N calls to the atom operation, or can be a loop that repeats a call to the atom operation N times. The tile to atom code transform 122 generates the appropriate parameters for the calls to the atom operations so that each atom operation processes a corresponding portion of the data.

For example, if a tile is split into N atoms, then a tile operation to be performed on the tile is translated into N atom-level operations. The N atom-level operations may be performed using a loop that includes an instruction to call the atom-level operation with different parameters in each loop iteration to operate on a different atom. Alternatively or additionally, the N atom-level operations may be performed using N separate instructions, each to call the atom-level operation different parameters to operate on a different atom. The N different calls can be generated by the tile to atom code transform 122 instead of a loop, or by generating a loop and then unrolling the loop.

In at least one embodiment, the atom code generator 110 includes a loop optimizer 126 that transforms one or more separate loops in the initial atom-level code 124 to a single "merged" loop, and outputs the merged loop in atom code 128. The nested loop can be a block of code in the atom code 128. For example, with reference to FIG. 3, the loop optimizer 126 converts a sequence of for loops shown in initial atom-level code 324A to a single nested for loop as shown in output atom-level code 328A. As another example, if the atom size is larger than the size of a data block that an individual call to an accelerator instruction can process, the loop optimizer 126 converts the sequence of for loops shown in initial atom-level code 324B to a nested for loop as shown in nested atom-level code 328B. In the nested atom-level code 328B example, an outer for loop performs an iteration for each of the atoms that are larger than the maximum size of an input data tensor of the GPU instruction that performs a "compute" operation The larger atoms are referred to herein as "coarse" atoms. Each outer loop iteration loads a coarse atom, and performs a nested loop that divides the coarse atom into smaller "fine atoms" having a size (e.g., tensor dimensions) that can be processed by the compute operation.

The output atom-level code 128 may include atom-level instructions that perform atom-level operations instead of or in addition to tile operations 114 that perform tile-level operations. In at least one embodiment, the tile-level program code 112 also includes operations that do not operate on tiles. The compiler 102 may copy, or translate as appropriate, these operations to equivalent operations to be included in the atom code 128.

The compiler 102 translates the output atom-level code 128 to accelerator instructions 178 to be executed by the accelerator 174. The compiler uses a scheduler 140 to generate an output schedule of operations 170 for the accelerator 174 to use as a schedule for executing the accelerator instructions 178. The output schedule of operations 170 may be an ordered list or sequence of operations and/or instructions to be performed by accelerator 174. The operations and/or instructions indicated by the output schedule of operations 170 can be sent to the accelerator 174 in the memory 104. The output schedule of operations 170 conforms to constraints specified by the machine model 160, such as the number of cycles needed to execute particular instructions, delays needed between particular instructions, and the like. The output schedule of operations 170 can indicate an order in which the operations specified by output atom-level code 128 are to be executed, and/or clock cycles at which individual operations of output atom-level code 128 are to be executed by accelerator 174. Alternatively or additionally, the output schedule of operations 170 can indicate an order in which accelerator instructions 178 generated from output atom-level code 128 are to be executed. The accelerator instructions 178 may include groups of instructions that perform atom-level operations of output atom-level code 128. For example, each group of instructions may perform an atom-level operation. The output schedule of operations 170 may indicate an order in which the groups are to be performed by the accelerator 174. The instructions within each group may be performed in sequential order.

The candidate schedule of operations 168 indicates an order in which operations, such as operations of an intermediate representation (IR) and/or instructions of a processor instruction set, are to be executed by the accelerator 174. In at least one embodiment, the candidate schedule of operations 168 provides optimized or otherwise improved performance (e.g., execution time, resource utilization, and/or throughput) of operations that correspond to the tile-level program code 112. The operations in the candidate schedule may include parallel operations, e.g., operations that can be performed simultaneously by two or more processing units.

The scheduler 140 receives the output atom-level code 128 from the atom code generator 110 and generates a candidate schedule of operations 168 for the output atom-level code 128 using the machine model 160. The scheduler 140 includes a code block selector 142, which selects candidate code blocks from the output atom-level code 128. The candidate code blocks include one or more code blocks that are to be scheduled. In at least one embodiment, the candidate code blocks are one or more code blocks that are to be scheduled by the scheduler 140 prior to scheduling other blocks of the atom code 128. The code block selector 142 determines a priority value for each of the candidate code blocks and selects one or more of the candidate code blocks in order of priority. In at least one embodiment, the priority value is determined using a rule-based priority heuristic. As an example, the code block selector 142 sorts the candidate code blocks in order of decreasing priority, and selects the code blocks in the sorted order. In at least one embodiment, the priority heuristic determines a priority value for a code block that is proportional to an increase in performance that is expected it occur if the operations in the code block are scheduled using scheduling algorithms such as list scheduling, modulo scheduling, or the like. In at least one embodiment, the priority heuristic determines a priority value using the number of operations in a code block, the types of operations in a code block (e.g., whether an operation is a matrix operation, load operation, store operation, and so on), and/or using a size and/or number of atoms to be processed by an operation called by a code block.

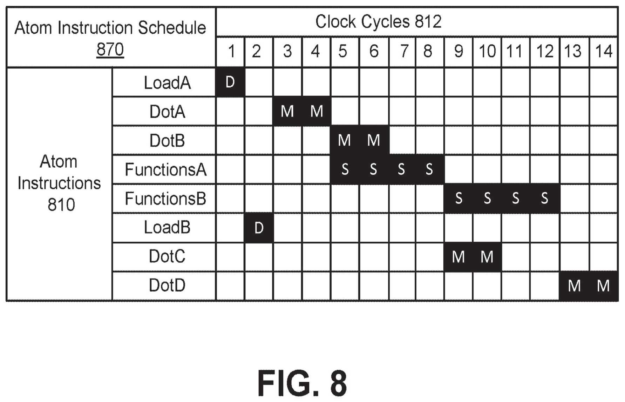

The code block partitioner 144 receives the selected code blocks from the code block selector 142 and partitions each selected code block into atom operations to be scheduled. The atom operations to be scheduled are used to generate corresponding schedule nodes 172 for a dependency graph 148, such as the dependency graph shown in FIG. 8. The schedule nodes are to be used by the dependency graph generator 146 to generate the dependency graph 148. For example, the code block partitioner 144 generates a separate schedule node for each load operation in a code block. Each schedule node is thus associated with an operation. For example, each schedule node generated from a corresponding load operation is associated with the corresponding load operation. The associated operations of the schedule nodes are used by the dependency graph generator 146 to generate the dependency graph 148 as described here.

The dependency graph generator 146 identifies dependencies between the schedule nodes 172 and generates a dependency graph 148 that includes the schedule nodes 172. The dependency graph 148 also includes an edge for each data dependency between nodes. For example, the code block partitioner 144 can generate two nodes: a node representing a load operation and a node representing a dot product operation to be performed on the results of the load operation. The dependency graph generator 146 identifies the data dependency of the dot product node on the load node, and includes an edge between the load node and the dot product node in the dependency graph 148. An example of a dependency graph 148 is shown in FIG. 8.

One or more scheduling algorithm(s) 150 receive the dependency graph from the dependency graph generator 146 and generate a candidate schedule of operations 168 from the dependency graph 148. The scheduler 140 generates and uses a resource reservation table 166. The scheduler 140 generates the resource reservation table 166 using information specified by the machine model 160, such as a description of the functional units of the accelerator 174, instruction resource usage characteristics 162, and instruction performance characteristics 164. The resources may include functional units of the accelerator 174, for example. The instruction resource usage characteristics 162 indicate which resources of the processor are used by a particular operation and/or instruction, and the instruction performance characteristics 164 indicate how many clock cycles or other processing time units are used by a particular instruction.

The resource reservation table 166 indicates which resources of a processor are reserved for use by each node of the dependency graph 148 during particular clock cycles. The scheduling algorithm(s) 150 use the resource reservation table 166 to keep track of which processor resources are in use at particular clock cycles by which atom operations, and does not schedule two operations in the same clock cycle if the two operations use the same resource. The scheduler 140 creates a resource reservation table 166 (or a portion of a resource reservation table 166) for each schedule node in a code block (or in a dependency graph 148). The resource reservation table 166 includes a row for each clock cycle to be used by an operation (or instruction) of the schedule node, and a column for each execution unit to be used by the operation (or instruction) of the schedule node. The execution units may include, for example, a direct-memory access (DMA) unit, a matrix multiply accumulate (MMA) unit, a tensor core, or the like. If an operation (or instruction) is to use a particular execution unit during a particular clock cycle according to the machine model 160, then an entry is made in the resource reservation table 166 at the corresponding column and row to indicate that the clock cycle and execution unit are reserved and not available for use by other instructions. An example of a resource reservation table 166 is shown in FIG. 8.

The scheduling algorithm(s) 150 generate a schedule of operations 168 from the dependency graph 148 and the resource reservation table 166. In at least one embodiment, the scheduling algorithm(s) 150 include list scheduling, modulo scheduling, and/or other suitable scheduling techniques. In at least one embodiment, if a code block is or includes a loop, the scheduling algorithm(s) 150 include a modulo scheduling algorithm that the scheduler 140 uses to generate the candidate schedule of operations 168. In at least one embodiment, if a code block is not or does not include a loop, the scheduling algorithm(s) 150 include a list scheduling algorithm that the scheduler 140 uses to generate the candidate schedule of operations 168. In at least one embodiment, the scheduler 140 uses pipelining techniques to associate each operation in the schedule of operations with an execution unit and/or to re-order the operations in the schedule to fit the execution units of a processor pipeline specified by the machine model 160.

A schedule constraint evaluator 152 determines whether a candidate schedule of operations 168 generated by the scheduling algorithm(s) 150 satisfies one or more resource constraints. The resource usage constraints may be specified by the machine model 160 (e.g., constraints on usage of registers, shared memory, and tensor memory). The resource constraints can include a memory usage constraint, a processor usage constraint, or other suitable constraints. For example, the memory usage constraint can be a threshold amount or percentage of memory, and if a candidate schedule of operations 168 uses more than the threshold amount or percentage of memory, then the schedule constraint evaluator 152 determines that the candidate schedule does not satisfy the resource constraints. In at least one embodiment, the schedule constraint evaluator 152 performs a liveness analysis on the candidate schedule of operations 168, and the liveness analysis outputs an amount of memory used by the candidate schedule. In at least one embodiment, the resource constraints include a register usage constraint, a shared memory usage constraint, and a tensor memory usage constraint.

The schedule constraint evaluator 152 determines whether a candidate schedule of operations 168 satisfies the resource constraints. The candidate schedule of operations 168 does not satisfy the constraint(s) if, for example, the candidate schedule of operations 168 uses more registers than permitted by the register usage constraint, uses more shared memory than permitted by the shared memory constraint, and/or uses more tensor memory than permitted by the tensor memory usage constraint. If the candidate schedule of operations 168 satisfies the resource constraints, then the scheduler 140 outputs the candidate schedule of operations 168 as an output schedule of operations 170.

If the schedule constraint evaluator 152 determines that a candidate schedule of operations 168 does not satisfy the resource constraints, then a dependency graph updater 154 updates the dependency graph 148 to use fewer resources. To update the dependency graph 148 to use fewer resources, the dependency graph updater 154 identifies a selected code block that contains the atom operations to be scheduled. The dependency graph updater 154 marks one or more of the data values (e.g., memory and/or registers) used by a selected code block to be shared in an available memory location having sufficient capacity between two or more operations of the selected code block. The available memory location may be on-chip memory, system memory 104, or other memory having sufficient capacity to store the data values. The marked values are moved from accelerator memory 176, such as a register, shared memory, or tensor memory, to the available memory, which is expected to have slower access time but has greater capacity than the accelerator memory 176.

Moving the marked values to on-chip memory reduces the usage of resources such as registers, shared memory, or tensor memory by the code block to be scheduled. The operations that share the marked values access the same memory location(s) in on-chip memory, so are not executable in parallel. Accordingly, the dependency graph updater 154 adds dependency information to the dependency graph 148 indicating that there is a data dependency between the two operations that share the marked values. For example, the dependency graph updater 154 identifies two nodes that correspond to the two operations that are to share the marked value. The dependency graph updater 154 adds an edge to the dependency graph between the identified nodes to indicate that the operations represented by the nodes are to be performed sequentially (e.g., in different clock cycles), thereby reducing the complexity of the scheduling problem. The scheduling algorithm(s) 150 generate an updated candidate schedule of operations 168 using the updated dependency graph 148 and the resource reservation table 166. The added data dependency prevents the scheduling algorithm(s) 150 from scheduling parallel accesses to the shared values.

The scheduler 140 may repeatedly use the dependency graph updater 154 to mark additional values as shared and update the dependency graph 148 accordingly, then uses the scheduling algorithm(s) 150 to generate an updated candidate schedule of operations 168, and uses the schedule constraint evaluator 152 to evaluate the updated candidate schedule until the schedule constraint evaluator 152 determines that the updated candidate schedule satisfies the schedule constraints, at which point the scheduler 140 outputs the updated candidate schedule as the output schedule of operations 170. The resulting output schedule of operations 170 satisfies the dependency constraints and the resource usage constraints.

The compiler 102 translates the output atom-level code 128 to accelerator instructions 178 to be executed by a hardware accelerator 174 in accordance with the cycle timing specified by the output schedule of operations 170. The accelerator instructions 178 may be PTX instructions or other instructions of an instruction set to be executed by or translated to instructions of hardware accelerator 174, for example. The accelerator instructions 178, when executed by the hardware accelerator 174, perform tile operations as specified by the tile-level program code 112, such as loading data from system memory 104 into accelerator memory 176 to form tiles in the accelerator memory 176, performing computations using the tiles in the accelerator memory 176, and storing results, such as tiles generated by the computations, in system memory 104. The accelerator instructions for a given atom-level operation are to be performed sequentially as a group, but multiple groups of accelerator instructions that operate on different corresponding atoms may be performed in parallel when permitted by the schedule (e.g., when the dependency graph 148 indicates that there are no data dependencies between the groups).

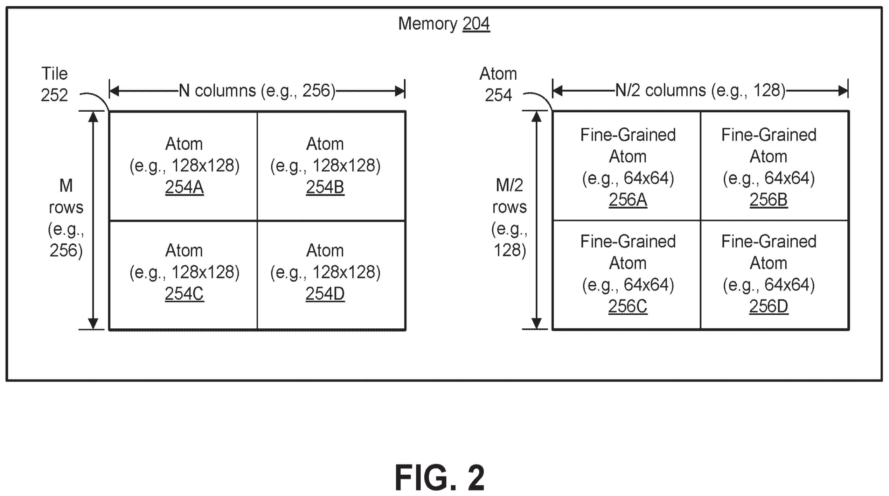

FIG. 2 illustrates an example of a tile 252 being divided into atoms 254, and the atoms 254 being divided into smaller atoms 256, in accordance with at least one embodiment. The term coarse-grained atom is used herein to refer to an atom having more elements than a fine-grained atom. The atom size selector 120 determines a scheduling atom size, which is as input to scheduling algorithm(s) 150 that generate candidate schedule of operations 168. If the scheduling atom size is greater than the maximum input matrix size of an accelerator instruction to be called in a computation, then the atom size selector 120 also determines an instruction atom size. The instruction atom size is to be used as input to the accelerator instruction. The scheduling atom size, being larger than the instruction atom size, is referred to as a coarse-grained atom size. The instruction atom size, being smaller than the scheduling atom size, is referred to as a fine-grained atom size. If the scheduling atom size does not exceed the maximum input matrix size of the accelerator instruction to be used in a computation, then there is no need for a separate instruction atom size, and the same atom size can be used for scheduling and for input to the accelerator instruction, without using separate coarse-grained and fine-grained atom sizes.

A tile 252 represents a block of data having dimensions of M rows by N columns. In the illustrated example, the tile 252 is a two-dimensional array of size 256×256, although other sizes and shapes may be used in other examples. The tile 252 is divided into a plurality of coarse-grained atoms 254A-254D. Accordingly, each coarse-grained atom is a portion of the tile 252. In the example shown, each atom 254A-254D has dimensions 128×128, so four coarse-grained atoms form a tile 252. The tile 252 can also be divided into fine-grained atoms 256A-256D. Each fine-grained atom corresponds to a smaller portion of the tile than a coarse-grained atom. In the illustrated embodiment, each fine-grained atom has dimensions 64×64, so four fine-grained atoms form a coarse-grained atom, and sixteen fine-grained atoms form a tile 252.

Dividing a tile into atoms of different granularities provides flexibility for scheduling and execution. Coarse-grained atoms such as atoms 254A-254D can be used when larger units of computation are to be executed, while fine-grained atoms such as atoms 256A-256D can be used as input to accelerator instructions, e.g., if the coarse-grained atoms are larger than the maximum size of matrices accepted by an accelerator instruction. The coarse-grained atom size can be determined based on characteristics of the processor such as instruction resource usage and performance characteristics. The fine-grained atom size can be determined based on characteristics of the processor such as the maximum matrix size accepted by an accelerator instruction such as a matrix multiplication instruction.

FIG. 3 illustrates example transformations 322 of tile-level program code 312 to initial atom-level code 324 and then to output atom-level code 328, in accordance with at least one embodiment. The tile-level program code 312 includes a sequence of tile operations. In the illustrated embodiment, these include a load operation 330 to load a tile into memory, a compute operation 332 to perform a computation on the loaded tile (such as a dot product or matrix multiply), and a store operation 334 to store the resulting tile to memory. These tile-level operations 330, 332, and 334 are expressed at a tile-level granularity, and therefore operate on all elements of a tile. The tile-level program code 312 could correspond to the tile-level program code 112 and the tile-level operations 330, 332, and 334 could correspond to the tile operations 114 of FIG. 1, for example. The initial atom-level code 324A, 324B could correspond to the initial atom-level code 124, and the output atom-level code 328A, 328B could correspond to the output atom-level code 128 of FIG. 1, for example.

The tile-level program code 312 is transformed by a tile code to atom code transform 322 into initial atom-level code 324. In one embodiment, if the atom size selector 120 determines that the same atom size is to be used for scheduling and for accelerator instruction input, e.g., because the scheduling atom size does not exceed the maximum input size of the accelerator instruction to be used for computations, then a tile code to single-atom-level transform 322A transforms the tile-level program code 312 to initial atom-level code 324A. In the initial atom-level code 324A, each of the tile-level operations 330, 332, 334 of the tile-level program code 312 has been converted to a respective loop 340, 342, 344 that performs a corresponding atom-level operation. Thus, the initial atom-level code 324A includes an atom load loop 340, an atom compute loop 342, and an atom store loop 344. For example, if each tile of tile-level program code 312 is to be divided into N atoms, then the initial atom-level code 324A includes a loop 340, 342, 344 corresponding to each of the tile operations 330, 332, 334 of the tile-level program code 312. Each loop 340, 342, 344 is to perform N iterations. In each iteration, a loop 340, 342, or 344 is to call an atom-level instruction that processes 1/N of the tile. For example, in each of the loops 340, 342, 344, an atom-level operation is called on an atom of size 1/N elements. Since each loop is to perform N iterations, the loop processes the N atoms that correspond to the tile. The loops 340, 342, 344 are referred to as atom-level loops because they call atom-level operations. The atom load loop 340 calls a "load atom" operation for each atom in a tile to load an atom from memory (e.g., from global memory into registers). The atom compute loop 342 calls a "compute atom" operation for each atom in the tile. The "compute atom" operation is, e.g., the same operation called by the tile compute operation 332, but with an atom as an input instead of a tile. The "compute atom" operation generates a result atom using a loaded atom as input. The result atom returned by the computer operation is in registers or other high-speed memory, for example. The atom store loop 344 calls a "store atom" operation for each result atom to store the result atom in memory (e.g., global memory). The tile code to single-atom-level transforms 322A, 322B could correspond to the tile to atom code transform 122, for example.

A loop merge transform 326A transforms the initial atom-level code 324A into output atom-level code 328A. In the output atom-level code 328A, the separate loops 340, 342, 344 of the initial atom-level code 324A are combined into a single "merged" loop 358. The single loop 358 is executed for each atom in the tile. For example, if there are N atoms in a tile, then the merged atom loop 358 performs N iterations, each of which processes 1/Nth of the tile. The merged atom loop 358 includes the load, compute, and store atom-level operations of the initial atom-level code 324A, but called consecutively in each iteration of a single merged loop that performs N iterations, instead of in three separate consecutive loops, each of which performs N iterations in which one of the atom-level operations is called. Thus, the merged atom loop 358 in the output atom-level code 328A includes calls to the same atom operations as initial atom-level code 324A, but in a single loop instead of separate loops. These atom operations in output atom-level code 328A include an atom load operation 360, an atom compute operation 362, and an atom store operation 364. By including the atom load 360, atom compute 362, and atom store operation 364 within the same merged atom loop 358, the output atom-level code 328A provides improved efficiency for scheduling, reduced loop overhead, and enhanced parallelizability (e.g., more efficient to schedule and execute on a parallel processor). The loop merge transforms 326A, 326B could correspond to the loop optimizer 126 of FIG. 1, for example.

In one embodiment, the atom size selector 120 determines that different atom sizes are to be used for scheduling (e.g., a coarse size) and accelerator instruction input (e.g., a fine-grained size). These different sizes can be used because, for example, the scheduling atom size exceeds the maximum input size of the accelerator instruction to be used for computations. When different atom sizes are to be used, a tile code to multiple-atom-levels transform 322B transforms the tile-level program code 312 to initial atom-level code 324B. In the initial atom-level code 324B, the tile load operation 330 of the tile-level program code 312 has been converted to a coarse-grained atom load loop 350 that calls an atom-level load operation for each coarse atom in a tile. Since the coarse atoms are larger than the maximum atom size accepted by the compute operation, the atom size selector 120 determines coarse and fine atom sizes, and the tile code to multiple-atom-levels transform 322B generates a fine atom compute loop 352 that divides the tile of the tile-level program code 312 into fine-grained atoms. The fine atom compute loop 352 can, for example, call a slice operation to select a fine-grained atom from the tile in each iteration of the fine atom compute loop 352. The fine atom compute loop 352 calls a compute operation on each fine atom. Each call to the compute operation returns a result atom of an appropriate size. A result atom store loop 354 stores each of the result atoms in memory 104 (e.g., in global memory).

A loop merge transform 326B transforms the initial atom-level code 324B to nested atom-level code 328B. In the nested atom-level code 328B, the separate loops 350, 352, 354 of the initial atom-level code 324B are combined into a single "merged" loop 370. The single loop 370 has a nested structure in which an outer loop (the merged atom loop 370) is to be executed for each coarse atom in the tile. For example, if there are N coarse atoms in a tile, then the merged atom loop 370 performs N iterations, each of which processes 1/Nth of the tile. The merged atom loop 370 includes the load, compute, and store atom-level operations of the initial atom-level code 324A in a three-level nested loop structure. In the nested loop structure, the outer loop ("for each coarse atom in tile") calls an atom load 374 operation to load the input atoms as coarse-grained atoms. The middle loop ("for each fine atom in coarse atom") divides each loaded coarse-grained atom into fine-grained atoms having sizes that do not exceed the maximum input matrix size of the compute operation and calls the atom compute 378 operation using each fine-grained atom as an input. The compute operation returns a result atom for each fine atom. The inner loop ("for each result atom") calls an atom store operation 382 to store each result operation in memory 104 (e.g., in global memory).

By using the nested loop structure, the merged atom loop 370 performs coarser operations such as the atom load 374 operation, and the middle loop that is performed for each coarse atom, at a granularity that the atom size selector 120 has determined is an efficient scheduling granularity but is too large to be passed as input to the compute accelerator instruction. Accordingly, the nested atom-level code 328B provides improved efficiency for scheduling, reduced loop overhead, and enhanced parallelizability.

Accordingly, FIG. 3 illustrates how tile-level program code 312, including load operation 330, compute operation 332, and store operation 334, may be transformed by the tile to atom code transform 122 to initial atom-level code 324A or 324B, and further transformed by loop optimizer 126 into output atom-level code 328A or 328B. The resulting atom code integrates atom load operations 360, atom compute operations 362, and atom store operations 364 into a nested loop 350 that is more efficient to schedule and execute on a parallel processor.

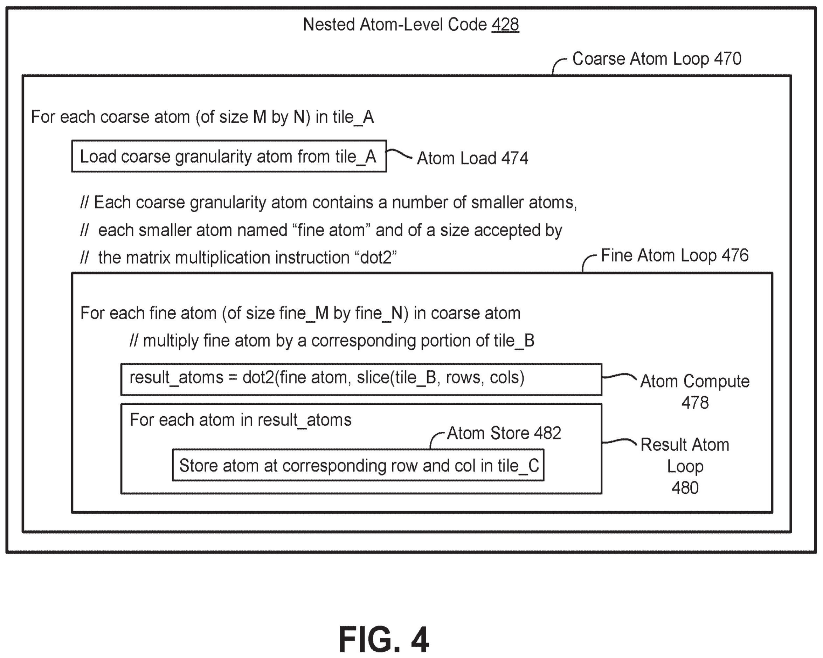

FIG. 4 illustrates an example of nested atom-level code 428, in accordance with at least one embodiment. The nested atom-level code 428 is a more detailed example of the nested atom-level code 328B of FIG.3. The nested atom-level code 428 is the result of transforming initial atom-level code 324B using a loop merge transform 326. The nested atom-level code 428 includes a coarse atom loop 470, which is similar to the atom loop 370. The atom loop 470 performs an iteration for each coarse atom in a tile named "tile_A". Each iteration of the coarse atom loop 470 performs an atom load 474 operation and a fine atom loop 476. The nested atom-level code 428 could correspond to the output atom-level code 128 of FIG 1, for example. The coarse atom loop 470 could correspond to the merged atom loop 370 of FIG. 3, and the fine atom loop 476 could correspond to the nested loop that processes each fine atom in a coarse atom (nested in the merged atom loop 370) of FIG. 3, for example.

The atom load 474 operation is similar to the atom load 374 operation of FIG. 3. The atom load 474 operation loads a coarse granularity atom from memory into a register or other memory. Each coarse granularity atom has a size M rows and N columns (MxN elements). Each coarse granularity atom contains a number of smaller atoms. Each smaller atom is referred to as a "fine atom" and is of a size accepted by a matrix multiplication instruction ("dot2"). As an example, a coarse granularity atom can have dimensions 128x128. However, if a matrix multiplication accelerator instruction accepts matrix inputs no larger than 64x64, then a fine granularity atom size can be 64x64, and a coarse granularity atom includes four fine granularity atoms.

The coarse atom loop 470 includes a fine atom loop 476. The fine atom loop 476 performs an iteration for each fine atom in the coarse atom loaded by the atom load 474 operation. Each fine atom is of size fine_M by fine_N, where fine_M is less than M and/or fine_N is less than N, so that fine_M times fine_N is less than M times N. The operations shown in fine atom loop 476, including atom compute 478 and result atom loop 480, are performed for each fine atom in the coarse atom loaded by atom load 474.

The atom compute 478 operation is similar to the atom compute 378 of FIG. 3. Atom compute 478 performs a matrix multiplication operation that multiplies a fine atom of a loop iteration of loop 476 by a portion of another tile named tile_B. The portion of tile_B is selected using a slice operation. Appropriate row and column indexes are also provided as input to the slice operation to identify the row(s) and column(s) of tile_B to be selected for the matrix multiplication operation. The rows(s) and/or column(s) of tile_B can be determined from a loop index. For example, the first loop iteration selects the top left quadrant of tile_B if there are four fine atoms in a tile, the second loop iteration selects the top right quadrant, and so on. The tile compute 478 operation generates a set of result atoms ("result_atoms").

A result atom loop 480 is similar to the inner loop that begins with "for each result atom" of FIG. 3. The result atom loop 480 stores each result atom in a corresponding row and column of an output tile named tile_C.

Accordingly, FIG. 4 illustrates that nested atom-level code 428 may include one or more nested loops 450, 462, and 466, in which atom compute operations 464 and atom store operations 468 are performed in sequence. The coarse-grained (larger) atoms are used to generate an efficient candidate schedule of operations 168. The fine-grained (smaller) atoms processed by the atom loop (nested) 462 are passed to the GPU dot2 instruction as input, since the larger atoms are larger than the maximum tensor input size of the dot2 instruction. The dot2 instruction output includes an array of two atoms, which have sizes determined by the input parameters of the matrix multiplication performed by the dot2 operation. An atom loop (nested) 466 calls a tile store operation of the atoms (atom_k) returned by the dot2 operation called by atom compute 464.

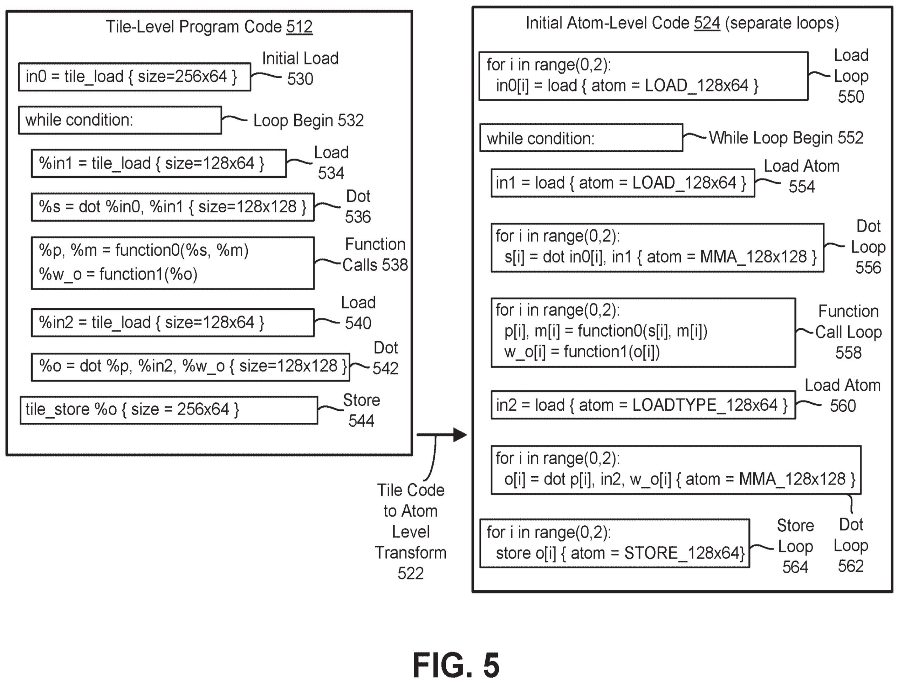

FIG. 5 illustrates an example transformation 522 of tile-level program code 512 for a machine learning application, in accordance with at least one embodiment. The tile-level program code 512 performs tile operations that can be parallelized across multiple units of an accelerator to initial atom-level code 524. The tile-level program code 512 is used herein as an example to illustrate operation of the compiler 102, including the atom code generator 110 and the scheduler 140. The tile-level program code 512 is used in instruction scheduling examples described herein with respect to FIG. 7. The tile code to atom level code transform 522 could correspond to the tile code to single-atom-level transform 322A of FIG. 3 or the tile to atom code transform 122 of FIG. 1, for example. The tile-level program code 512 could correspond to the tile-level program code 312 or the tile-level program code 112, for example. The initial atom-level code 524 could correspond to the atom-level program code 324A or the initial atom-level code 124, for example.

The tile-level program code 512 includes an initial load operation 530 to load a tile "in0" from memory, followed by a "while" loop that begins at a loop begin 532 statement. The loop performs a sequence of operations 532-542 repeatedly until a condition becomes true. The sequence of operations includes a load tile 534 operation to load a tile "in1" from memory, a dot product 536 that multiples tile "in0" by tile "in1", and function calls 538 that process the results of the dot product 536. A load tile 540 operation loads a tile "in2" from memory. The function calls 538 compute data values to be used as input to another dot product 542 operation, which multiplies the data values by tile "in2" to produce an output tile. A store 544 stores the output tile in memory after the loop ends.

The tile-level program code 512 is transformed, by a tile code to atom code transform 522, into initial atom-level code 524. The atom size selector 120 determines that the same size is to be used for scheduling and for accelerator instruction input because the scheduling atom size does not exceed the maximum input size of the accelerator instructions to be used for computations. Accordingly, a tile code to atom level code transform 522 transforms the tile-level program code 512 to initial atom-level code 524. The tile-level operations 530 and 534-542 of the tile-level program code 512 have been converted to respective "for" loops 550 and 554-562. that perform atom-level operations corresponding to the tile-level operations of the tile-level program code 512. Thus, the initial atom-level code 524 includes a load loop 550, and a "while" loop that begins at a loop begin 552 statement. The load loop 550 loads each atom of an input tile into registers or other high speed memory from global memory or the like. The atom size is specified by the "atom = LOAD_128x64" parameter to the load operation (e.g., a 128x64 atom size), which is half of the 256x64 tile size of the initial load operation 530 in the tile-level program code 512. Since the tile in0 has been split into an array of two atoms, in0[0] and in0[1], the load loop 550 performs two iterations ("for i in range(0, 2)"). Since in0 has been split into two elements, subsequent operations in the initial atom-level code 524 that use in0 are also performed in loops that perform two iterations, e.g., dot loop 556, function call loop 558, and dot loop 562. The memory locations (e.g., in global memory) from which the atoms are to be loaded are determined by the load operation. Alternatively, the memory locations from which the atoms are to be loaded can be provided to the load operation as input parameters. The load loop 550 stores each atom in an array element of the array "in0." The array "in0" represents the input tile as an array of atoms.

The "while" loop includes a load atom 554 statement. The load atom 554 statement is not in a loop because the corresponding load atom 554 operation has an input size that is sufficiently small to be processed using a single load operation instead of a loop of load operations. The "while" loop also includes a dot product loop 556, a function call loop 558, a load atom 560 statement (which is not in a loop for similar reasons as the load atom 554 statement), and a dot product loop 562. The dot product loop 562 computes the dot product at the atom level and stores the resulting atoms in an array "o" that represents a result tile. The dot product loops 556 calls the individual dot product operations using an MMA size parameter of MMA_128x128, which is the same as the MMA size parameter used in the tile-level program code 512 because the size of the in1 matrix has not changed in atom-level code 524.

When the "while" loop completes, a store loop 564 stores the atoms of the result tile ("o") from registers or other high speed memory (e.g., shared memory or tensor memory) to global memory or the like. The memory locations at which the atoms are stored (e.g., in global memory) are determined by the store operation. Alternatively, the memory locations at which the atoms are stored can be provided to the store operation as input parameters.

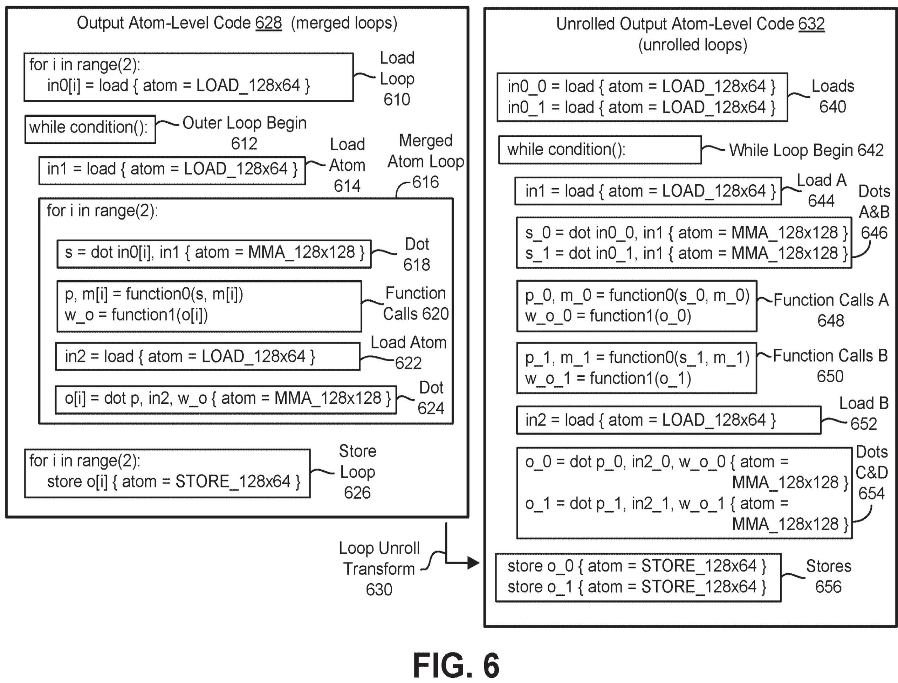

FIG. 6 illustrates example output atom-level code 628 for a machine learning application, which is generated by a loop optimizer 126 from initial atom-level code 524 that has separate loops, in accordance with at least one embodiment. The output atom-level code 628 is generated by the loop optimizer 126 by merging the following consecutive atom processing loops into a single merged atom loop 616: dot product loop 556, function call loop 558, load atom loop 560, and dot product loop 562. More specifically, the output atom-level code 628 includes a load loop 610, which is not merged with other loops because the load loop 550 is not suitable for merging (e.g., there are no other atom processing loops in the same block as load loop 550 outside the while loop). The output atom-level code 628 also includes a "while" loop begin 612 statement, which corresponds to the outer loop begin 552, and a load atom 614 statement, which corresponds to the load atom 554 statement. The load atom 614 statement has not been merged with other loops because it is not itself in a loop. The output atom-level code 628 could correspond to the output atom-level code 328A or the output atom-level code 128, for example.

The output atom-level code 628 also includes a merged atom loop 616. The merged atom loop 616 is a single loop formed by the loop optimizer 126 by merging consecutive atom processing loops that are in the same block. The atom processing loops that are merged are the dot product loop 556 and the function call loop 558. The load atom 560 loop, though not consecutive with the loops 556, 558, is also included in the merged atom loop 616 (as load atom 622) even though it is not a loop, so that the dot product loop 562 can be merged into the merged atom loop 616 (as dot product 624). The load atom 622 can potentially be moved out of the merged atom loop 616 as described herein. Alternatively, the load atom 622 operation and the dot product 624 can be omitted from the merged atom loop 616. A separate, subsequent loop (not shown) can then be formed in the merged atom loop 616 to perform the load atom operation.

The loop optimizer 126 merges the dot product loop 556, the function call loop 558, the load atom 540 operation, and the dot product loop 562 into a merged atom loop 616. The resulting merged atom loop 616 includes a dot product 618 operation, function calls 620 operation, a load atom 622 operation, and a dot product 624 operation, which are generated by transforming the respective dot product loop 556, function call loop 558, and dot product loop 562 into single operations (e.g., by removing the "for" statements of the dot product loop 556, function call loop 558, and dot product loop 562. The store loop 564 of the initial atom-level code 524 is not in the same block as any other atom processing loops because it is outside the while loop that begins at the "while" loop begin 552 statement. Accordingly, the loop optimizer 126 transforms the store loop 564 to a store loop 626 subsequent to and outside the merged atom loop 616 in the output atom-level code 628.

Consecutive atom processing loops may be suitable for merging into a single loop. However, merging atom processing loops that are separated by other intervening operations (which are statements that are not atom processing loops), such as the load atom 560 operation, can involve other transformations by the compiler. For example, the compiler can move the intervening operations so that they are not between atom processing loops. Alternatively, the loop optimizer 126 can include the intervening operations in the atom processing loop (e.g., as shown by the load atom 622 operation in the merged atom loop 616), but doing so can cause unnecessary computation by executing the intervening statement multiple times. However, a subsequent optimization pass of the compiler 102 can detect that the intervening statement (e.g., load atom 622) need not be repeated, in which case the subsequent optimization pass may perform an optimization so that the intervening statement is executed once instead of being repeated for each iteration of the merged atom loop 616.

Since the atom processing loops in the output atom-level code 628 perform two iterations each, e.g., to transform a 128x128 tile to two 128x64 tiles, a loop unroll transform 630 can be applied to further optimize the output atom-level code 628. The loop unroll transform 630 transforms a loop that executes a statement N times to N successive statements, which can be more efficient when N is small because there is no need to update a loop counter and compare it to a limit. Accordingly, the loop unrolls transform 630 generates unrolled output atom-level code 632 by unrolling the loops 610, 616, 626. The result of unrolling the load loop 610 is two load operations 640 corresponding to the first and second iterations of the load loop 610. The two load 640 operations store their results in two separate variables. Further, the result of unrolling the merged atom loop 616 is two dot product operations A and B 646, two function calls 648 and 650, two dot product operations C and D 654, and two store operations 656. The two dot products A and B 646 are the result of unrolling the dot product operation 618 of the two iterations of the merged atom loop 616. The function calls A 648 and function calls B 650 are the result of unrolling the function calls 620 of the merged atom loop 616. The load atom 622 is not unrolled because it need not be executed multiple times (e.g., because the load atom 560 from which the load atom 622 is generated is not in a loop). The two dot product operations C and D 654 are the result of unrolling the dot products operation 625. The two store operation 656 are the result of unrolling the store loop 626. The loop unroll transform 630 could correspond to at least a portion of the loop optimizer 126 of FIG. 1, for example.

Unrolling the loops in this way is expected to result in unrolled output atom-level code 632 that is more efficient than the output atom-level code 628 when the number of atoms per tile is small. If the number of atoms per tile is greater than a threshold, then unrolling the loops is less likely to result in more efficient unrolled output atom-level code 632.

FIG. 7 illustrates an example data dependency graph 748 and an example resource reservation table 766, in accordance with at least one embodiment. The data dependency graph 748 includes schedule nodes 710-718 corresponding to the operations 644-654 of the while loop block that begins at while loop begin 642 of the unrolled output atom-level code 632 and ends after the dot products C and D 654. Load A operation node 710 of the data dependency graph 748 corresponds to the load A 644 operation. Dot A operation node 712A and dot B operation node 712B correspond to the two dot products A and B 646, respectively. Functions A operation node 714A corresponds to functions A 648, and functions B operation node 714B corresponds to functions B 650. Load B operation node 716 corresponds to load B 652. Dot product C operation node 718A and dot product D operation node 718B correspond to dot products C and D 654, respectively. The data dependency graph 748 could correspond to the dependency graph 148, the nodes 710-718 could correspond to the schedule nodes 172, and the resource reservation table 766 could correspond to the resource reservation table 166 of FIG. 1, for example.

The data dependency graph 748 includes edges that represent data dependencies between nodes. Edges from the load A operation node 710 node to the dot A operation node 712A and dot B operation node 712B nodes indicate that the dot A operation node 712A and dot B operation node 712B depend on (e.g. use) data produced by the load A operation node 710, for example. Dependency delay notation of the form (delta, d), e.g., (1, 2), on an edge between nodes n1 and n2 indicates that the operation represented by n1 is delayed by at least d clock cycles after the execution of the operation represented by n1 in iteration i-delta, where i is the current iteration. Accordingly, the notation (0, 1) between load A operation node 710 and dot A operation node 712A indicates that the dot B operation node 712B operation is delayed by one clock cycle after the load A operation node 710 operation. As another example, the notation (1, 2) between functions A operation node 714A and dot product C operation node 718A indicates that the dot product C operation node 718A operation is delayed by two clock cycles after the functions A operation node 714A operation in the previous iteration.

The resource reservation table 766 includes a resource reservation table 766 for each of the operations represented by the node of the data dependency graph 748. The resource reservation table 766 includes a load operation table 770 as a sub-table. The resource reservation table 766 has three columns labeled DNA, MMA, and SMT, which represent the DMA functional unit, the matrix multiply accumulate function unit, and the symmetric multiprocessor functional unit of an accelerator (e.g., a GPU), respectively, Each row of the resource reservation table 766 represents a clock cycle. The load operation table 770 indicates that when a load operation (e.g., load A operation node 710 or load B operation node 716) is performed, the DMA unit is reserved (e.g., occupied) for 1 clock cycle. Further, the dot operation table 772 indicates that the MMA execution unit is reserved for two consecutive clock cycles for the dot product operation (e.g., dot A operation node 712A or dot B operation node 712B).

The function call operation table 774 indicates that the SMT execution unit is reserved during four consecutive clock cycles for the function call operation (e.g., functions A operation node 714A or functions B operation node 714B). The resource reservation table 766 is generated by the scheduler 140 from the machine model 160. The scheduler 140 uses the data dependency graph 748 and resource reservation table 766 to generate a candidate schedule 780 of operations.

For example, a candidate schedule that satisfies the dependencies of the data dependency graph 748 and the constraints of the resource reservation table 766 includes the operations Load A, Dot A, Dot B, Functions A, Functions B, Load B, Dot C, Dot D. An atom instruction schedule 870 that represents the candidate schedule 780 is shown in FIG. 8. Rows of the atom instruction schedule 870 represent atom instructions 810, and columns of the atom instruction schedule 870 represent clock cycles 812. As shown, the Load A operation is scheduled to execute using the DMA unit ("D") in clock cycle 1, the Load B operation is scheduled to execute using the DMA unit in clock cycle 2, the Dot A operation is scheduled to execute using the MMA unit ("M") in cycles 3 and 4, and the Dot B operation is scheduled to execute using the MMA unit in cycles 5 and 6. The Functions A operation is scheduled to execute using the SMT unit ("S") in clock cycles 5, 6, 7, and 8. The Functions A operation uses the SMT unit in parallel with Dot B's use of the MMA unit in clock cycles 5 and 6 because there is no dependency (e.g., no graph edge) between Functions A and Dot B. The Functions B operation uses the SMT unit in clock cycles 9, 10, 11, and 12. The Functions B operation uses the SMT unit in parallel with Dot C's use of the MMA unit in clock cycles 9 and 10. The Dot D operation uses the MMA unit in clock cycles 13 and 14. Although a particular schedule is shown as an example, other schedules can satisfy the dependencies of the data dependency graph 748 and the constraints of the resource reservation table 766. The schedule constraint evaluator 152 determines whether a particular candidate schedule of operations 168 satisfies scheduling constraints and, if so, outputs the candidate schedule of operations 168. If a candidate schedule of operations 168 does not satisfy the scheduling constraints, then the schedule constraint evaluator 152 uses the dependency graph updater 154 to modify the schedule, e.g., by inserting an additional dependency edge in the dependency graph 148 to reduce the amount of parallelism allowed by the scheduling constraints and thus reduce the number of possible candidate schedules to be identified and evaluated by the scheduling algorithm(s) 150. The atom instruction schedule 870 could correspond to the output schedule of operations 170 of FIG. 1, and the atom instructions 810 could correspond to at least a portion of the accelerator instructions 178, for example.

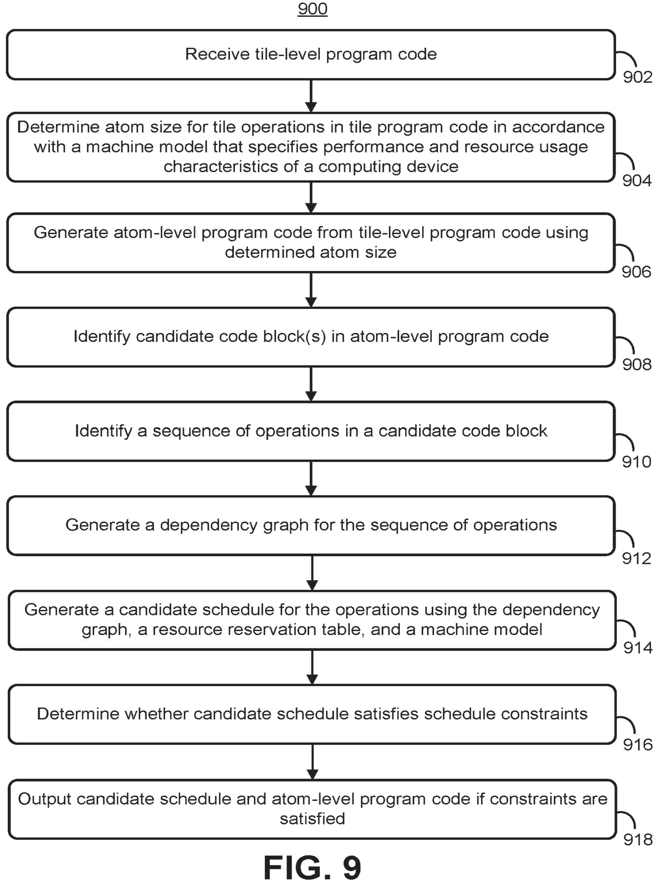

FIG. 9 illustrates an example of a process 900 to generate a schedule of operations for a tile program according to at least one embodiment. In at least one embodiment, some or all of process 900 (or any other processes described herein, or variations and/or combinations thereof) is performed under control of one or more computer systems configured with computer-executable instructions and is implemented as code (e.g., computer-executable instructions, one or more computer programs, or one or more applications) executing collectively on one or more processors, by hardware, software, or combinations thereof. In at least one embodiment, code is stored on a computer-readable storage medium in form of a computer program comprising a plurality of computer-readable instructions executable by one or more processors. In at least one embodiment, a computer-readable storage medium is a non-transitory computer-readable medium. At least some computer-readable instructions usable to perform process 900 are not stored solely using transitory signals (e.g., a propagating transient electric or electromagnetic transmission). A non-transitory computer-readable medium does not necessarily include non-transitory data storage circuitry (e.g., buffers, caches, and queues) within transceivers of transitory signals.

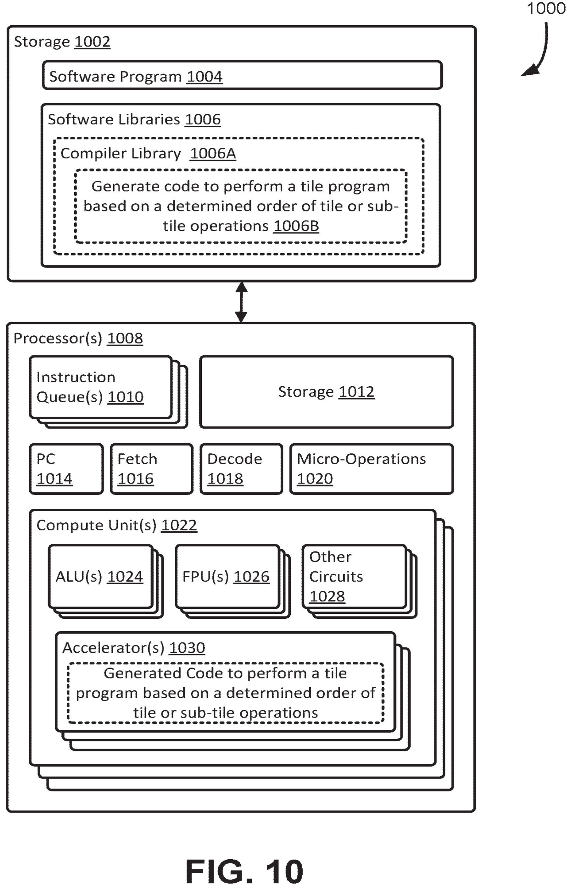

In at least one embodiment, process 900 is performed by one or more systems such as those described in this present disclosure. In at least one embodiment, process 900 is performed by the system such as described in connection with FIGS. 1-8. In at least one embodiment, process 900 is performed by a system of one or more programming models (e.g., CUDA, HIP, oneAPI, and/or variations thereof). One or more processes of process 900 are performed in any suitable order, including sequential, parallel, and/or variations thereof, and by any suitable system, such as those described herein, and using any suitable processing unit, such as a CPU, GPU, PPU, GPGPU, and/or variations thereof. Although process 900 is depicted as a series of steps or operations, process 900 may include altered or reordered steps or operations, or omit certain steps or operations, except where explicitly noted or logically required, such as when an output of one step or operation is used as input for another. In at least one embodiment, process 900 is performed by one or more systems such as those described in connection with FIGS. 10-29C. One or more processes of process 900 may be performed as part of performing one or more APIs such as those described herein.

The system performing at least a part of process 900 includes code to at least receive 902 tile-level program code. The tile-level program code can be tile-level program code 112 of FIG. 1, for example. The system performing at least a part of process 900 includes code to at least determine 904 an atom size for tile operations in tile program code in accordance with a machine model that specifies performance and resource usage characteristics of a computing device. The atom size can be determined by the atom size selector 120, for example.

The system performing at least a part of process 900 includes code to at least generate 906 atom-level program code from tile-level program code using determined atom size. The atom-level program code can be initial atom-level code 124 generated by the tile to atom code transform 122, for example.

The system performing at least a part of process 900 includes code to at least identify 908 candidate code block(s) in atom-level program code. The candidate code blocks can be identified by a code block selector 142, for example. The system performing at least a part of process 900 includes code to at least identify 910 a sequence of operations in a candidate code block. The sequence of operations can be identified by a code block partitioner 144, for example.

The system performing at least a part of process 900 includes code to at least generate 912 a dependency graph for the sequence of operations. The dependency graph can be a dependency graph 148 generated by a dependency graph generator 146, for example.

The system performing at least a part of process 900 includes code to at least generate 914 a candidate schedule for the operations using the dependency graph, a resource reservation table, and a machine model. For example, one or more scheduling algorithm(s) 150 can generate a candidate schedule of operations 168 using a dependency graph 148 and a resource reservation table 166.

The system performing at least a part of process 900 includes code to at least determine 916 whether the candidate schedule satisfies schedule constraints. A schedule constraint evaluator 152 can determine whether the candidate schedule of operations 168 satisfies the constraints, for example.

The system performing at least a part of process 900 includes code to at least output 918 the candidate schedule and atom-level program code if the schedule constraints are satisfied. The schedule constraint evaluator 152 can output an output schedule of operations 170 if the constraints are satisfied, for example. Otherwise, the schedule constraint evaluator 152 can cause a dependency graph updater 154 to update the dependency graph 148, e.g., by adding edges between nodes to increase dependencies and simplify the scheduling problem. A scheduler 140 can generate another candidate schedule of operations 168 using the scheduling algorithm(s) 150 and determine whether the updated candidate schedule of operations 168 satisfies the scheduling constraints. If so, the schedule constraint evaluator 152 can output the updated candidate schedule of operations 168.

FIG. 10 illustrates an example of a system 1000 that can include software and hardware to perform compiler optimizations on tile programs or otherwise perform any of the operations described herein, according to at least one embodiment. System 1000 can include storage 1002 and processor(s) 1008. Storage 1002 can include, for example, memory, cache, or other storage described further herein. Storage 1002 can be separate from processor(s) 1008, or storage 1002 can be included in processor(s) 1008 (e.g., in storage 1012). In at least one embodiment, software program 1004 and/or software libraries (or instructions) 1006 can be stored in memory, cache, or other storage and provided to processor(s) 1008 to cause one or more circuits of processor(s) 1008 to perform operations described herein. In at least one embodiment, software program 1004 and/or software libraries (or instructions) 1006 can be integrated into one or more circuits of processor(s) 1008. Software program 1004, which can be used to perform any of the operations described herein, may be stored on storage 1002.

In at least one embodiment, software program 1004 can include one or more software modules. In at least one embodiment, system 1000 includes one or more compilation modules, one or more atom code generator modules, one or more schedule generation modules, and/or combinations thereof.

In at least one embodiment, as used in any implementation described herein, unless otherwise clear from context or stated explicitly to contrary, a module refers to any combination of software logic, firmware logic, hardware logic, and/or circuitry configured to provide functionality described herein. In at least one embodiment, software is embodied as a software package, code and/or instruction set or instructions, and "hardware," as used in any implementation described herein, includes, for example, singly or in any combination, hardwired circuitry, programmable circuitry, state machine circuitry, fixed function circuitry, execution unit circuitry, and/or firmware that stores instructions performed by programmable circuitry. In at least one embodiment, modules are, collectively or individually, embodied as circuitry that forms part of a larger system, for example, an integrated circuit (IC), system on-chip (SoC), and so forth. In at least one embodiment, a module performs one or more processes in connection with any suitable processing unit and/or combination of processing units, such as one or more CPUs, GPUs, GPGPUs, PPUs, and/or variations thereof including those further described herein.

In at least one embodiment, software program 1004 can include a collection of software code, commands, instructions, or other sequences of text to instruct a computing device to perform one or more computational operations and/or invoke one or more other sets of instructions, such as API(s) or API function(s) or Instruction Set Architecture (ISA) level instructions, to be executed or otherwise performed. Instructions (e.g., hardware instructions) or microcode can involve ISA level instructions, which can include native ISA instructions or non-native ISA instructions. Software program 1004 and/or software libraries (or instructions) 1006 (e.g., one or more modules) can be distributed among multiple processors that communicate over a bus, network, by writing to shared memory, and/or any suitable communication process such as those described herein.

In at least one embodiment, system 1000 can include one or more software libraries 1006 that can, for example, provide one or more APIs and/or ISA instructions. In at least one embodiment, one or more APIs and/or ISA instructions can be used to cause a compiler to partition a tile of a tile program into sub-tiles of a size based on one or more accelerator hardware characteristics; generate a plurality of instruction groups to be performed on corresponding sub-tiles, the instruction groups based on a tile operation to be performed on the tile; determine an order to perform individual instruction groups; and generate code to cause individual instruction groups to be performed in the determined order. In at least one embodiment, one or more APIs and/or ISA instructions can be used to cause a compiler to generate a dependency graph indicative of operations of a tile program; determine functional units of an accelerator to perform operations in a first order indicated by the dependency graph; determine a second order in which to perform the operations based on constraints on usage of the functional units; and generate code to perform the tile program based on the determined second order. In at least one embodiment, one or more software libraries 1006 can be included in drivers and/or runtimes. In at least one embodiment, software libraries 1006 (e.g., including one or more APIs and/or ISA instructions) can include sets of software instructions that, if executed or otherwise performed, cause processor(s) 1008 to perform one or more computational operations, such as any of the operations described herein. In at least one embodiment, one or more APIs and/or ISA instructions can be distributed or otherwise provided as a part of one or more software libraries 1006, runtimes, drivers, and/or any other grouping of software and/or executable code further described herein. In at least one embodiment, one or more APIs and/or ISA instructions can perform one or more computational operations in response to invocation by software program 1004.

Processor(s) 1008 may include any number of processors and any suitable processing unit and/or combination of processing units, such as, but not limited to, central processing units ("CPUs"), graphics processing units ("GPUs"), or other processors (including accelerators, field programmable gate arrays (FPGAs), graphics processors, parallel processors, GPGPUs, DPUs, and/or variations thereof including those further described herein), including any processors described herein, such as, but not limited to, processors in FIGS. 12-24. In at least one embodiment, processor(s) 1008 can retrieve or fetch instructions (e.g., one or more APIs and/or ISA instructions) from storage 1002 using, for example, instruction fetch 1016 (e.g., for an Instruction Fetch stage). Instructions can include instructions to cause a compiler to partition a tile of a tile program into sub-tiles of a size based on one or more accelerator hardware characteristics; generate a plurality of instruction groups to be performed on corresponding sub-tiles, the instruction groups based on a tile operation to be performed on the tile; determine an order to perform individual instruction groups; and generate code to cause individual instruction groups to be performed in the determined order. Instructions can include instructions to cause a compiler to generate a dependency graph indicative of operations of a tile program; determine functional units of an accelerator to perform operations in a first order indicated by the dependency graph; determine a second order in which to perform the operations based on constraints on usage of the functional units; and generate code to perform the tile program based on the determined second order. In at least one embodiment, processor(s) 1008 can include storage 1012 and instruction queue 1010 to store and queue instructions fetched from storage 1002. In at least one embodiment, fetched instructions can be decoded by decode 1018 to determine what operation should be performed by processor(s) 1008 (e.g., in an Instruction Decode stage). In at least one embodiment, processor(s) 1008 can fetch additional operands (data) that may be used for instructions, and operands can be stored, e.g., in registers or storage 1012. In at least one embodiment, micro-operations 1020 can perform operations on data stored in one or more registers or storage 1012. For example, each step of instructions fetched by processor(s) 1008 can be decomposed during execution so processor(s) 1008 can execute instructions in steps through a series of micro-operations 1020. In at least one embodiment, program counter (PC) 1014 can hold an address for a next instruction and can be updated to point to the next instruction to be executed by processor(s) 1008.

In at least one embodiment, processor(s) 1008 can perform instructions (e.g., in an Execution stage). For example, processor(s) 1008 can perform an operation specified by the instructions, such as an arithmetic operation, a logical operation, or a data transfer. In at least one embodiment, compute unit(s) 1022 can execute instructions to perform any of the operations described herein. In at least one embodiment, compute unit(s) can include ALU(s) 1024 (Arithmetic Logic Units), which may be used for performing arithmetic and logical operations. In at least one embodiment, compute unit(s) can include FPU(s) (Floating Point Units) 1026, which may be used for performing floating-point calculations. In at least one embodiment, other circuits 1028 can be used to perform other operations, such as vector and/or scalar operations. In at least one embodiment, accelerator(s) 1030 can include one or more matrix multiplication accelerators, one or more parallel processing units (PPUs), such as GPUs, or any other accelerator or processor further described herein. In at least one embodiment, software program 1004 can utilize one or more APIs and/or ISA instructions to perform various computing operations with accelerator(s) 1030, such as matrix multiplication, arithmetic operations, or any other computing operation further described herein. In at least one embodiment, one or more computing operations using accelerator(s) 1030 can include at least one or more groups of computing operations to be accelerated by execution at least in part by accelerator(s) 1030, including to perform a tile program based on a determined order of tile or sub-tile operations.

In at least one embodiment, system 1000 can be used to perform one or more instructions that include functions or operations, such as those described in connection with FIGS. 1-9. In at least one embodiment, system 1000 comprising one or more processors causes one or more circuits to cause a compiler to partition a tile of a tile program into sub-tiles of a size based on one or more accelerator hardware characteristics; generate a plurality of instruction groups to be performed on corresponding sub-tiles, the instruction groups based on a tile operation to be performed on the tile; determine an order to perform individual instruction groups; and generate code to cause individual instruction groups to be performed in the determined order and/or otherwise perform operations described herein. In at least one embodiment, system 1000 comprising one or more processors causes one or more circuits to cause a compiler to generate a dependency graph indicative of operations of a tile program; determine functional units of an accelerator to perform operations in a first order indicated by the dependency graph; determine a second order in which to perform the operations based on constraints on usage of the functional units; and generate code to perform the tile program based on the determined second order and/or otherwise perform operations described herein. In at least one embodiment, system 1000 is included in and/or otherwise includes systems illustrated in FIGS. 1-9 to cause one or more circuits to cause a compiler to partition a tile of a tile program into sub-tiles of a size based on one or more accelerator hardware characteristics; generate a plurality of instruction groups to be performed on corresponding sub-tiles, the instruction groups based on a tile operation to be performed on the tile; determine an order to perform individual instruction groups; and generate code to cause individual instruction groups to be performed in the determined order and/or otherwise perform operations described herein. In at least one embodiment, system 1000 is included in and/or otherwise includes systems illustrated in FIGS. 1-9 to cause one or more circuits to cause a compiler to generate a dependency graph indicative of operations of a tile program; determine functional units of an accelerator to perform operations in a first order indicated by the dependency graph; determine a second order in which to perform the operations based on constraints on usage of the functional units; and generate code to perform the tile program based on the determined second order and/or otherwise perform operations described herein. In at least one embodiment, system 1000 includes one or more hardware illustrated in FIGS. 10-29C, such as to partition a tile of a tile program into sub-tiles of a size based on one or more accelerator hardware characteristics; generate a plurality of instruction groups to be performed on corresponding sub-tiles, the instruction groups based on a tile operation to be performed on the tile; determine an order to perform individual instruction groups; and generate code to cause individual instruction groups to be performed in the determined order and/or otherwise perform operations described herein. In at least one embodiment, system 1000 includes one or more hardware illustrated in FIGS. 10-29C, such as to generate a dependency graph indicative of operations of a tile program; determine functional units of an accelerator to perform operations in a first order indicated by the dependency graph; determine a second order in which to perform the operations based on constraints on usage of the functional units; and generate code to perform the tile program based on the determined second order and/or otherwise perform operations described herein.

### DATA CENTER

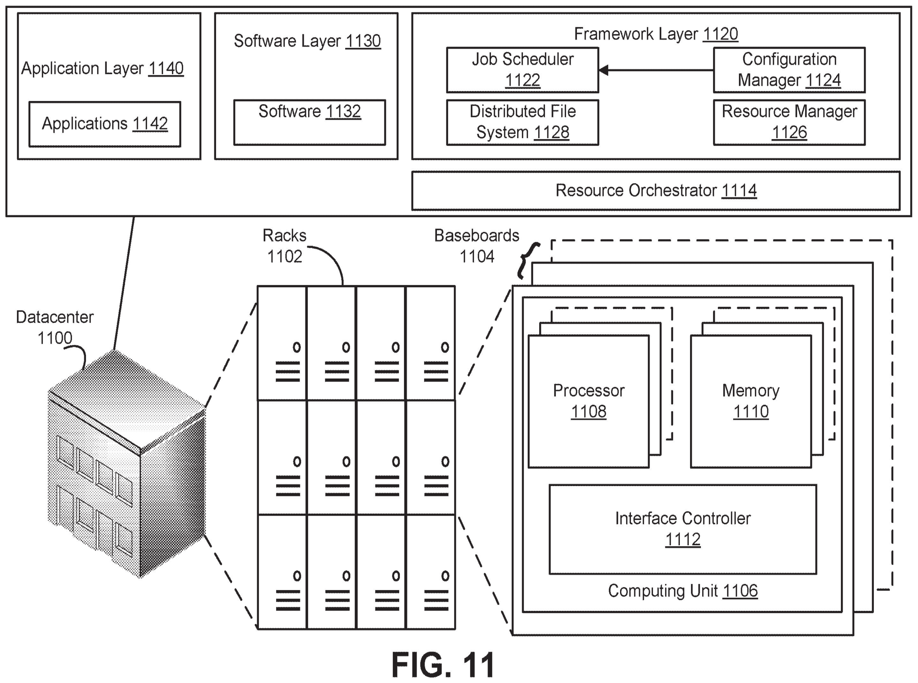

FIG. 11 illustrates an example data center 1100, in accordance with at least one embodiment. Data center 1100 may include one or more rooms having racks 1102 and auxiliary equipment used to house one or more racks 1102 and one or more baseboards 1104. Rack 1102 can include one or more baseboards 1104. Rack 1102 can include a housing that receives and supports individual baseboards 1104. Operational aspects of rack 1102 may be regulated at a rack level, corresponding to a group of baseboards 1104, or at a baseboard level, corresponding to individual baseboards 1104, among other options. Rack 1102 or baseboards 1104 can have particularly selected maximum operating parameters, such as, but not limited to, power consumption, operating frequencies, and others. Data center 1100 can be supported by various cooling systems, such as, but not limited to, cooling towers, cooling loops, pumps, and other support systems. Cooling systems may include sensors and controllers to monitor and managing cooling properties for racks 1102. Baseboards 1104 within racks 1102 can get operational power from one or more power distribution units (PDUs; not shown). PDUs may be arranged within racks 1102, for example between racks 1102 including baseboards 1104, or within racks 1102 that also house baseboards 1104.

Racks 1102 and baseboards 1104 can include sub-systems, modules, add-in cards, and other semiconductor components. Baseboards 1104 can include one or more computing units 1106 that can include one or more processors 1108, one or more memory 1110, and an interface controller 1112. Computing units 1106 may include any number of processors, such as, but not limited to, central processing units ("CPUs"), graphics processing units ("GPUs"), or other processors (including accelerators, field programmable gate arrays (FPGAs), graphics processors, etc.), including any processors described herein, such as, but not limited to, processors in FIGS. 12-24. Computing units 1106 can include one or more memory storage devices 1110 (e.g., dynamic read-only memory, solid state storage or disk drives), as well as network input/output ("NW I/O") devices, network switches, virtual machines ("VMs"), power modules, and cooling modules, etc. One or more computing units 1106 may be a server having one or more of above-mentioned computing resources.

Computing units 1106 can include separate groupings of computing units housed within one or more racks (not shown), or many racks housed in data centers at various geographical locations (also not shown). Separate groupings of computing units may include grouped compute, network, memory or storage resources that may be configured or allocated to support one or more workloads. Several computing units (e.g., including CPUs and/or other processors) may be grouped within one or more racks to provide compute resources to support one or more workloads. A resource orchestrator 1114 may configure or otherwise control one or more computing units 1106 or groups of computing units. Resource orchestrator 1114 may include a software design infrastructure ("SDI") management entity for data center 1100. Resource orchestrator 1114 may include hardware, software or some combination thereof.

Data center 1100 can include any one of or any combination of a framework layer 1120, a software layer 1130 and an application layer 1140. As shown in FIG. 11, framework layer 1120 includes a job scheduler 1122, a configuration manager 1124, a resource manager 1126 and a distributed file system 1128. Framework layer 1120 may include a framework to support software 1132 of software layer 1130 and/or one or more application(s) 1142 of application layer 1140. Software 1132 or application(s) 1142 may respectively include web-based service software or applications, such as, but not limited to, those provided by Amazon Web Services, Google Cloud and Microsoft Azure. Framework layer 1120 may be a type of free and open-source software web application framework such as, but not limited to, Apache Spark^{™} (hereinafter "Spark") that may utilize distributed file system 1128 for large-scale data processing (e.g., "big data"). Job scheduler 1122 may include a Spark driver to facilitate scheduling of workloads supported by various layers of data center 1100. Configuration manager 1124 may be capable of configuring different layers such as, but not limited to, software layer 1130 and framework layer 1120 including Spark and distributed file system 1128 for supporting large-scale data processing. Resource manager 1126 may be capable of managing clustered or grouped computing units 1106 mapped to or allocated for support of distributed file system 1128 and job scheduler 1122. Resource manager 1126 may coordinate with resource orchestrator 1114 to manage these mapped or allocated computing resources.

Software 1132 can be included in software layer 1130 and may include software used by at least portions of a computing unit 1106, one or more computing units 1106, groups of computing units 1106, and/or distributed file system 1128 of framework layer 1120. One or more types of software may include, but are not limited to, Internet web page search software, e-mail virus scan software, database software, and streaming video content software.

Application(s) 1142 can be included in application layer 1140 and may include one or more types of applications used by at least portions of a computing unit 1106, one or more computing units 1106, groups of computing units 1106, and/or distributed file system 1128 of framework layer 1120. One or more types of applications may include, but are not limited to, any number of a genomics application, a cognitive compute, application and a machine learning application, including training or inferencing software, machine learning framework software (e.g., PyTorch, TensorFlow, Caffe, etc.) or other machine learning applications used in conjunction with one or more embodiments.

Any of configuration manager 1124, resource manager 1126, and resource orchestrator 1114 may implement any number and type of self-modifying actions based on any amount and type of data acquired in any technically feasible fashion. Self-modifying actions may relieve a data center operator of data center 1100 from making possibly bad configuration decisions and possibly avoiding underutilized and/or poor performing portions of a data center.

Data center 1100 may include tools, services, software or other resources to train one or more machine learning models or predict or infer information using one or more machine learning models in accordance with one or more embodiments described herein. For example, a machine learning model may be trained by calculating weight parameters in accordance with a neural network architecture using software and computing resources described above with respect to data center 1100. Trained machine learning models corresponding to one or more neural networks may be used to infer or predict information using resources described above with respect to data center 1100 by using weight parameters calculated through one or more training techniques described herein.

Data center 1100 may use CPUs, application-specific integrated circuits (ASICs), GPUs, FPGAs, or other hardware (e.g., embodiments in FIGS. 12-24) to perform some or all of processes and techniques described elsewhere herein, such as, but not limited to, training and/or inferencing using above-described resources. Moreover, one or more software and/or hardware resources described above may be configured as a service to allow users to train or performing inferencing of information, such as, but not limited to, image recognition, speech recognition, or other artificial intelligence services.

In at least one embodiment, processor 1108 can include one of the processors below and/or comprises one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. In at least one embodiment, processor 1108 is configured by software 1132 to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. Data center 1100 may use logic, CPUs, application-specific integrated circuits (ASICs), GPUs, FPGAs, or other hardware (e.g., embodiments in FIGS. 12-24) to perform any of the operations described above or elsewhere herein.

### PROCESSORS

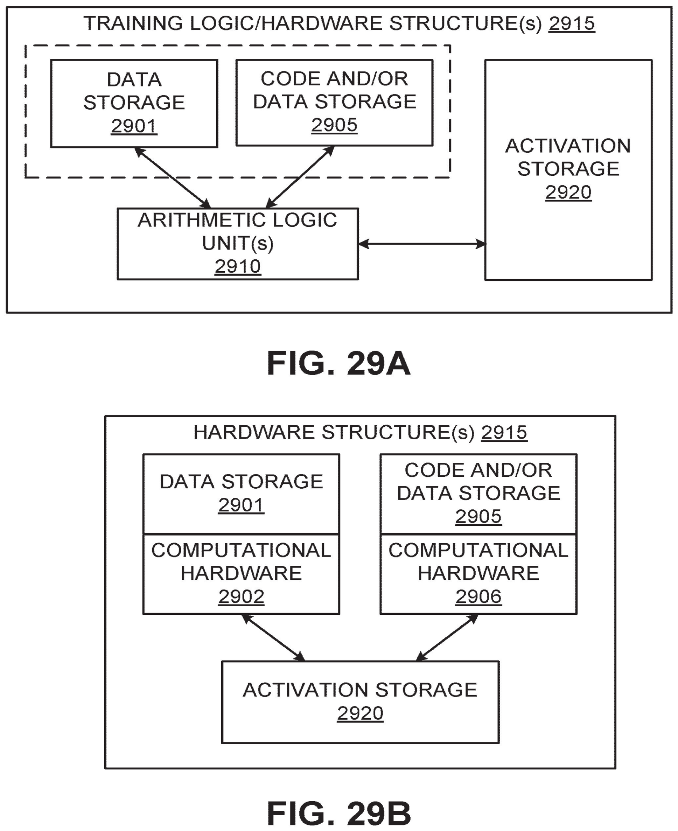

The following figures set forth, without limitation, example processors and processing systems that can be used to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform some or all of processes, operations and/or and techniques described elsewhere herein. Example processors and processing systems can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. Processors and processing systems can include logic, central processing units (CPUs), application-specific integrated circuits (ASICs), graphics processing units (GPUs), field programmable arrays (FPGAs), XPUs (i.e., any compute architecture that best fits the need of an application) or other hardware (e.g., embodiments in FIGS. 12-24) to perform any of the operations described above, below, or elsewhere herein. Processors and/or processing systems described herein can include one or more circuits that can be used to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. As used herein, one or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. FIGS. 29A and 29B illustrate logic 2915 which, as described elsewhere herein, can be used in one or more devices to perform operations such as, but not limited to, those discussed herein in accordance with at least one embodiment. Logic can refer, for example, to any combination of software logic, hardware logic, and/or firmware logic to provide functionality and/or operations described herein, wherein logic may be, collectively or individually, embodied as circuitry that forms part of a larger system, for example, an integrated circuit (IC), an application-specific integrated circuit (ASIC), a field programmable array (FPGA), system-on-chip (SoC), or one or processors (e.g., CPU, GPU).

FIG. 12 illustrates a processor which is a system-on-a-chip (SOC) 1200 (which may be referred to as system-on-chip, a superchip, or another name), in accordance with at least one embodiment. SOC 1200 can include processor complex 1210 and processor complex 1240. SOC 1200 can include any number of processor complexes 1210 and/or processor complexes 1240 that may include any number of processors that are described herein, such as, but not limited to, those in FIGS. 12-24, in any combination. For example, processor 1210 may include a central processing unit (CPU), and processor 1240 may include a graphics processor. Alternatively, processor 1210 may include a graphics processor, and processor 1240 may include a graphics processor. SOC 1200 may include any number of display controllers 1292, any number of multimedia engines 1294, any number of I/O Interfaces 1270, any number of memory controllers 1280, and any number of fabrics 1260 in any combination. For explanatory purposes, multiple instances of like objects are denoted herein with reference numbers identifying the object and parenthetical numbers identifying the instance where needed. SOC 1200 can include a processor from Broadcom in Palo Alto, CA.

Processor complex 1210 can include a CPU, processor complex 1240 can include a GPU, and SOC 1200 can include a processing unit that integrates 1210 and 1240 onto a single chip. Some tasks may be assigned to processor complex 1210 and other tasks may be assigned to processor complex 1240. Processor complex 1210 can be configured to execute main control software associated with SOC 1200, such as, but not limited to, an operating system. Processor complex 1210 can be the master processor of SOC 1200, controlling and coordinating operations of other processors. Processor complex 1210 can issue commands that control the operation of processor complex 1240 to perform some or all of the operations described herein. Processor complex 1210 can be configured to execute host executable code derived from CUDA or other source code (e.g., HIP source code), and processor complex 1240 can be configured to execute device executable code derived from CUDA or other source code in order to perform any of the operations described herein.

Processor complex 1210 can include cores 1220(1)-1220(4) and a cache (e.g., L3 cache) 1230 to store information to perform operations described herein. Processor complex 1210 may include any number of cores 1220 and any number and type of caches in any combination. Cores 1220 can be configured to execute instructions of a particular instruction set architecture ("ISA") to perform some or all of the operations described herein. Each core 1220 can include a CPU core. Core 1220(1)-1220(4) can be referred to as a computing units or compute units. SOC 1200 can includes any number of processor complexes 1210, fabric 1260, I/O interfaces 1270, and memory controllers 1280.

Each core 1220 can include a fetch/decode unit 1222, an integer execution engine 1224, a floating point execution engine 1226, and an L2 cache 1228. Fetch/decode unit 1222 can fetch instructions to perform some or all of the operations described herein (such as, but not limited to, an API that is compiled into instructions) and decode such instructions, generate micro-operations, and dispatch separate micro-instructions to integer execution engine 1224 and/or floating point execution engine 1226. Fetch/decode unit 1222 can concurrently dispatch one micro-instruction to integer execution engine 1224 and another micro-instruction to floating point execution engine 1226. Integer execution engine 1224 can execute integer and memory operations. Floating point engine 1226 can execute floating point and vector operations. Fetch-decode unit 1222 can dispatch micro-instructions to one or more execution engines that replaces both integer execution engine 1224 and floating point execution engine 1226.

Each core 1220(i), where i is an integer representing a particular instance of core 1220, may access L2 cache 1228(i) included in core 1220(i). Each core 1220 included in core complex 1210(j), where j is an integer representing a particular instance of core complex 1210, can be connected to other cores 1220 included in core complex 1210(j) via L3 cache 1230(j) included in core complex 1210(j). Cores 1220 included in core complex 1210(j), where j is an integer representing a particular instance of core complex 1210, can access all of L3 cache 1230(j) included in core complex 1210(j). L3 cache 1230 may include any number of slices.

Processor complex 1240 can be a graphics complex that can be configured to perform compute operations (e.g., compute operations involved in operations described herein) in a highly-parallel fashion. Processor complex 1240 can be configured to execute graphics pipeline operations such as, but not limited to, draw commands, pixel operations, geometric computations, and other operations associated with rendering an image to a display. Processor complex 1240 can be configured to execute operations unrelated to graphics, such as, but not limited to, neural network training and/or simulations. Processor complex 1240 can be configured to execute both operations related to graphics and operations unrelated to graphics.

Processor complex 1240 can include any number of compute units 1250(1)-1250(N), where N is any integer greater than 1, and an L2 cache 1242. Compute units 1250 can share L2 cache 1242, which may store information to be used to perform some or all of the operations described herein. L2 cache 1242 can be partitioned. Processor complex 1240 can include any number of compute units 1250 and any number (including zero) and type of caches. Processor complex 1240 can include any amount of dedicated graphics hardware.

Each compute unit 1250 can include any number of SIMD units 1252(1)-1252(N), where N is any integer greater than 1, and a shared memory 1254. Each SIMD unit 1252 can implement a SIMD architecture and can be configured to some or all of the operations described herein, in parallel. Each compute unit 1250 may execute any number of thread blocks, but each thread block can execute on a single compute unit 1250, although in some embodiments a thread block can execute on multiple compute units. A thread block can include any number of threads of execution. A workgroup can be a thread block. Each SIMD unit 1252 can execute a group of threads. A group of threads (e.g., 16 threads), which can also be referred to as a warp, or subgroup, or wavefront (e.g., as used by AMD and Intel), where each thread in the warp, wave, subgroup, or wavefront can belong to a single thread block and is configured to process a different set of data based on a single set of instructions. Predication can be used to disable one or more threads in a warp, subgroup, or wavefront. A lane can be a thread. A work item can be a thread, such as, but not limited to, e.g., with OpenCL. Different warps, subgroups, or wavefronts in a thread block may synchronize together and communicate via shared memory 1254. Each compute unit 1250 can include one or more thread block clusters, where a thread block cluster can enable programmatic control of locality at a granularity larger than a single thread block of a single streaming multiprocessor (SM). Thread block clusters (also referred to as "clusters") can enable multiple thread blocks running concurrently across streaming multiprocessors to synchronize and collaboratively fetch, exchange, or otherwise use data. In at least one embodiment, streaming multiprocessors ("SMs") can be referred to streaming microprocessors, stream processors ("SPs"), stream processing units ("SPUs"), compute units ("CUs"), execution units ("EUs"), and/or slices, where a slice in this context can refer to a portion of processing resources in a processing unit (e.g., 16 cores, a ray tracing unit, a thread director or scheduler).

Fabric 1260 can be a system interconnect that facilitates data and control transmissions across processor complex 1210, processor complex 1240, I/O interfaces 1270, memory controllers 1280, display controller 1292, and multimedia engine 1294, e.g., to perform some or all of the operations described herein. SOC 1200 may include any amount and type of system interconnect in addition to or instead of fabric 1260 that facilitates data and control transmissions across any number and type of directly or indirectly linked components that may be internal or external to SOC 1200. I/O interfaces 1270 can be representative of any number and type of I/O interfaces (e.g., PCI , PCI-Extended ("PCI-X"), PCIe, gigabit Ethernet ("GBE"), USB, etc.). Various types of peripheral devices can be coupled to I/O interfaces 1270. Peripheral devices that can be coupled to I/O interfaces 1270 may include keyboards, mice, printers, scanners, joysticks or other types of game controllers, media recording devices, external storage devices, network interface cards, and so forth.

Display controller 1292 may display images on one or more display device(s), such as, but not limited to, a liquid crystal display ("LCD") device. Multimedia engine 1294 can include any amount and type of circuitry that is related to multimedia, such as, but not limited to, a video decoder, a video encoder, an image signal processor, etc. Memory controllers 1280 may facilitate data transfers between SOC 1200 and a unified system memory 1290. Processor complex 1210 and processor complex 1240 may share unified system memory 1290. Unified system memory 1290 can include various types of memory devices, including dynamic random access memory (DRAM) or graphics random access memory, such as, but not limited to, synchronous graphics random access memory (SGRAM), including graphics double data rate (GDDR) memory. Unified system memory 1290 may include 3D stacked memory, including but not limited to high bandwidth memory (HBM), HBM2e, or HDM3.

SOC 1200 may implement a memory subsystem that includes any amount and type of memory controllers 1280 and memory devices (e.g., shared memory 1254) that may be dedicated to one component or shared among multiple components in order to perform any of the operations described herein. SOC 1200 can implement a cache subsystem that includes one or more cache memories (e.g., L2 caches 1228, L3 cache 1230, and L2 cache 1242) that may each be private to or shared between any number of components (e.g., cores 1220, core complex 1210, SIMD units 1252, compute units 1250, and processor complex 1240).

In at least one embodiment, SOC 1200 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

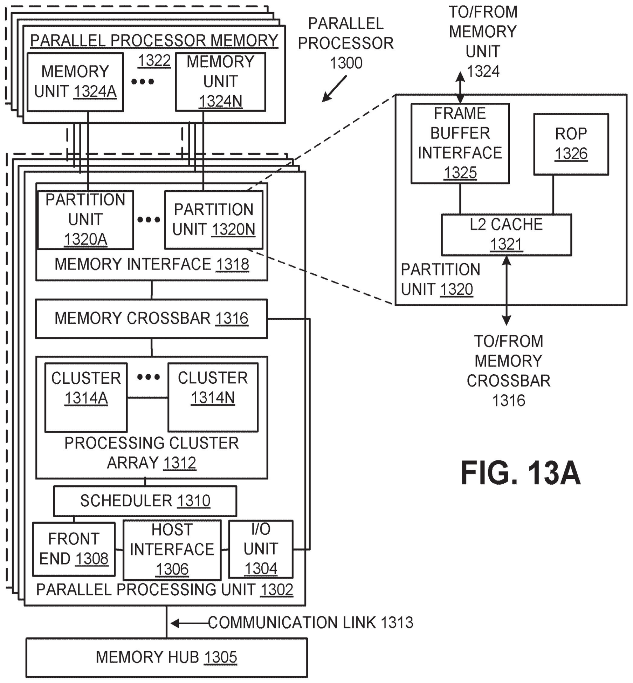

FIG. 13A illustrates a parallel processor 1300, in accordance with at least one embodiment. Parallel processor 1300 may be implemented using one or more circuits and may be referred to as a programmable processor (e.g., a CPU and/or GPU), logic, an application specific integrated circuit (ASIC), a field programmable gate array (FPGA) or other hardware (e.g., embodiments in FIGS. 12-24) to perform any of the operations described above or elsewhere herein.

Parallel processor 1300 can include a parallel processing unit 1302 to perform any of the operations described above or elsewhere herein. Parallel processing unit 1302 can include an I/O unit 1304 that enables communication with other devices, including other instances of parallel processing unit 1302. I/O unit 1304 may be directly connected to other devices. I/O unit 1304 may connect with other devices via use of a hub or switch interface, such as, but not limited to, a memory hub 1305. Connections between memory hub 1305 and I/O unit 1304 can form a communication link 1313. I/O unit 1304 may connect with a host interface 1306 and a memory crossbar 1316, where host interface 1306 receives commands directed to performing processing operations and memory crossbar 1316 receives commands directed to performing memory operations.

When host interface 1306 receives a command buffer via I/O unit 1304, host interface 1306 can direct work operations to perform those commands to a front end 1308. Front end 1308 can couple with a scheduler 1310 (which may be referred to as a sequencer), which is configured to distribute commands or other work items to a processing cluster array 1312. Scheduler 1310 can ensure that processing cluster array 1312 is properly configured and in a valid state before tasks may be distributed to a cluster of processing cluster array 1312. Scheduler 1310 may be implemented via firmware logic executing on a microcontroller. Microcontroller-implemented scheduler 1310 can be configurable to perform complex scheduling and work distribution operations at coarse and fine granularity, enabling rapid preemption and context switching of threads executing on processing array 1312. Host software can prove workloads for scheduling on processing cluster array 1312 via one of multiple graphics processing paths. Workloads can then be automatically distributed across processing array cluster 1312 by scheduler 1310 logic within a microcontroller including scheduler 1310.

Processing cluster array 1312 can perform any of the operations described above or elsewhere herein and can include up to "N" processing clusters (e.g., cluster 1314A, cluster 1314B, through cluster 1314N), where "N" represents a positive integer (which may be a different integer "N" than used in other figures). Each cluster 1314A-1314N of processing cluster array 1312 can execute a large number of concurrent threads. Scheduler 1310 can allocate work to clusters 1314A-1314N of processing cluster array 1312 using various scheduling and/or work distribution algorithms, which may vary depending on workload arising for each type of program or computation. Scheduling can be handled dynamically by scheduler 1310, or can be assisted in part by compiler logic during compilation of program logic configured for execution by processing cluster array 1312. Different clusters 1314A-1314N of processing cluster array 1312 can be allocated for processing different types of programs or for performing different types of computations.

Processing cluster array 1312 can be configured to perform various types of parallel processing operations, such as, but not limited to, any of the operations described above or elsewhere herein. Processing cluster array 1312 can be configured to perform general-purpose parallel compute operations. For example, processing cluster array 1312 can include logic to execute processing tasks including filtering of video and/or audio data, performing modeling operations, including physics operations, and performing data transformations.

Processing cluster array 1312 can be configured to perform parallel graphics processing operations. Processing cluster array 1312 can include additional logic to support execution of such graphics processing operations, including but not limited to, texture sampling logic to perform texture operations, as well as tessellation logic and other vertex processing logic. Processing cluster array 1312 can be configured to execute graphics processing related shader programs such as, but not limited to, vertex shaders, tessellation shaders, geometry shaders, and pixel shaders. Parallel processing unit 1302 can transfer data from system memory via I/O unit 1304 for processing. During processing, transferred data can be stored to on-chip memory (e.g., parallel processor memory 1322) during processing, then written back to system memory.

When parallel processing unit 1302 is used to perform graphics processing, scheduler 1310 can be configured to divide a processing workload into approximately equal sized tasks, to better enable distribution of graphics processing operations to multiple clusters 1314A-1314N of processing cluster array 1312. Portions of processing cluster array 1312 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of clusters 1314A-1314N may be stored in buffers to allow intermediate data to be transmitted between clusters 1314A-1314N for further processing.

Processing cluster array 1312 can receive processing tasks to be executed via scheduler 1310, which receives commands defining processing tasks from front end 1308. Processing tasks can include indices of data to be processed, e.g., surface (patch) data, primitive data, vertex data, and/or pixel data, as well as state parameters and commands defining how data is to be processed (e.g., what program is to be executed). Scheduler 1310 may be configured to fetch indices corresponding to tasks or may receive indices from front end 1308. Front end 1308 can be configured to ensure processing cluster array 1312 is configured to a valid state before a workload specified by incoming command buffers (e.g., batch-buffers, push buffers, etc.) is initiated.

Each of one or more instances of parallel processing unit 1302 can couple with a parallel processor memory 1322 to perform any of the operations described above or elsewhere herein. Parallel processor memory 1322 can be accessed via memory crossbar 1316, which can receive memory requests from processing cluster array 1312 as well as I/O unit 1304. Memory crossbar 1316 can access parallel processor memory 1322 via a memory interface 1318. Memory interface 1318 can include multiple partition units (e.g., partition unit 1320A, partition unit 1320B, through partition unit 1320N) that can each couple to a portion (e.g., memory unit) of parallel processor memory 1322. A number of partition units 1320A-1320N can be configured to be equal to a number of memory units, such that a first partition unit 1320A has a corresponding first memory unit 1324A, a second partition unit 1320B has a corresponding memory unit 1324B, and an N-th partition unit 1320N has a corresponding N-th memory unit 1324N. A number of partition units 1320A-1320N may not be equal to a number of memory units.

Memory units 1324A-1324N can include various types of memory devices, including dynamic random access memory (DRAM) or graphics random access memory, such as, but not limited to, synchronous graphics random access memory (SGRAM), including graphics double data rate (GDDR) memory. Memory units 1324A-1324N may also include 3D stacked memory, including but not limited to high bandwidth memory (HBM), HBM2e, or HDM3. Render targets, such as, but not limited to, frame buffers or texture maps may be stored across memory units 1324A-1324N, allowing partition units 1320A-1320N to write portions of each render target in parallel to efficiently use available bandwidth of parallel processor memory 1322. A local instance of parallel processor memory 1322 may be excluded in favor of a unified memory design that utilizes system memory in conjunction with local cache memory.

Any one of clusters 1314A-1314N of processing cluster array 1312 can process data that will be written to any of memory units 1324A-1324N within parallel processor memory 1322. Memory crossbar 1316 can be configured to transfer an output of each cluster 1314A-1314N to any partition unit 1320A-1320N or to another cluster 1314A-1314N, which can perform additional processing operations on an output. Each cluster 1314A-1314N can communicate with memory interface 1318 through memory crossbar 1316 to read from or write to various external memory devices. Memory crossbar 1316 can have a connection to memory interface 1318 to communicate with I/O unit 1304, as well as a connection to a local instance of parallel processor memory 1322, enabling processing units within different processing clusters 1314A-1314N to communicate with system memory or other memory that is not local to parallel processing unit 1302. Memory crossbar 1316 can use virtual channels to separate traffic streams between clusters 1314A-1314N and partition units 1320A-1320N.

Multiple instances of parallel processing unit 1302 can be provided on a single add-in card, or multiple add-in cards can be interconnected. Different instances of parallel processing unit 1302 can be configured to interoperate even if different instances have different numbers of processing cores, different amounts of local parallel processor memory, and/or other configuration differences. For example, some instances of parallel processing unit 1302 can include higher precision floating point units relative to other instances. Systems incorporating one or more instances of parallel processing unit 1302 or parallel processor 1300 can be implemented in a variety of configurations and form factors, including but not limited to desktop, laptop, or handheld personal computers, servers, workstations, game consoles, and/or embedded systems.

FIG. 13A further includes a block diagram of a partition unit 1320, in accordance with at least one embodiment. Partition unit 1320 is an instance of one of partition units 1320A-1320N of FIG. 13A. Partition unit 1320 can include an L2 cache 1321, a frame buffer interface 1325, and a ROP 1326 (raster operations unit). L2 cache 1321 can be a read/write cache that is configured to perform load and store operations received from memory crossbar 1316 and ROP 1326. Read misses and urgent write-back requests can be output by L2 cache 1321 to frame buffer interface 1325 for processing. Updates can also be sent to a frame buffer via frame buffer interface 1325 for processing. Frame buffer interface 1325 may interface with one of memory units in parallel processor memory, such as, but not limited to, memory units 1324A-1324N (shown as 1324) of FIG. 13A (e.g., within parallel processor memory 1322).

ROP 1326 can be a processing unit that performs raster operations such as, but not limited to, stencil, z test, blending, etc. ROP 1326 can then output processed graphics data that is stored in graphics memory. ROP 1326 can include compression logic to compress depth or color data that is written to memory and decompress depth or color data that is read from memory. Compression logic can be lossless compression logic that makes use of one or more of multiple compression algorithms. A type of compression that is performed by ROP 1326 can vary based on statistical characteristics of data to be compressed. For example, delta color compression is performed on depth and color data on a per-tile basis.

ROP 1326 can be included within each processing cluster (e.g., cluster 1314A-1314N of FIG. 13A) instead of within partition unit 1320. Read and write requests for pixel data may be transmitted over memory crossbar 1316 instead of pixel fragment data. Processed graphics data may be displayed on a display routed for further processing by processor(s), or routed for further processing by one of processing entities within parallel processor 1300 of FIG. 13A.

In at least one embodiment, parallel processor 1300 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

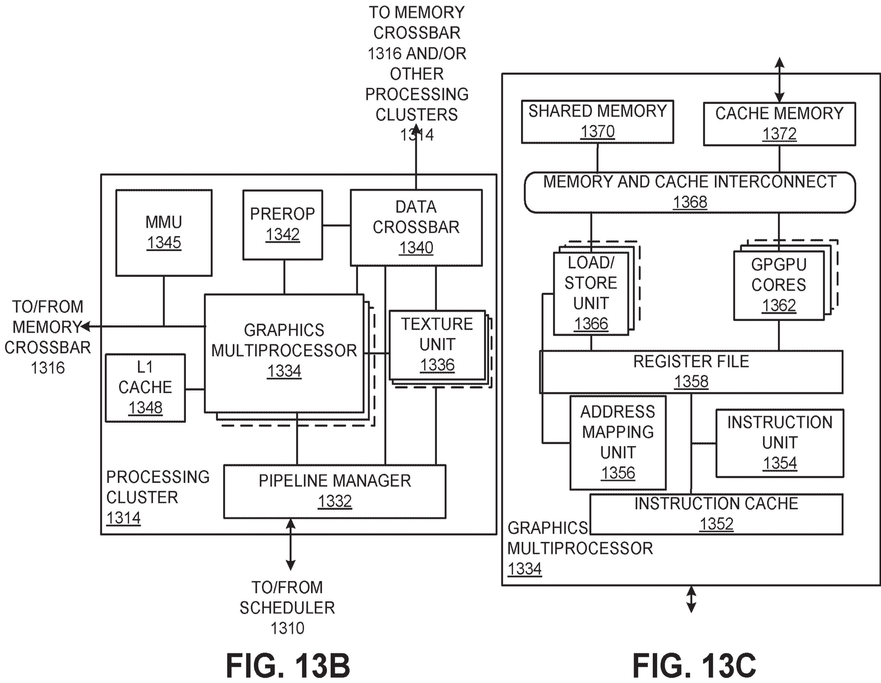

FIG. 13B includes a block diagram of a processing cluster 1314 within a parallel processing unit, in accordance with at least one embodiment. A processing cluster can be an instance of one of processing clusters 1314A-1314N of FIG. 13A that can be used to perform any of the operations described above or elsewhere herein. Processing cluster 1314 can be configured to execute many threads in parallel, where "thread" refers to an instance of a particular program executing on a particular set of input data. Single-instruction, multiple-data (SIMD) instruction issue techniques can be used to support parallel execution of a large number of threads without providing multiple independent instruction units. Single-instruction, multiple-thread (SIMT) techniques may be used to support parallel execution of a large number of generally synchronized threads, using a common instruction unit configured to issue instructions to a set of processing engines within each one of processing clusters.

Operation of processing cluster 1314 can be controlled via a pipeline manager 1332 that distributes processing tasks to SIMT parallel processors. Pipeline manager 1332 can receive instructions from scheduler 1310 of FIG. 13A and manages execution of those instructions via a graphics multiprocessor 1334 and/or a texture unit 1336. Graphics multiprocessor 1334 may be an example instance of a SIMT parallel processor. However, various types of SIMT parallel processors of differing architectures may be included within processing cluster 1314. One or more instances of graphics multiprocessor 1334 can be included within a processing cluster 1314. Graphics multiprocessor 1334 can process data and a data crossbar 1340 can be used to distribute processed data to one of multiple possible destinations, including other shader units. Pipeline manager 1332 can facilitate distribution of processed data by specifying destinations for processed data to be distributed via data crossbar 1340.

Each graphics multiprocessor 1334 within processing cluster 1314 can include an identical set of functional execution logic (e.g., arithmetic logic units, load-store units, etc.) to perform computations for any of the operations described above or elsewhere herein. Functional execution logic can be configured in a pipelined manner in which new instructions can be issued before previous instructions may be complete. Functional execution logic can support a variety of operations including integer and floating point arithmetic, comparison operations, Boolean operations, bit-shifting, and computation of various algebraic functions. Same functional-unit hardware can be leveraged to perform different operations and any combination of functional units may be present.

Instructions transmitted to processing cluster 1314 may constitute a thread, which can also be referred to as a warp, subgroup, wave, or a wavefront. A set of threads executing across a set of parallel processing engines can be referred to as a thread group. A thread group can execute a common program on different input data. Each thread within a thread group can be assigned to a different processing engine within a graphics multiprocessor 1334. A thread group may include fewer threads than a number of processing engines within graphics multiprocessor 1334. When a thread group includes fewer threads than a number of processing engines, one or more of processing engines may be idle during cycles in which that thread group is being processed. A thread group may also include more threads than a number of processing engines within graphics multiprocessor 1334. When a thread group includes more threads than number of processing engines within graphics multiprocessor 1334, processing can be performed over consecutive clock cycles. Multiple thread groups can be executed concurrently on a graphics multiprocessor 1334.

Graphics multiprocessor 1334 includes an internal cache memory to perform load and store operations, such as, but not limited to, any of the operations described above or elsewhere herein. Graphics multiprocessor 1334 can forego an internal cache and use a cache memory (e.g., L1 cache 1348) within processing cluster 1314. Each graphics multiprocessor 1334 may also have access to L2 caches within partition units (e.g., partition units 1320A-1320N of FIG. 13A) that can be shared among all processing clusters 1314 and may be used to transfer data between threads. Graphics multiprocessor 1334 may also access off-chip global memory, which can include one or more of local parallel processor memory and/or system memory. Any memory external to parallel processing unit 1302 may be used as global memory. Processing cluster 1314 can include multiple instances of graphics multiprocessor 1334 and can share common instructions and data, which may be stored in L1 cache 1348.

Each processing cluster 1314 may include an MMU 1345 (memory management unit) that can be configured to map virtual addresses into physical addresses. One or more instances of MMU 1345 may reside within memory interface 1318 of FIG. 13A. MMU 1345 can include a set of page table entries (PTEs) used to map a virtual address to a physical address of a tile and optionally a cache line index. MMU 1345 may include address translation lookaside buffers (TLB) or caches that may reside within graphics multiprocessor 1334 or L1 1348 cache or processing cluster 1314. A physical address can be processed to distribute surface data access locally to allow for efficient request interleaving among partition units. A cache line index may be used to determine whether a request for a cache line is a hit or miss.

A processing cluster 1314 may be configured such that each graphics multiprocessor 1334 is coupled to a texture unit 1336 for performing texture mapping operations, e.g., determining texture sample positions, reading texture data, and filtering texture data. Texture data can be read from an internal texture L1 cache (not shown) or from an L1 cache within graphics multiprocessor 1334 and can be fetched from an L2 cache, local parallel processor memory, or system memory, as needed. Each graphics multiprocessor 1334 can output processed tasks to data crossbar 1340 to provide processed task to another processing cluster 1314 for further processing or to store processed task in an L2 cache, local parallel processor memory, or system memory via memory crossbar 1316. A preROP 1342 (pre-raster operations unit) can be configured to receive data from graphics multiprocessor 1334, and direct data to ROP units, which may be located with partition units as described herein (e.g., partition units 1320A-1320N of FIG. 13A). PreROP 1342 unit can perform optimizations for color blending, organizing pixel color data, and performing address translations.

In at least one embodiment, processing cluster 1314 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

FIG. 13C shows a graphics multiprocessor 1334, in accordance with at least one embodiment, e.g., to perform any of the operations described above or elsewhere herein. Graphics multiprocessor 1334 can couple with pipeline manager 1332 of processing cluster 1314. Graphics multiprocessor 1334 can include an execution pipeline including but not limited to an instruction cache 1352 (that, e.g., can store instructions, such as, not limited to compiled API instructions), an instruction unit 1354, an address mapping unit 1356, a register file 1358, one or more general purpose graphics processing unit (GPGPU) cores 1362, and one or more load/store units 1366, where one or more load/store units 1366 can perform load/store operations to load/store instructions corresponding to performing an operation. GPGPU cores 1362 and load/store units 1366 can be coupled with cache memory 1372 and shared memory 1370 via a memory and cache interconnect 1368. GPGPU cores 1362 can be part of an SoC such as, but not limited to, part of integrated circuit 1200 in FIG. 12.

Instruction cache 1352 can receive a stream of instructions (e.g., to perform any of the operations described above or elsewhere herein) to execute from pipeline manager 1332. Instructions can be cached in instruction cache 1352 and dispatched for execution by an instruction unit 1354. Instruction unit 1354 can dispatch instructions as thread groups (e.g., warps, subgroups, wavefronts, or waves), with each thread of thread group assigned to a different execution unit within GPGPU cores 1362. An instruction can access any of a local, shared, or global address space by specifying an address within a unified address space. Address mapping unit 1356 can be used to translate addresses in a unified address space into a distinct memory address that can be accessed by load/store units 1366.

Register file 1358 can provide a set of registers for functional units of graphics multiprocessor 1334. Register file 1358 may provide temporary storage for operands connected to data paths of functional units (e.g., GPGPU cores 1362, load/store units 1366) of graphics multiprocessor 1334. Register file 1358 may be divided between each of functional units such that each functional unit is allocated a dedicated portion of register file 1358. Register file 1358 can be divided between different warps (which may be referred to as wavefronts, subgroups, and/or waves or threads) being executed by graphics multiprocessor 1334.

GPGPU cores 1362 can each include floating point units (FPUs) and/or integer arithmetic logic units (ALUs) that can be used to execute instructions of graphics multiprocessor 1334. GPGPU cores 1362 can be similar in architecture or can differ in architecture. A first portion of GPGPU cores 1362 can include a single precision FPU and an integer ALU while a second portion of GPGPU cores include a double precision FPU. FPUs can implement IEEE 754-2008 standard floating point arithmetic or enable variable precision floating point arithmetic. Graphics multiprocessor 1334 can additionally include one or more fixed function or special function units to perform specific functions such as, but not limited to, copy rectangle or pixel blending operations. One or more of GPGPU cores 1362 can also include fixed or special function logic.

GPGPU cores 1362 can include SIMD logic capable of performing a single instruction on multiple sets of data. GPGPU cores 1362 can physically execute SIMD4, SIMD8, and SIMD16 instructions and logically execute SIMD1, SIMD2, and SIMD32 instructions. SIMD instructions for GPGPU cores can be generated at compile time by a shader compiler or automatically generated when executing programs written and compiled for single program multiple data (SPMD) or SIMT architectures. Multiple threads of a program can be configured for an SIMT execution model that can be executed via a single SIMD instruction. For example, eight SIMT threads that perform same or similar operations can be executed in parallel via a single SIMD8 logic unit.

Memory and cache interconnect 1368 can include an interconnect network that connects each functional unit of graphics multiprocessor 1334 to register file 1358 and to shared memory 1370. Memory and cache interconnect 1368 may be a crossbar interconnect that allows load/store unit 1366 to implement load and store operations between shared memory 1370 and register file 1358. register file 1358 can operate at a same frequency as GPGPU cores 1362, thus data transfer between GPGPU cores 1362 and register file 1358 can have very low latency. Shared memory 1370 can be used to enable communication between threads that execute on functional units within graphics multiprocessor 1334. Cache memory 1372 can be used as a data cache for example, to cache texture data communicated between functional units and texture unit 1336. Shared memory 1370 can also be used as a program managed cache. Threads executing on GPGPU cores 1362 can programmatically store data within shared memory in addition to automatically cached data that is stored within cache memory 1372.

A parallel processor or GPGPU as described herein may be communicatively coupled to host/processor cores to accelerate graphics operations, machine-learning operations, pattern analysis operations, and various general purpose GPU (GPGPU) functions. A GPU may be communicatively coupled to host processor/cores over a bus or other interconnect (e.g., a highspeed interconnect such as, but not limited to, PCIe or NVLink). An SoC may include a parallel processor or GPGPU as described herein, where said parallel processor or said GPGPU is performed on said SoC. A GPU may be integrated on a package or chip as cores and communicatively coupled to cores over an internal processor bus/interconnect internal to a package or chip. Regardless a manner in which a GPU is connected, processor cores may allocate work to such GPU in a form of sequences of commands/instructions contained in a work descriptor. GPU then may use dedicated circuitry/logic for efficiently processing these commands/instructions to perform any of the operations described above or elsewhere herein.

In at least one embodiment, graphics multiprocessor 1334 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

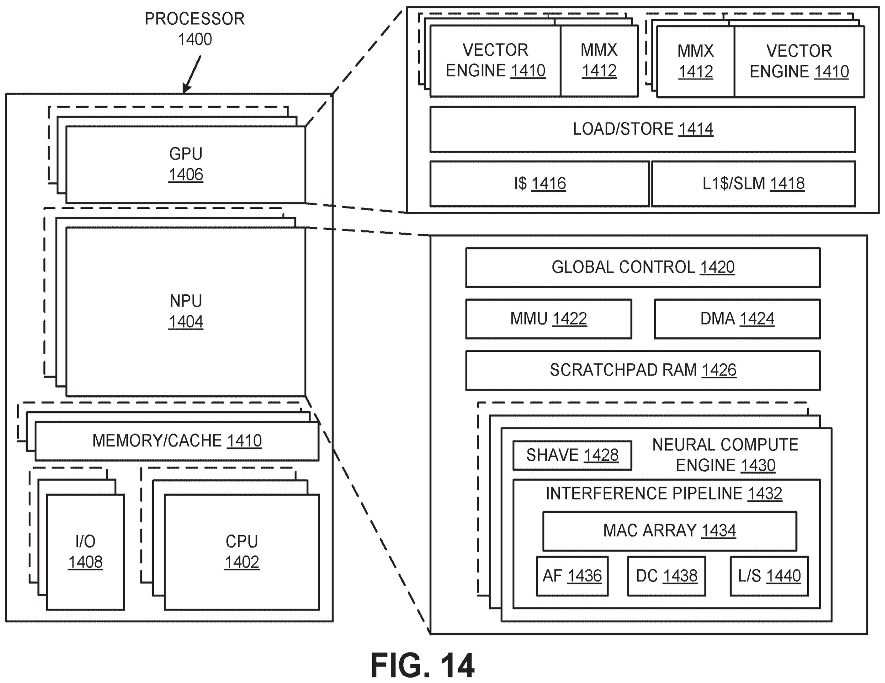

FIG. 14 shows a processor 1400, in accordance with at least one embodiment. Processor 1400 can include a processor with hybrid architecture (e.g., Lunar Lake or Meteor Lake) from Intel Corporation in Santa Clara, CA or another processor that shares at least some of the components described herein. Processor 1400 can include one or more Central Processing Unit(s) (CPU 1402), one or more Graphics Processing Unit(s) (GPU 1406), and/or one or more Neural Processing Unit(s) (NPU 1408) that can be, e.g., a dedicated AI accelerator that offloads artificial intelligence (AI) workloads from CPU 1402 and GPU 1406. Processor 1400 can use instructions that, if executed cause processor 1400 and/or any of its components to perform some or all of processes and techniques described elsewhere herein. Processor 1400 may include any number of memory and cache units 1410 to facilitate processing amongst different components of processor 1400. Memory and cache 1410 on processor 1400 may include one or more levels of cache (e.g., L1, L2, L3, and/or last-level cache) and high-bandwidth memory (e.g., HBM2e or HBM3) in any combination. With respect to processor 1400 and any of its components described above or elsewhere herein, one or more of APIs described herein can, for example, get compiled into instructions, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of processor 1400 (e.g., in cache and/or memory). A result of API(s) can then be stored in storage within or outside of processor 1400, including registers, DRAM, flash, SRAM, cache, or other memory. One or more of APIs described herein can include a call.

Processor 1400 can include compute engines as CPUs 1402 and can include any number of cores, such as, but not limited to, up to 16 cores/22 threads. Cores in CPU 1402 can include P-cores (Performance), E- cores (Efficient) & LP-E cores (Low-power Efficient). Performance-cores can be used for low latency single-threaded, compute-intensive workloads, while Efficient-cores can be used for multi-threaded, less compute-intensive workloads. Low-power Efficient cores can be used for scalable multithreaded performance and offloading background tasks. P-cores can be used for single & limited threading performance, whereas E- and LP-E cores can be used for multi-threaded throughput and power efficiency.

GPU 1406 can include any number of graphics engines, such as, but not limited to, Intel^{®} Arc^{™} graphics engines (Xe LPG) with 8 Xe cores (up to 128 Execution Units or EUs). As shown in FIG. 14, GPU 1406 can include vector engines 1410 and matrix engines 1412, that, for example, can run FP, INT, and matrix operation tasks all at the same time or separately or in batches. GPU 1406 can include a load/store unit 1414, as well as other memory, such as, but not limited to, an instruction cache (I$) 1416 and L1 cache/subsystem local memory (SLM) 1418 that can, e.g., store instructions to perform any of the operations described above or elsewhere herein.

NPU 1404 can include one or more Intel^{®} AI Boost built-in neural processing unit(s) (NPUs). NPU 1404 can be enumerated to a host processor as an integrated PCIe device. NPU 1404 can include one or more (e.g., two) Neural Compute Engine (NCE) tiles 1430. Each tile can be configured with any combination of, but not limited to, (e.g., 2000) Multiply Accumulate (MAC) Engines 1434, a Post Processing Engine (not shown), a AI DSP Processor (not shown), and memory (2 MB of dedicated SRAM) per tile as shown in FIG. 14. For general compute needs, Neural Compute Engines 1430 can include interference pipeline 1432, activation function (AF) 1436, data conversion 1438, load/store 1440, and Streaming Hybrid Architecture Vector Engines (SHAVE) 1428 for high performance parallel computing, which can include DMA (Direct Memory Access) engines 1424 to shuttle data between system memory DRAM (Dynamic Random Access Memory) 1426 and a software managed cache. Built-in device MMU (Memory Management Unit) 1422 plus IOMMU (Input-Output Memory Management Unit) (not shown) can support multiple simultaneous hardware contexts and provide security isolation between execution contexts as per MCDM (Microsoft Compute Driver Model) architecture. Processor 1400 can also include a media unit (not shown) that is included on or separately from XCDs or other components of processor 1400 to enable video playback and video processing of compressed or non-compressed data, such using HEVC, AV1, VP9 and AVC HW accelerated decode support and HEVC, VP9 and AVC HW accelerated encode support.

A Intel^{®} Thread Director, which includes firmware that is built into processor 1400, can prioritize and manage distribution of workloads, sending tasks to optimized cores. For example, Thread Director can tie P-cores, E-cores and/or LP-E cores (described above) together with task-scheduling capabilities and ability to send less-demanding tasks to E-cores or LP-E cores. Intel^{®} Deep Learning Boost (Intel^{®} DL Boost) (not shown) can provide built in AI acceleration for training and inference workloads, and may include VNNI (for CPU) and DP4a (for GPU) instruction set support. This instruction set may be optimized with OpenVINO^{™} Toolkit and oneAPI to accelerate INT8 inferencing. A software stack, e.g., as described elsewhere herein, can be used to enable AI inference using OpenVINO^{™} toolkit. Processor 1400 can be configured to execute an application program, such as, but not limited to, a CUDA program.

In at least one embodiment, processor 1400 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

Processor 1400 can alternatively include a processor based on AI Engine Direct architecture from Qualcomm Corporation in Santa Clara, CA or another processor that shares at least some of the components described herein. that may include any number of NPUs, GPUs, CPUs and other related components, such as, but not limited to, NPU 1404 as a Hexagon NPU, GPU 1406 as a Adreno GPU, CPU 1402 as a Kryo or Qualcomm Oryon CPU, as well as a Qualcomm Sensing Hub (not shown) and a memory subsystem 1410, in any combination. Hexagon NPU 1404 can include a power rail a micro-tile inferencing unit, a hardware acceleration unit, a tensor unit, a scalar unit, and a vector unit (all not shown), which can have dedicated memory or share memory (e.g., cache or memory, such HBM3) for, e.g., storing instructions to perform any of the operations described above or elsewhere herein. Adreno GPU 1406 can provide graphics and parallel processing for AI in formats, such as, but not limited to, 32-bit floating point (FP32), 16-bit floating point (FP16), and 8-bit integer (INT8). Kryo or Qualcomm Oryon CPUs 1402 can perform AI workloads, and can handle contextualization for pervasive generative AI applications. CPU 1402 can also include an instruction fetch unit, a rename and retire unit, a memory management unit, a vector execution unit, an integer execution unit, and a load and store unit for processing and instruction management. With respect to processor 1400 and any of its components described above or elsewhere herein, one or more of APIs described herein can, for example, get compiled into instructions, which may be fetched by instruction fetch unit, decoded by a processor decoder or equivalents, scheduled (e.g., in order or out of order) for execution by a scheduler or equivalents, executed by execution logic or equivalents, reordered, and then retired by rename and retire unit. API(s) (and/or compiled instructions including API(s)) can be stored in any storage outside or inside of processor 1400 (e.g., in cache and/or memory). Any number of CPU cores 1402 may be included in any number of CPU cluster(s) that can be coupled to memory and/or cache, such as, but not limited to a shared L2 cache. Memory can be separate or shared, e.g., CPU clusters of CPU cores 1402 can couple to memory subsystem 1410 that can include fabric, system level cache and any number of memory management units that can, for example, read and write memory (e.g., DRAM). Qualcomm Sensing Hub (not shown) includes micro NPUs, a power rail, and traditional sensors (a gyrometer, accelerometer, even a barometer) with voice and data streams. Memory subsystem 1410 can include memory and cache on processor 1400, which may include one or more levels of cache (e.g., L1, L2, L3, and/or last-level cache) and high-bandwidth memory (e.g., HBM2e or HBM3) in any combination, e.g., for storing information and/or instructions to perform any of the operations described above or elsewhere herein. All or some of memory and/or cache in memory subsystem 1410 can be shared or used individually by any one or combinations of components (e.g., GPU 1406, NPU 1404, and CPU 1402) on processor 1400.

Qualcomm AI Engine 1400 may be programmed and controlled with an a software stack to perform some or all of the operations described herein, and include, e.g., a Qualcomm^{®} Neural Processing SDK for inferencing with versions for Android, Linux, and Windows. Developer libraries and services support programming languages, virtual platforms, and compilers. At a lower level of software stack, system software includes basic real-time operating system (RTOS), system interfaces, and drivers. Software stack supports different operating systems, including Android, Windows, Linux, and QNX, and deployment and monitoring infrastructure like Prometheus, Kubernetes, and Docker. For direct cross-platform access to GPU 1406, OpenCL and DirectML may be supported. For CPU 1402, a LLVM compiler infrastructure optimizations enable accelerated and efficient AI inference. With respect to Qualcomm AI Engine 1400 and any of its components described above or elsewhere herein, one or more of APIs described herein can, for example, get compiled into instructions, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of Qualcomm AI Engine 1400 (e.g., in cache and/or memory). A result of API(s) can then be stored in storage within or outside of Qualcomm AI Engine 1400, including registers, DRAM, flash, SRAM, cache, or other memory.

In at least one embodiment, processor 1400 or Qualcomm AI Engine 1400 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

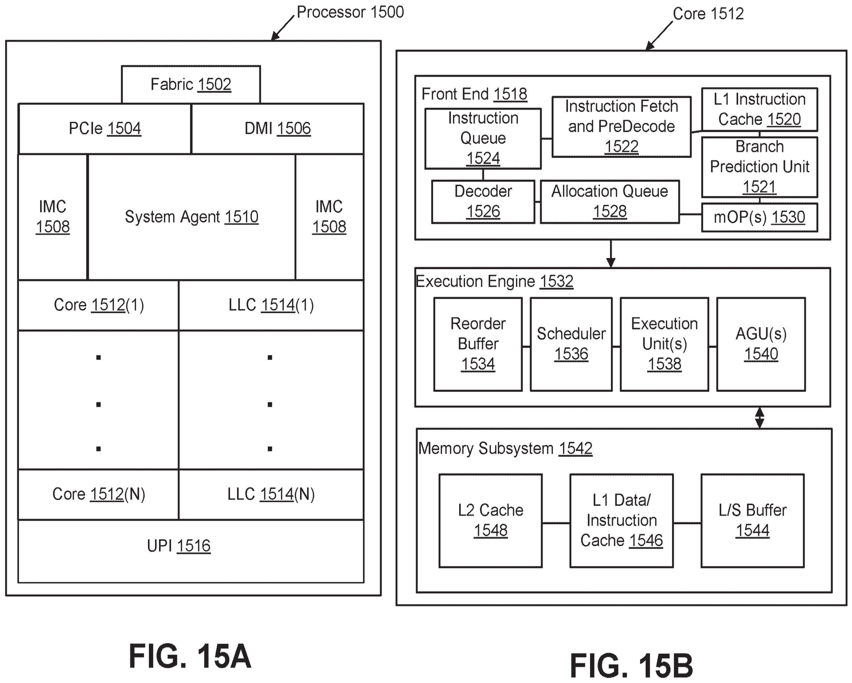

FIG. 15A illustrates a processor 1500, in accordance with at least one embodiment. Processor 1500 can include an processor with scalable family from Intel Corporation in Santa Clara, CA or another processor that shares at least some of the components described herein. Processor 1500 can include one or more cores 1512(1)-1512(N), where N is any integer greater than 1 that can perform the operations described elsewhere herein. Cores 1512(1)-1512(N) can be interlinked together using ring and/or mesh interconnects. With a mesh interconnects architecture, an array of vertical and horizontal communication paths may allow traversal from one core to another 1512(1)-1512(N) through a shortest path (hop on vertical path to correct row, and hop across horizontal path to correct column). For mesh interconnects, a die can house cores 1512(1)-1512(N) and can include a grid of converged mesh stops (CMS) that may be associated (e.g., 1:1) with cores 1512(1)-1512(N). Each core can be associated with one lower level cache (LLC) slice 1514(1)-1514(N), or cores 1512(1)-1512(N) can share cache, e.g., lower level cache. LLCs 1514(1)-1514(N) can be inclusive by incorporating blocks in higher level cache (e.g., L2 cache) or non-inclusive (having blocks that may be not present in higher level cache). Each core and LLC slice can include a Caching and Home Agent (CHA) (not shown) that can maintain cache coherency by providing scalability of resources across mesh interconnects for Intel^{®} Ultra Path Interconnect (Intel^{®} UPI 1516) cache coherency functionality. UPI 1516 can provide a coherent interconnect for scalable systems and can allow for multiple processors to share a single shared address space through links, such as, but not limited to, two or three UPI links per processor.

Processor 1500 can also include System Agent 1510 that can house and/or perform various functionalities, such as, but not limited to, memory management, display functions, and/or input/output (I/O) functions. For example, processor 1500 can include one or more integrated memory controller(s) (IMC) 1508. IMC 1508 can control and manage memory, such as, but not limited to, different memory types e.g., DDR ram, like DDR4 or others described elsewhere herein. System Agent 1510 can include a display controller (not shown) to support display(s). System Agent 1510 can also incorporate PCIe 1504 (e.g., up to 20 lanes of PCIe), e.g., that can connect with an external dedicated graphics hookup over DMI bus (e.g., Intel's DMI 3.0 bus) 1506. System Agent 1510 can include an Image Processing Unit (IPU) (not shown) which incorporates an image signal processor (ISP) on-die. Fabric 1502 can provide scalability for connecting to other nodes (e.g., processors, such as processor 1500), and can, for example, be used with Cornelis Networks, an element of Intel^{®} Scalable System Framework, that delivers the performance for high performance computing (HPC) workloads and the ability to scale to tens of thousands of nodes.

FIG. 15B illustrates components within core 1512, in accordance with at least one embodiment. Core 1512 can include front-end 1518, back-end or execution engine 1532, and memory subsystem 1542. Front-end 1518 can provide execution engine 1532 with operations (e.g., operations described elsewhere herein) by decoding instructions stored in memory. For example, front-end 1518 can include a micro-operations (µOps) cache path and/or a legacy path, along with branch prediction unit 1521 that can determine paths instructions. A legacy path for instructions may include fetching variable-length (e.g., x86) instructions from L1 instruction cache 1520 with instruction fetch and predecode 1522, queuing the instructions in instruction queue 1524, and decoding instructions using decoder 1526 into µOps that can be provided to allocation queue 1528. Alternatively, a µOPs cache path may include a cache containing already decoded µOps (µOps 1530) that can be sent to allocation queue 1528. Allocation queue 1528 can perform as an interface between front-end 1518 and execution engine 1532, and can provide instructions to execution engine 1532. One or more of API(s) described herein can, for example, get compiled into instructions that can be stored, processed, and executed by front-end 1518, execution engine 1532, and stored in memory subsystem 1542.

Execution engine 1532 can receive micro-operations into reorder buffer 1534, which can register allocation, rename, and retire µOPs. From reorder buffer, µOPs can be sent to scheduler 1536 that can be connected one or more different execution units 1538, which can be connected to address generation unit (AGU) 1540. Execution units 1538 can perform, e.g., basic arithmetic logic unit (ALU) operations, multiplication, division, and/or more complex operations, such as, but not limited to, various vector operations. Scheduler 1536 may manage queuing µOPs for one or more of execution units 1538 depending, e.g., on operations needed to be performed.

Memory subsystem 1542 can process load and store requests as well as ordering operations. For example, µOPs may relate to memory access (e.g. load and store), and those can be sent on dedicated scheduler ports that can perform those memory operations. Store and load operations, for example, can be sent to load and store buffer(s) 1544. Memory subsystem 1542 can also include shared or separate L1 data and instruction cache 1546, as well as L2 cache 1548 that can be used and shared by L1 data and instruction cache 1546. As described above for FIG. 15A, each core 1512 can be connected to a slice of a third level of cache (e.g., LLC 1514) that can be shared by all core 1512.

In at least one embodiment, processor 1500 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

FIG. 16 illustrates an AI accelerator 1600, in accordance with at least one embodiment. Processor 1600 can include a processor with AI accelerator architecture from Intel Corporation in Santa Clara, CA or another processor that shares at least some of the components described herein. AI accelerator 1600 may use instructions that, if executed by AI accelerator 1600, cause AI accelerator 1600 to perform some or all of processes and techniques described elsewhere herein. For example, with respect to AI accelerator 1600 and any of its components described above or elsewhere herein, one or more of APIs described herein can, for example, get compiled into instructions, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of AI accelerator 1600 (e.g., in cache and/or memory). A result of API(s) can then be stored in storage within or outside of AI accelerator 1600, including registers, DRAM, flash, SRAM, cache, or other memory. AI accelerator 1600 may include one or more compute dies that can include homogeneous or heterogeneous processors. Compute dies may include one or more central processing units (CPU), one or more graphics processing units (GPU), or combinations of both.

In at least one embodiment, compute dies may include compute engines to perform AI computations. In at least one embodiment, AI accelerator 1600 compute dies may be split into any number of (e.g., four) clusters that may be referred to as a DCORE (Deep Learning Core) 1606 and contain any number of Matrix Multiplication Engines (MMEs) 1608, Tensor Processor Cores (TPCs) 1610, memory management unit 1612, and L2 Cache 1614, in any combination. MME(s) 1608 can perform operations that use Matrix Multiplication, like fully connected layers, convolutions and batched-General Matrix Multiplications (GEMMs). MMEs 1608 may be equipped with Multiply-Accumulate Units (MACs) (not shown) that, for example, may perform General Matrix Multiplication (GEMM) operations, such as, but not limited to, an AxB multiplication that involves generating tensor C[NxM] from two input tensors, A[NxK] and B[KxN]. MME(s) 1608 may be programmed with array dimensions, locations, data types, and various execution operands. MME(s) 1608 can retrieve tensors A and B from memory, pulling them into its streaming buffers for matrix multiplication to be performed in parallel by MACs. MME(s) 1608 may push tensor C back to memory upon completion. TPC(s) 1610 may include any number of scalar units for performing scalar operations, any number of vector units for performing vector operations, any number of register files or local memory units (e.g., a vector local memory), and load and store components for instructions, which can be coupled to memory or cache (e.g., HBM, L3 cache and/or L2 cache) (all not shown). TPCs can support different types of parallel processing, e.g., Very Long Instruction Word (VLIW) Single-Instruction Multiple-Data (SIMD) that supports data types, such as, but not limited to, FP32, BF16, FP16 & FP8 (both E4M3 and E5M2), UINT32, INT32, UINT16, INT16, UINT8 and INT8 datatypes. Any number of compute dies may be connected through an interconnect. An interconnect that can connect compute dies can be over an interposer bridge that, e.g., is transparent to software.

Memory on AI Accelerator 1600 may include one or more levels of cache (e.g., L1, L2, L3, and/or last-level cache) and high-bandwidth memory (e.g., HBM2e or HBM3) in any combination. Memory and/or cache systems can be unified or separate. Compute dies of AI accelerator 1600 may include on-die memory that includes one or more levels (e.g., two-levels) of cache. On-die SRAM or other memory described elsewhere herein can be used as a uniformly accessible last-level cache (L3) or split to slices of L2 cache that may be accessible to groups of MMEs 1608 and TPCs 1610. Using on-die memory as L2 or L3 cache can be fully configurable by software, which dynamically may decide per I/O tensor its optimal cache allocation. AI Accelerator 1600 may include one or more Memory Management Units (MMUs) 1622 for managing memory, such as allowing AI accelerator 1600 memory subsystem to operate in a virtual space when accessing VRAM.

AI accelerator 1600 may include a communications port (e.g., a PCIe Gen5 X16 port) 1602 for communicating with a host and Scheduling and Synchronization Unit 1604. AI accelerator 1600 may include Media Unit 1616 that may include any number or combinations of Media Decoder Engines (DECs) 1620 and Rotator Engines (ROT) 1618. AI accelerator 1600 may include a network unit 1624 that may include any number or combinations of network ports 1626 and accompanied RDMA Engine(s) 1628, L2 Cache, and memory (e.g., HBM2e or HBM3) stacks. AI accelerator 1600 can incorporate a programmable Control Path entity (not shown) to manage parallel and efficient execution of various engines. Control Path can include Submission Queues (SQs) that may be issued by runtime system, Completion Queues (CQs) that may be used for job completion reporting, a Programmable Scheduling Mechanism that may be utilized for task scheduling, a Programmable Hardware Synchronization Mechanism or 'Sync Manager (SM)' that may be used for hardware synchronization, a Programmable Interrupt Service Mechanism or 'Interrupt Manager (INTR)' that can enable passing of asynchronous events to drivers.

AI accelerator 1600 may include media decoding units that support Video Formats, such as, but not limited to, HEVC, Progressive H.264, SVC base layer, MVC, VP9, JPEG, Progressive JPEG. AI accelerator 1600 may support post processing of decoded media streams, such as, but not limited to, image down-scaling (resizing an image), vertical and horizontal scaling at different scaling ratios, Image up-scaling, Image cropping, bilinear scaling, and Lancos scaling. AI accelerator 1600 may implement two post processing channels per decoder unit, one with scalar (up and down) and one just to output the original image. AI accelerator 1600 may include a hardware rotator engine that performs the following transformations of an input image: 2D rotation, 3D rotation, Projection, distorting and undistorting images, resampling input data at user-defined coordinates, and rescaling.

RDMA 1628 over Converged Ethernet on AI accelerator 1600 may enable scaling from a single node (i.e., a single AI Accelerator 1600 to hundreds or thousands of nodes or AI Accelerators 1600). NW Subsystem 1624 can include an Intel^{®} Gaudi^{®} Communication Library (IGCL), a master conductor that orchestrates data movement, and a programable scheduling mechanism that can enable smooth activation of engines while maintaining task dependencies. A accelerator networking sub-system can include Gigabit Ethernet NIC ports 1626, a Layer2 MAC (not shown), and RDMA Engines 1628. AI Accelerator 1600 can include Aggregation Engines for performing summing activities. All engines in processor 1600 can operate in parallel, e.g., MME(s) 1608, TPC(s) 1610 and NIC(s) 1626 can all work at the same time. There can be dependency between operations running on different engines, e.g., output of one engine can be used as input of another engine, and/or MME, TPC and NIC can be scheduled to run in parallel. When one engine has completed its executing operation, another engine can be scheduled to start working on the next operation (immediately upon readiness of its inputs).

AI Accelerator 1600 can be operated and controlled using software layer 1628 that may include low-level components, such as, but not limited to, a graph compiler, an automatic kernel fuser and a library of precompiled kernels, as well as integration to AI ecosystems, such as, but not limited to, PyTorch, DeepSpeed, Hugging Face, vLLM, Ray and more, or as described elsewhere herein with respect to software and programming platforms. Software layer 1628 may include implementations of algorithms, such as, but not limited to, Paged Attention, Flash Attention and more. Software layer 1628 may generate optimized binary code that implements a given model topology, such as, but not limited to, performing operator fusion, data layout management, parallelization, pipelining and memory management, and graph-level optimizations.

In at least one embodiment, AI accelerator 1600 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

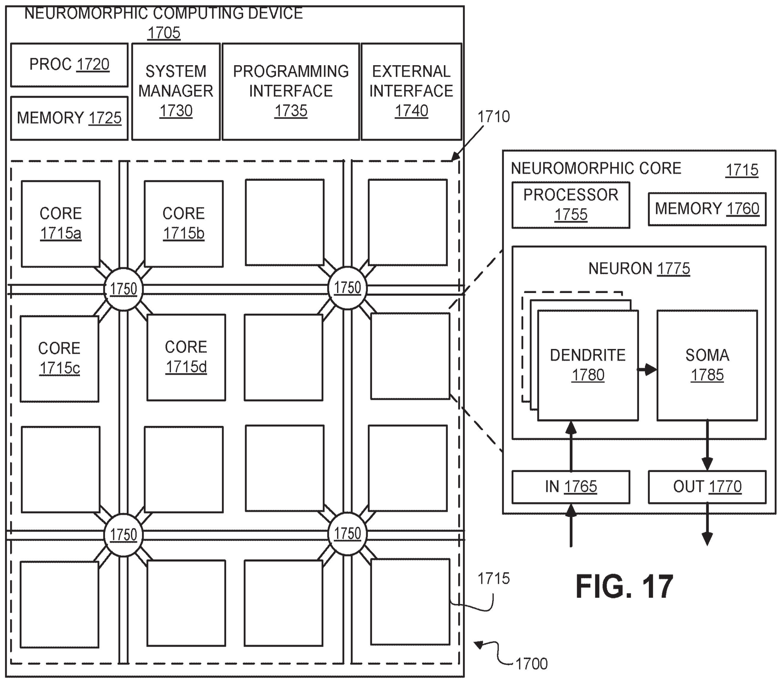

A neuromorphic computing system is described that adopts a multicore architecture where each core houses computing elements including neurons, synapses with on-chip learning capability, and local memory to store synaptic weights and routing tables. FIG. 17 is a simplified block diagram 1700 illustrating an example of at least a portion of such a neuromorphic computing device 1705, in accordance with at least one embodiment. Neuromorphic computing device 1705 can include a neuromorphic processor from Intel Corporation in Santa Clara, CA or another processor that shares at least some of the components described herein. As shown in this example, a device 1705 may be provided with a network 1710 of multiple neural network cores interconnected by an on-device network such that multiple different connections may be potentially defined between cores. For instance, a network 1710 of spiking neural network cores may be provided in device 1705 and may each communicate via short packetized spike messages sent from core to core over network channels. Each core (e.g., 1715) may possess processing and memory resources and logic to implement some number of primitive nonlinear temporal computing elements, such as, but not limited to, multiple (e.g., 1000+) distinct artificial neurons (referred to herein as "neurons"). For instance, each core may be capable of concurrently implementing multiple neurons such that neuromorphic cores may implement many multiples of neurons using device 1705. With respect to neuromorphic computing device 1705 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of neuromorphic computing device 1705 (e.g., in cache and/or memory). A result of API(s) can then be stored in storage within or outside of neuromorphic computing device 1705, including registers, DRAM, flash, SRAM, cache, or other memory equivalents.

Continuing with the example of FIG. 17, neuromorphic computing device 1705 may additionally include processor 1720 and system memory 1725 to implement one or more components to manage and provide functionality of neuromorphic computing device 1705. For instance, system manager 1730 may be provided to manage global attributes and operations of neuromorphic computing device 1705 (e.g., attributes affecting network of cores 1710, multiple cores in network 1710, interconnections of neuromorphic computing device 1705 with other devices, manage access to global system memory 1725, among other potential examples). In one example, system manager 1730 may manage the definition and provisioning of a specific routing tables to various routers in network 1710, orchestration of a network definition and attributes (e.g., weights, decay rates, etc.) to be applied in network 1710, core synchronization and time multiplexing management, routing of inputs to appropriate cores, among other potential functions.

As another example, neuromorphic computing device 1705 may additionally include programming interface 1735 through which a user or system may specify a neural network definition to be applied (e.g., through a routing table and individual neuron properties) and implemented by mesh 1710 of neuromorphic cores. A software-based programming tool may be provided with or separate from neuromorphic computing device 1705 through which a user may provide a definition for a particular neural network to be implemented using network 1710 of neuromorphic cores. Programming interface 1735 may take an input of a programmer to then generate corresponding routing tables and populate local memory of individual neuromorphic cores (e.g., 1715) with specified parameters to implement a corresponding, customized network of artificial neurons implemented by neuromorphic cores 1715.

In some cases, neuromorphic computing device 1705 may advantageously interface with and interoperate with other devices, including general purpose computing devices, to realize certain applications and use cases. Accordingly, external interface logic 1740 may be provided in some cases to communicate (e.g., over one or more defined communication protocols) with one or more other devices. An external interface 1740 may be utilized to accept input data from another device or external memory controller acting as a source of input data. External interface 1740 may be additionally or alternatively utilized to allow results or output of computations of a neural network implemented using neuromorphic computing device 1705 to be provided to another device (e.g., another general purpose processor implementing a machine learning algorithm) to realize additional applications and enhancements, among other examples.

As shown in FIG. 17, network 1710 of multiple neural network cores interconnected by an on-device network is shown illustrating a portion of a network fabric interconnecting multiple neuromorphic cores (e.g., 1715 a-d). For instance, a number of neuromorphic cores (e.g., 1715 a-d) may be provided in a mesh, with each core being interconnected by a network including a number of routers (e.g., 1750). In one implementation, each neuromorphic core (e.g., 1715 a-d) may be connected to a single one of routers (e.g., 1750) and routers may be connected to at least one other router (as shown at 1710 in FIG. 17). As an example, in one particular implementation, four neuromorphic cores (e.g., 1715 a-d) may be connected to a single router (e.g., 1750) and each of routers 1750 may be connected to two or more other routers to form a manycore mesh, allowing each neuromorphic core to interconnect with each other neuromorphic core in neuromorphic computing device 1705. Moreover, as each neuromorphic core may be configured to implement multiple distinct neurons, router network of neuromorphic computing device 1705 may similarly enable connections, or artificial synapses (or, simply, "synapses"), to be defined between any two of potentially many (e.g., 30,000+) neurons defined using network of neuromorphic cores 1710 provided in neuromorphic computing device 1705.

FIG. 17 shows a block diagram illustrating internal components of one example implementation of neuromorphic core 1715. In one example, a single neuromorphic core may implement some number of neurons (e.g. 1024) that share architectural resources of neuromorphic core 1715 in a time-multiplexed manner. In one example, each neuromorphic core 1715 may include processor block 1755 capable of performing arithmetic functions and routing in connection with the realization of a digitally implemented artificial neuron, such as, but not limited to, explained herein. Each neuromorphic core 1715 may additionally provide local memory in which a routing table may be stored and accessed for a neural network, accumulated potential of each soma of each neuron implemented using core 1715 may be tracked, parameters of each neuron implemented by core may 1715 be recorded, among other data and usage. Components, or architectural resources, of neuromorphic core 1715 may further include input interface 1765 to accept input spike messages generated by other neurons on other neuromorphic cores and output interface 1770 to send spike messages to other neuromorphic cores over mesh network 1710. In some instances, routing logic for neuromorphic core 1715 may be at least partially implemented using output interface 1770. Further, in some cases, core (e.g., 1715) may implement multiple neurons within an example SNN and some of these neurons may be interconnected. In such instances, spike messages sent between neurons hosted on core 1715 may forego communication over routing fabric of neuromorphic computing device 1705 and may instead by managed locally at particular neuromorphic core 1715.

Each neuromorphic core may additionally include logic to implement, for each neuron 1775, artificial dendrite 1780 and artificial soma 1785 (referred to herein, simply, as "dendrite" and "soma" respectively). Dendrite 1780 may be a hardware-implemented process that receives spikes from network 1710. Soma 1785 may be a hardware-implemented process that receives each dendrite's accumulated neurotransmitter amounts for the current time and evolves each dendrite and soma's potential state to generate outgoing spike messages at the appropriate times. Dendrite 1780 may be defined for each connection receiving inputs from another source (e.g., another neuron). In one implementation, dendrite process 1780 may receive and handle spike messages as they serially arrive in time-multiplexed fashion from network 1710. As spikes are received, neuron's activation (tracked using soma 1785 (and local memory 1760)) may increase. When neuron's activation exceeds a threshold set for neuron 1775, neuron 1775 may generate a spike message that is propagated to a fixed set of fanout neurons via output interface 1770. Network distributes spike messages to all destination neurons, and in response those neurons, in turn, may update their activations in a transient, time-dependent manner, and so on, potentially causing the activation of some of these destination neurons to also surpass corresponding thresholds and trigger further spike messages, as in real biological neural networks.

As noted above, neuromorphic computing device 1705 may reliably implement a spike-based model of neural computation. Such models may also be referred to as Spiking Neural Networks (SNNs). In addition to neuronal and synaptic state, SNNs also incorporate the concept of time. For instance, in an SNN, communication occurs over event-driven action potentials, or spikes, that convey no explicit information other than the spike time as well as an implicit source and destination neuron pair corresponding to the transmission of the spike. Computation occurs in each neuron as a result of the dynamic, nonlinear integration of weighted spike input. In some implementations, recurrence and dynamic feedback may be incorporated within an SNN computational model. Further, a variety of network connectivity models may be adopted to model various real world networks or relationships, including fully connected (all-to-all) networks, feed-forward trees, fully random projections, "small world" networks, among other examples. A homogeneous, two-dimensional network of neuromorphic cores, such as, but not limited to, shown in the example of FIG. 17 may advantageously supports all of these network models. As some or all cores of neuromorphic computing device 1705 may be connected, some or all neurons defined in cores may be therefore also fully connected through some number of router hops. Neuromorphic computing device 1705 may further include fully configurable routing tables to define a variety of different neural networks by allowing each core's neurons to distribute their spikes to any number of cores in mesh 1710 to realize fully arbitrary connectivity graphs.

In an improved implementation of a system capable of supporting SNNs, such as, but not limited to, a very large scale integration (VLSI) hardware device illustrated in the example of FIG. 17, high speed and reliable circuits may be provided to implement SNNs to model information processing algorithms as employed by a brain, but in a more programmable manner. For instance, while a biological brain can only implement a specific set of defined behaviors, as conditioned by years of development, a neuromorphic processor device may provide a capability to rapidly reprogram all neural parameters. Accordingly, a single neuromorphic processor may be utilized to realize a broader range of behaviors than those provided by a single slice of biological brain tissue. This distinction may be realized by adopting a neuromorphic processor with neuromorphic design realizations that differ markedly from those of neural circuits found in nature.

As an example, a neuromorphic processor may utilize time-multiplexed computation in both a spike communication network and neuron machinery of neuromorphic computing device 1705 to implement SNNs. Accordingly, physical circuitry of neuromorphic computing device 1705 may be shared among many neurons to realize higher neuron density. With time multiplexing, a network can connect N cores with O(N) total wiring length, whereas discrete point-to-point wiring would scale as O(N²), realizing a significant reduction in wiring resources to accommodate planar and non-plastic VLSI wiring technologies, among other examples. In neuromorphic cores, time multiplexing may be implemented through dense memory allocation, for instance, using Static Random Access Memory (SRAM), with shared buses, address decoding logic, and other multiplexed logic elements. State of each neuron may be stored in processor's memory, with data describing each neuron state including state of each neuron's collective synapses, all currents and voltages over its membrane, among other example information (such as, but not limited to, configuration and other information).

A neuromorphic processor may adopt a "digital" implementation that diverts from other processors adopting more "analog" or "isomorphic" neuromorphic approaches. For instance, a digital implementation may implement integration of synaptic current using digital adder and multiplier circuits, as opposed to analog isomorphic neuromorphic approaches that accumulate charge on capacitors in an electrically analogous manner to how neurons accumulate synaptic charge on their lipid membranes. Accumulated synaptic charge may be stored, for instance, for each neuron in local memory of a corresponding core. Further, at an architectural level of an example digital neuromorphic processor, reliable and deterministic operation may be realized by synchronizing time across a network of cores such that any two executions of a design, given same initial conditions and configuration, will produce identical results. Asynchrony may be preserved at a circuit level to allow individual cores to operate as fast and freely as possible, while maintaining determinism at a system level. Accordingly, a notion of time as a temporal variable may be abstracted away in neural computations, separating it from a "wall clock" time that the hardware utilized to perform the computation. Accordingly, in some implementation, a time synchronization mechanism may be provided that globally synchronizes neuromorphic cores at discrete time intervals. A synchronization mechanism allows neural computation to complete as fast as circuitry allows, with a divergence between run time and biological time that a neuromorphic system models.

In operation, neuromorphic computing device 1705 may begin in an idle state with all neuromorphic cores inactive. As each core asynchronously cycles through its neurons, it generates spike messages that a mesh interconnect routes to appropriate destination cores containing all destination neurons. Implementation of multiple neurons on a single neuromorphic core may be time-multiplexed, and a time step may be defined in which all spikes involving multiple neurons may be processed and considered using shared resources of a corresponding core. As each core finishes servicing its neurons for a respective time step, cores may, in some implementations, communicate (e.g., using a handshake) with neighboring cores using synchronization messages to flush a mesh of all spike messages in flight, allowing cores to safely determine that all spikes have been serviced for a time step. At that point all cores may be considered synchronized, allowing them to advance their time step and return to an initial state and begin a next time step.

Given this context, and as introduced above, a device (e.g., 1705) implementing a mesh 1710 of interconnected neuromorphic cores may be provided, with core 1715 implementing potentially multiple artificial neurons capable of being interconnected to implement an SNN. Each neuromorphic core (e.g., 1715) may provide two loosely coupled asynchronous processes: an input dendrite process (e.g., 1780) that receives spikes from network 1710 and applies them to an appropriate destination dendrite compartments at the appropriate future times, and output soma process (e.g., 1785) that receives each dendrite compartment's accumulated neurotransmitter amounts for the current time and evolves each dendrite and soma's membrane potential state, generating outgoing spike messages at appropriate times (e.g., when a threshold potential of a soma has been reached). Note that, from a biological perspective, dendrite and soma names used here only approximate a role of these functions and should not be interpreted too literally.

In at least one embodiment, neuromorphic computing device 1705 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

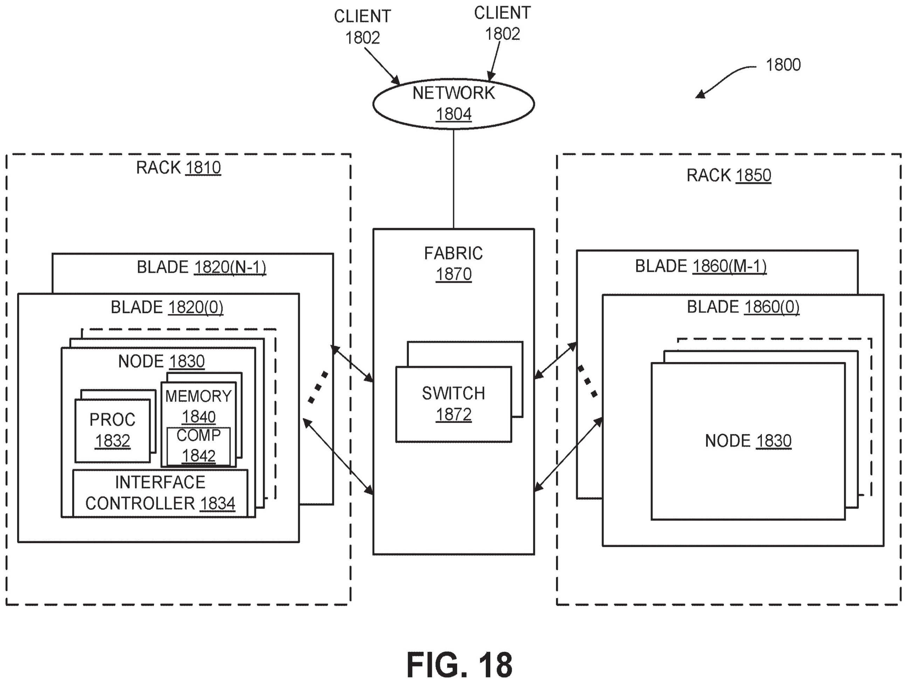

FIG. 18 is a block diagram of an embodiment of a multi-node network in which remote memory computation can be implemented, in accordance with any embodiment. System 1800 may represent a network of nodes described herein that can, e.g., be used to perform some or all of the operations described herein. System 1800 can represent a data center. System 1800 may represent a server farm. System 1800 may represent a data cloud or a processing cloud. System 1800 can represent a supercomputer. System 18 may include tens, hundreds, or thousands of nodes. Nodes of system 1800 may include processors, such as, but not limited to, central processing units (CPUs), graphics processing units (GPUs), or any combination of processors described herein, such as, but not limited to, other processors in FIGS. 12-24. With respect to any of processors in system 1800 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of a processor or node (e.g., in cache and/or memory). A result of API(s) can then be stored in storage within or outside of a processor or node, including registers, DRAM, flash, SRAM, cache, or other memory equivalents. System 1800 may include over nine thousand nodes, with each node including two Intel Xeon Max processors, six Intel Max series GPUs and a unified memory architecture, such as, but not limited to, that used in Intel Aurora Supercomputer from Intel Corporation in Santa Clara, CA or another supercomputer that shares at least some of the components described herein.

One or more clients 1802 make requests over network 1804 to system 1800. Network 1804 represents one or more local networks, or wide area networks, or a combination. Clients 1802 can be human or machine clients, which generate requests for execution of operations by system 1800. System 1800 executes applications or data computation tasks requested by clients 1802.

System 1800 can include one or more racks, which represent structural and interconnect resources to house and interconnect multiple computation nodes. Rack 1810 can include multiple nodes 1830. Rack 1810 may host multiple blade components 1820(0) to 1820(N-1), where N is an integer greater than or equal to 2. Hosting can refer to providing power, structural or mechanical support, and interconnection. Blades 1820(0) to 1820(N-1) can refer to computing resources on printed circuit boards (PCBs), where a PCB houses hardware components for one or more nodes 1830. Blades 1820(0) to 1820(N-1) may or may not include a chassis or housing or other "box" other than that provided by rack 1810. Blades 1820(0) to 1820(N-1) may include housing with exposed connector to connect into rack 1810. System 1800 may or may not include rack 1810, and each blade (e.g., 1820(0)) can include a chassis or housing that can stack or otherwise reside in close proximity to other blades and allow interconnection of nodes 1830. System 1800 may include 10,624 compute blades, which include 63,744 Intel Max Series GPUs and 21,248 Intel Xeon Max CPUs across 166 racks.

System 1800 can include fabric 1870, which represents one or more interconnectors for nodes 1830. Fabric 1870 can include multiple switches 1872 or routers or other hardware to route signals among nodes 1830. Additionally, fabric 1870 can couple system 1800 to network 1804 for access by clients 1802. In addition to routing equipment, fabric 1870 can be considered to include cables or ports or other hardware equipment to couples nodes 1830 together. Fabric 1870 can have one or more associated protocols to manage routing of signals through system 1800. A protocol or protocols is at least partly dependent on hardware equipment used in system 1800.

As illustrated, rack 1810 can include N blades (e.g., 1820(0) to 1820(N-1)). In addition to rack 1810, system 1800 can include rack 1850. As illustrated, rack 1850 may include M blades (e.g., 1860(0) to 1860(M-1)). M is not necessarily the same as N; thus, it will be understood that various different hardware equipment components could be used, and coupled together into system 1800 over fabric 1870. Blades 1860(0) to 1860(M-1) can be the same or similar to blades 1820(0) to 1820(N-1). Nodes 1830 can be any type of node as described herein, and may not be necessarily all the same type of node. System 1800 is not limited to being homogenous, nor is it limited to not being homogenous.

A node in blade 1820(0) is illustrated in detail. However, other nodes in system 1800 can be the same or similar. At least some nodes 1830 may be computation nodes, with processor 1832 and memory 1840. A computation node refers to a node with processing resources (e.g., one or more processors) that executes an operating system and can receive and process one or more tasks. At least some nodes 1830 can include storage server nodes with a server as processing resources 1832 and memory 1840. A storage server refers to a node with more storage resources than a computation node, and rather than having processors for execution of tasks, a storage server includes processing resources to manage access to storage nodes within a storage server.

Node 1830 can include interface controller 1834, which can represent logic to control access by node 1830 to fabric 1870. Logic can include hardware resources to interconnect to physical interconnection hardware. Logic can include software or firmware logic to manage interconnection. Interface controller 1834 can include a host fabric interface, which can include a fabric interface in accordance with any embodiment described herein.

Node 1830 may include memory subsystem 1840. Memory 1840 can include memory computation resources (comp) 1842, which represent one or more capabilities by memory 1840 to perform memory computations. System 1800 enables remote memory operations, such as, but not limited to, the operations described elsewhere herein. Thus, nodes 1830 can request memory computations by remote nodes, where data for computation remains local to an executing node instead of being sent over fabric 1870 or instead of being sent from memory to a fabric interface. In response to execution of memory computation, executing node can provide a result to a requesting node.

Processor 1832 can include one or more separate processors. Each separate processor can include a single processing unit, a multicore processing unit, or a combination. A processing unit can include a primary processor such as, but not limited to, a CPU (central processing unit), a peripheral processor such as, but not limited to, a GPU (graphics processing unit), or a combination. Memory 1840 can be or include memory devices and a memory controller.

Reference to memory devices can apply to different memory types. Memory devices generally refer to volatile memory technologies. Volatile memory is memory whose state (and therefore data stored on it) is indeterminate if power is interrupted. Nonvolatile memory refers to memory whose state is determinate even if power is interrupted. Dynamic volatile memory can refresh data stored in a device to maintain state. One example of dynamic volatile memory includes DRAM (dynamic random access memory), or some variant such as, but not limited to, synchronous DRAM (SDRAM). A memory subsystem as described herein may be compatible with a number of memory technologies, such as, but not limited to, DDR3 (dual data rate version 3, original release by JEDEC (Joint Electronic Device Engineering Council) on June 27, 2007, currently on release 21), DDR4 (DDR version 4, initial specification published in September 2012 by JEDEC), DDR4E (DDR version 4, extended, currently in discussion by JEDEC), LPDDR3 (low power DDR version 3, JESD209-3B, Aug 2013 by JEDEC), LPDDR4 (LOW POWER DOUBLE DATA RATE (LPDDR) version 4, JESD209-4, originally published by JEDEC in August 2014), WIO2 (Wide I/O 2 (WideI02), JESD229-2, originally published by JEDEC in August 2014), HBM (HIGH BANDWIDTH MEMORY DRAM, JESD235, originally published by JEDEC in October 2013), DDR5 (DDR version 5, currently in discussion by JEDEC), LPDDR5 (currently in discussion by JEDEC), HBM2 (HBM version 2), currently in discussion by JEDEC), or others or combinations of memory technologies, and technologies based on derivatives or extensions of such specifications.

In addition to, or alternatively to, volatile memory, in one embodiment, reference to memory devices can refer to a nonvolatile memory device whose state is determinate even if power is interrupted. In one embodiment, nonvolatile memory device is a block addressable memory device, such as, but not limited to, NAND or NOR technologies. Thus, a memory device can also include a future generation nonvolatile devices, such as, but not limited to, a three dimensional crosspoint (3DXP) memory device, other byte addressable nonvolatile memory devices, or memory devices that use chalcogenide phase change material (e.g., chalcogenide glass). In one embodiment, a memory device can be or include multi-threshold level NAND flash memory, NOR flash memory, single or multi-level phase change memory (PCM) or phase change memory with a switch (PCMS), a resistive memory, nanowire memory, ferroelectric transistor random access memory (FeTRAM), magnetoresistive random access memory (MRAM) memory that incorporates memristor technology, or spin transfer torque (STT)-MRAM, or a combination of any of the above, or other memory.

In at least one embodiment, system 1800 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

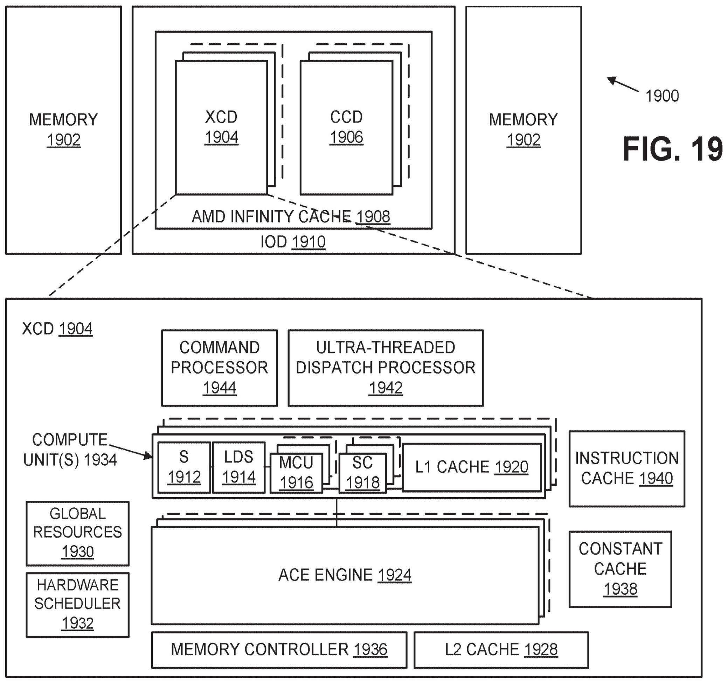

FIG. 19 illustrates accelerated processing unit 1900, in accordance with at least one embodiment. Accelerated processing unit 1900 can include a processor based on CDNA architecture from AMD Corporation in Santa Clara, CA or another processor that shares at least some of the components described herein. Accelerated processing unit 1900 can include one or more accelerator complex dies (XCDs) 1904 for performing operations described elsewhere herein, such as, but not limited to, graphics processing and/or parallel processing as well as computations with instruction-level parallelism, including support for a broad range of precisions (INT8, FP8, BF16, FP16, TF32, FP32, and FP64) and sparse matrix data (i.e. sparsity). XCDs may, in some instances, be referred to as Graphics Compute Dies (GCDs). Accelerated processing unit 1900 can include one or more complex compute dies (CCDs) 1906 for performing operations described elsewhere herein, such as, but not limited to, those operations performed by host processors. CCDs may, in some instances, be referred to as core complexes or CCXs, such as, but not limited to, CCXs used in AMD Ryzen processors. XCDs and CCDs can share any type of cache or memory (e.g., one or more memory units 1902), or have cache or memory allocated to each XCD or CCD or groups of XCDs or CCDs. For example, on-package AMD Infinity Fabric connects XCDs and CCD into shared AMD Infinity Cache 1908 and, in some embodiments, high-bandwidth memory (e.g., HMB3). Accelerated processing unit 1900 can include an AMD MI300a processor that includes three CPU chiplets (or CCDs) and six accelerator chiplets (XCDs) on top of four input-output dies (IODs) that may be layered on a piece of silicon that links them together (e.g., via AMD Infinity Fabric) to eight stacks of high-bandwidth DRAM that ring a superchip. An AMD MI300x processor substitutes CCDs for two more XCDs, for an accelerator-only system.

Accelerated processing unit 1900 can include one or more input/output (I/O) interfaces. For example, XCDs 1904 and CCDs 1906 can be together on one or more input-output dies (IODs) 1910 that can include one or more I/O interfaces. IODs 1910 can include of any number and type of I/O interfaces (e.g., PCI , PCI-Extended ("PCI-X"), PCIe, gigabit Ethernet ("GBE"), USB, etc.). Various types of peripheral devices can be coupled to I/O interfaces 1970. I/O interfaces from IODs 1910 can also be used for connected one or more accelerated processing units 1900, e.g., in a server architecture.

Accelerated processing unit 1900 can include one or more memory units 1902 for storing instructions and other information used to perform operations described elsewhere herein. Memory units 1902 can include any volatile memory, such as, but not limited to, memory types described elsewhere herein and can include, e.g., high-bandwidth memory (e.g., HMB3) or high-bandwidth DRAM. Memory associated with accelerated processing unit 1900 (e.g., memory units 1902) can include system memory that can be used, for example, for commands, instructions and constants, and inputs and outputs. Memory units 1902 can also include device memory that can be used as storage and, for example, for commands, instructions and constants, and inputs and outputs, as return buffer(s) and for private data. Memory units 1902 can be linked to one or more IODs 1910. In at least on embodiment, L1 cache 1920 starts a memory hierarchy that includes shared L2 cache 1928, e.g., within XCDs. AMD Infinity Cache^{™}, which is a last level cache (LLC) located on an active I/O die (IOD). CCDs 1906 and XCDs 1904 may have separate or shared memory. AMD Infinity Architecture and AMD Infinity Fabric^{™} technology can enable coherent, high-throughput unification of GPU and CPU chiplet technologies (e.g., XCDs, CCDs, and/or CCXs) with memory (e.g., stacked HBM3 memory) in single devices and across multi-device platforms.

As shown in FIG. 19, an XCD 1904 can include a shared set of global resources 1930, which can include hardware scheduler 1932 and Asynchronous Compute Engines (ACE) 1924 that send tasks (e.g., compute shader workgroups) to Compute Units (CUs or cores) 1934. ACEs 1924 (e.g., four) can be each associated with CUs 1934 (e.g., 40 CUs), and some of CUs 1934 can be disabled for yield management. CUs 1934 can have dedicated cache or share cache (e.g., L2 cache) 1928 that may be used to coalesce all memory traffic for a die. CUs 1934 can include threaded and parallel processor cores including instruction fetching and scheduling with Scheduler (S) 1912, matrix core unit (MCU) 1916 and shader core (SC) 1918 (e.g., execution units for scalar, vector and matrix data types), as well as load/store pipelines with an L1 cache 1920 and Local Data Share (LDS) 1914. Local data share can include, for example, a scratch RAM with built-in arithmetic capabilities that allow data to be shared between threads in a workgroup. An instruction cache 1940 (e.g., for storing and providing instructions for performing operations described elsewhere herein) and a constant cache 1938 can be connected to one or more CUs and can be shared between two CUs. Matrix cores 1916 can process a variety of data types, such as, but not limited to, INT8, FP8, FP16, BF16 and TF32 data types. Accelerated processing unit 1900 can include compute units 1934 that may be arranged in an array format, e.g., as a data-parallel-processor (DPP) array. Ultra-threaded dispatch processor 1942 can communicate with compute units 1934, and command processor 1944 can read commands that a host has written to memory-mapped registers in a system-memory address space (not shown). Command processor 1944 can send hardware-generated interrupts to a host processor (e.g., a CCD) when a command is completed. Memory controller 1936 can also have direct access to all device memory and host-specified areas of system memory. To satisfy read and write requests, memory controller 1936 can perform functions of a direct-memory access (DMA) controller, including computing memory-address offsets based on a format of requested data in memory. For example, one or more of APIs described herein can, for example, get compiled into instructions that can be stored in instruction cache 1940 and then fetched by instruction fetch logic in processor 1940, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of processor 1900 (e.g., in cache and/or memory). A result of API(s) can then be stored in storage within or outside of processor 1900, including registers, DRAM, flash, SRAM, cache, or other memory equivalents.

An application can include a program running on a host processor (e.g., a CCD) and programs, called kernels, running on one or more XCDs. Programs can be controlled by host commands that set internal base-address and other configuration registers, specify a data domain on which accelerated processing unit 1900 can operate, invalidate and flush caches on accelerated processing unit 1900, and cause accelerated processing unit 1900 to begin execution of a program. Kernels can be referred to as programs executed by accelerated processing unit 1900. A kernel can be executed independently on every work item, or as groups of work-items that can be referred to as a wavefront, which can execute a kernel on all work-items in a group (e.g., 64) in one pass. Compute units 1934 can include a scalar arithmetic logic unit (ALU), which can operates on one value per wavefront (common to all work items), a vector ALU, which can operate on unique values per work-item, a local data share 1914, which can allow work-items within a workgroup to communicate and share data, a scalar memory (not shown), which can transfer data between scalar general-purpose registers (SGPRs) and memory through a cache, and vector memory, which can transfer data between vector general-purpose registers (VGPRs) and memory, including sampling texture maps. Kernel control flow can be handled using scalar ALU instructions, which can includes if/else, branches and looping. Scalar ALU (SALU) and memory instructions can work on an entire wavefront and operate on one or more SGPRs. Vector memory and ALU instructions can operate on all work-items in a wavefront at one time.

In at least one embodiment, accelerated processing unit 1900 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

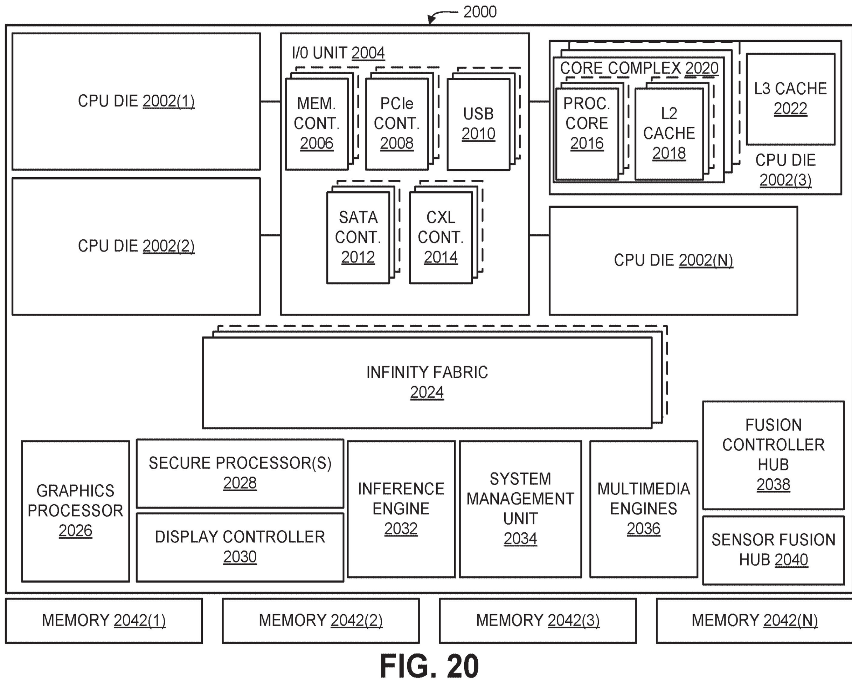

FIG. 20 illustrates a processor 2000, such as, but not limited to, a processor based on a Zen architecture (such as, e.g., Zen 1, 2, 3, 4, 5 or other) from AMD Corporation in Santa Clara, CA or another processor that shares at least some of the components described herein. Processor 2000 includes one or more CPU dies 2002(1)-2002(N), where N is any integer greater than 1. CPU die 2002 can include any number of processor cores 2016 (e.g., to perform any of the operations described elsewhere herein) and any number of cache memories (e.g., to store instructions and other information to perform any of the operations described elsewhere herein), in any combination. For example, L2 Cache units 2018 can be coupled to processor core(s) 2016, which can share and/or couple individually to L2 Cache units 2018. Processor cores 2016 can couple to L3 cache 2022 individually and/or share L3 Cache, which can be a lowest level cache (LLC) 2022 for access to data and other information used by processor cores 2016. One or more processor cores 2016 and one or more L2 Cache units 2018 can be included in a core complex (CCX) 2020 that can include (e.g., a 32 MB) shared cache (e.g., L3 cache 2022). Core complex 2020 can be fabricated onto a die (CCD or CPU die) 2002. For example, up to 12 core complexes 2020 can be configured into a processor along with 8 CPU dies 2002 to provide up to 96 processor cores 2016 for processor 2000. A 'Zen 4c' core complex 2020, for example, can include up to eight cores 2016 and a shared 16 MB L3 cache 2022. Two of these core complexes 2020 can be combined onto a single CPU die 2002 for 16 cores per die and a total of 32 MB of L3 cache 2022 per die. Up to eight of CPU dies 2002 may be combined with an I/O unit 2004 to provide CPUs with up to 128 processor cores 2016. Up to four 'Zen 4c' dies described above can be combined to provide CPUs with up to 64 processor cores 2016.

Processor 2000 can include a variety of configurations for input/output operations that are described further herein. I/O unit 2004 can include one or more memory controllers 2006 that can manage memory usage (e.g., DDR5 memory) for processor 2000. I/O unit 2004 may include one or more SATA disk controllers for managing storage 2012 and one or more Compute Express Link (CXL^{™}) 1.1+ memory controllers 2014 that can provide CPU-to-device and CPU-to-memory connections and can be flexibly assigned to specific functions at server design time. I/O unit 2004 may include PCIe controller 2008 for connecting peripherals and other components connected to processor 2000. I/O unit 2004 may include USB ports 2010 for connecting to other components separate from processor 2000. CPU dies 2002 can support any number of connections, e.g., one or two connections, to I/O unit 2004. As shown, I/O unit 2004 can include components described further herein, and I/O unit 2004 can be a I/O die that houses several different components. Memory controller 2006, PCIe controller 2008, USB ports 2010, SATA controller 2012, and/or CXL controller 2014 can be integrated anywhere within processor 2000 either separately or in any groups or combinations thereof.

Processor 2000 can include Infinity Fabric 2024 interconnects (which can be similar to or based on PCIe architectures) that can provide connections among CPUs (e.g., CPU dies 2002(1)-2002(N)), graphics processor(s) 2026, inference engine(s) 2032, and other components in a multi-chip architecture, such as secure processor(s) 2028 and I/O unit 2004. One or more AMD Infinity Fabric^{™} interconnects 2010 can connect to CPU dies 2002(1)-2002(N) and serve as a connection that is used between CPUs. One or more Infinity Fabric connections 2010 can connect each CPU die 2002 to I/O unit 2010.

In at least one embodiment, processor 2000 can include central processing units (CPUs) and other associated hardware and software described above and further herein. Processor 2000 can also include graphics processor(s) 2026. Graphics processor 2026 can be used for image generation and processing, as well as other computations and operations described further herein. Graphics processor 2026 can be based on RDNA 3 or 3.5 architecture from AMD in Santa Clara, CA. Graphics processor 2026 can include graphics compute dies (GCDs) and memory cache dies (MCDs). GCDs can include any number of compute units (CUs) for graphics or other processing, such as operations performed by arithmetic logic units (ALUs) that are described further herein. Graphics processor 2026 can include L2 cache that can be used by compute units. MCDs (not shown) can include any number of memory units and can include cache, such as L3 cache, as well as memory interfaces for coupling to memory, such as memory 2042(1)-(N), where N is an integer. Components within graphics processor 2026 can be connected using various approaches, such as using Infinity Fabric 2024 interconnects outside or within graphics processor 2026.

Inference engine 2032 can provide neural processing capabilities for processor 2000 for computational processes that are used for neural networks, deep learning, and other artificial intelligence-related operations described further herein. Processor 2000 can include secure processor(s) 2028 for managing security of processor 2000, display controller 2030 for controlling displays, a system management unit 2034 for managing and operating some or all of the components on processor 2000, multimedia engines 2036 for audio and video operations, fusion controller hub 2038 for managing USB, SATA and PCIe connections to processor 2000, and sensor fusion hub 2040 for managing sensors, such as accelerometers. Processor 2000 can also include memory 2042(1)-(N), where N is any integer. Memory can include different memory types, such as LPDDR5 and/or DDR5, or others described elsewhere herein.

For performing operations described further herein, processor 2000 can include an execution pipeline including a front-end that can include a cache (e.g., L1 cache) that stores instructions (not shown). Flow of instructions can be modified by a branch predictor. Instructions can be decoded by a decoder, dispatched to a back-end for execution, and renamed. Instruction fetch and decode pipes, for example, can be dispatched to integer or floating point execution operations that can be scheduled by a scheduler and transferred to vector and/or general-purpose registers. Floating point multiplier and/or add operations can be processed, and arithmetic logic units (ALUs) can also be used to perform computations, such as arithmetic and logic operations. Outputs from computation units can be coupled to a load/store queue, which can be connected to cache, such as L1 cache and/or L2 cache.

With respect to processor 2000 and any of its components described above or elsewhere herein, one or more of APIs or equivalents described herein can, for example, get compiled into instructions or equivalents (e.g., AVX-512 instructions based on an SIMD model), which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of processor 2000 (e.g., in cache and/or memory). A result of API(s) can then be stored in storage within or outside of processor 2000, including registers, DRAM, flash, SRAM, cache, or other memory equivalents.

In at least one embodiment, processor 2000 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

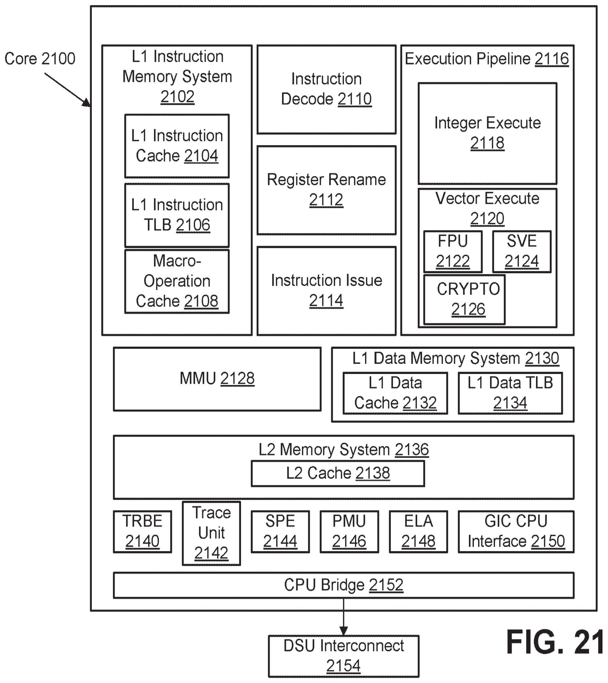

FIG. 21 illustrates an example of a processing core 2100 that may implement Arm architecture (e.g., v9.0-A) or another processor that shares at least some of the components described herein. Neoverse^{™} V2 core 2100 can be implemented inside a DynamIQ Shared Unit (DSU) cluster via DSU-110 interconnect 2154 for connected one or more cores, e.g., for parallel processing. Neoverse^{™} V2 core may be implemented as a single core in a DSU cluster that is configured for Direct connect, with or without L3 cache, snoop filter, or Snoop Control Unit (SCU) logic (not shown). Neoverse^{™} V2 core can include a CPU bridge 2152 that connects core 2100 to DSU-110 interconnect, which can also connect core 2100 to an external memory system and the rest of a system-on-a-chip. L1 instruction memory system 2102 can fetch instructions from an instruction cache 2104 and deliver instructions (e.g., one or more APIs described herein that may be compiled into instructions) to an instruction decode unit 2110, e.g., to perform some or all of operations described above or elsewhere herein. L1 instruction memory system 2102 may include L1 instruction cache 2104, e.g., with 64-byte cache lines, L1 instruction Translation Lookaside Buffer (TLB) 2106, e.g., with native support for 4KB, 16KB, 64KB, and 2MB page sizes, Macro-Operation Cache (MOP) 2108 (e.g., 1536-entry, 4-way skewed associative L0 MOP cache), which can contain decoded and optimized instructions for higher performance. Instruction decode unit 2110 can decode AArch64 instructions into internal format. Register rename unit 2112 can perform register renaming to facilitate out-of-order execution and dispatches decoded instructions to various issue queues. Instruction issue unit 2114 can control when decoded instructions may be dispatched to execution pipelines, and it can include issue queues for storing instructions pending dispatch to execution pipelines. Integer execution pipeline 2116 can be included in an execution pipeline and include integer execute unit 2118 that can perform arithmetic and logical data processing operations. Vector execute unit 2120 can be included in an execution pipeline and can perform Advanced SIMD and floating-point operations (FPU) 2122, execute Scalable Vector Extension (SVE) and Scalable Vector Extension 2 (SVE2) instructions 2124, and can optionally execute cryptographic instructions (Crypto) 2126. Advanced SIMD can include media and signal processing architecture that adds instructions primarily for audio, video, 3D graphics, image, and speech processing. A floating-point architecture provides support for single-precision and double-precision floating-point operations. L1 data memory system 2130 can execute load and store instructions, as well as service memory coherency requests. L1 data memory system 2130 can include an L1 data cache 2132 and a fully associative L1 data TLB 2134 with native support for 4KB, 16KB and 64KB page sizes and 2MB and 512MB block sizes. Memory Management Unit (MMU) 2128 can provide fine-grained memory system control through a set of virtual-to-physical address mappings and memory attributes that can be held in translation tables, which can be saved into TLB 2134 when an address is translated. L2 memory system 2136 can include L2 cache 2138, and it can be connected to DSU-110 2154 through an asynchronous CPU bridge 2152. Neoverse^{™} V2 core 2100 can support a range of debug, test, and trace options including a trace unit 2142 and a trace buffer 2140, and an Embedded Logic Analyzer (ELA) 2148. Neoverse^{™} V2 core 2100 can implement Statistical Profiling Extension (SPE) 2144 to provide a statistical view of the performance characteristics of executed instructions that software writers can use to optimize their code for better performance. Performance Monitoring Unit (PMU) 2146 can provide performance monitors that can be configured to gather statistics on operation of each core and memory system. Information can be used for debug and code profiling. Generic Interrupt Controller (GIC) CPU interface 2150, when integrated with an external distributor component, can be a resource for supporting and managing interrupts in a cluster system. In a cluster, there can be one CPU bridge 2152 between each Neoverse^{™} V2 core 2100 and DSU-110 2154. CPU bridge 2152 can control buffering and synchronization between core 2100 and DSU-1102154. CPU bridge 2152 can be asynchronous to allow different frequency, power, and area implementation points for each core 2100. CPU bridge 2152 can run synchronously without affecting other interfaces such as, but not limited to, debug and trace which can be asynchronous.

In at least one embodiment, core 2100 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

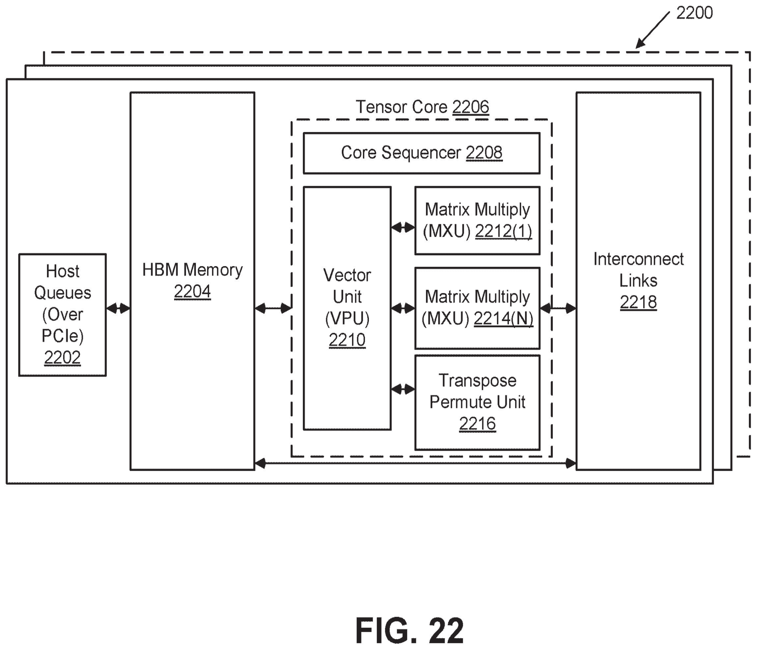

FIG. 22 illustrates one or more chips including one or more tensor processing units (TPUs) 2200, in accordance with at least one embodiment. TPUs 2200 in FIG. 22 can include application specific integrated circuits (ASICs), e.g., to perform some or all of the operations described above or elsewhere herein, such as, but not limited to, accelerate machine learning workloads performing matrix operations. TPUs 2200 may be ASICs from Alphabet Corporation in Mountain View, CA. Cloud TPU includes a cloud service that makes TPUs available as a scalable resource for processing tasks, such as, but not limited to, machine learning workloads that can run on frameworks such as, but not limited to, TensorFlow, Pytorch, and JAX.

Chip 2200 can include any number of TPUs that can include tensor cores 2206. Tensor core 2206 can include one or more core sequencer 2208, vector processing unit (VPU) 2210, matrix multiply unit (MXU) 2212(A)-2214(N), where N is any integer greater than 1, and a transpose permute unit 2216. Core Sequencer 2208 can fetch (e.g., VLIW (Very Long Instruction Word)) instructions from core's 2206 Instruction Memory (Imem), execute scalar operations using a scalar data memory (Smem) and scalar registers (Sregs) (not shown), and forward vector instructions to Vector Processing Unit (VPU) (2210. Instructions can, for example, launch eight operations: two scalar, two vector ALU, vector load and store, and a pair of slots that queue data to and from matrix multiply and transpose units. VPU 2210 can perform vector operations using a large on-chip vector memory (Vmem), and vector registers (Vregs). VPU 2210 can stream data to and from MXU through decoupling FIFOs. VPU 2210 can collect and distribute data to Vmem via data-level parallelism (2D matrix and vector functional units) and instruction-level parallelism (8 operations per instruction). A large two-dimensional matrix multiply unit (MXU) 2212(A)-2212(N) can, e.g., use a systolic array to reduce area and energy plus large, software-controlled on-chip memories instead of caches. Transpose Reduction Permute Unit 2216 can do (e.g., 128x128) matrix transposes, reductions, and permutations of VPU 2210 lanes. High Bandwidth Memory 2204 can be used for applications on chip, and it can be coupled to host queue(s) 2202, e.g., over PCIe. One or more chips 2200 can be connected together for computing. For example, one or more chips 2200 can be connected as a torus, e.g., a 2D torus. Chip 2200 can also include any number (e.g., four) Inter-Core Interconnect (ICI) links 2218 that can enable direct connections between chips to form a supercomputer.

With respect to any processors in chip 2200 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of any processors in chip 2200 (e.g., in cache and/or memory). A result of API(s) can then be stored in storage within or outside of any processors in chip 2200, including registers, DRAM, flash, SRAM, cache, or other memory equivalents.

In at least one embodiment, chip 2200 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

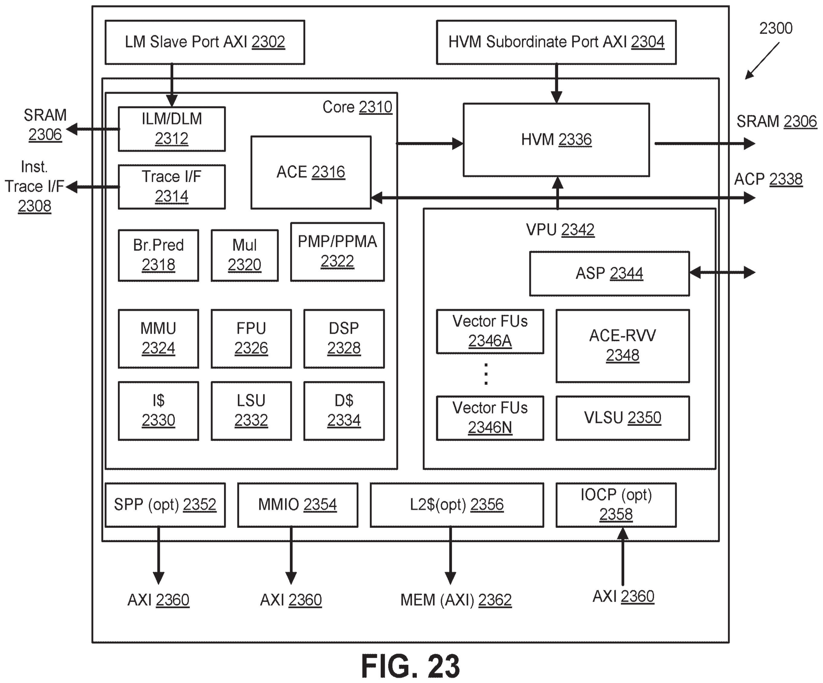

FIG. 23 illustrates a vector processor, in accordance with at least one embodiment. Vector processor 2300 may support a RISC-V standard. Vector processor 2300 can include one more cores 2310 (e.g., scalar units) with one or more Vector Processing Units (VPUs) 2342 (e.g., vector units) that can, e.g., perform some or all of the operations described above or elsewhere herein. Core 2310 may include Andes Custom Extension (ACE) 2316 that can be used for communication of customized instructions for processor 2300, for example, via ACP 2338. Core 2310 may include 1-cycle multiplier and 1-cycle instruction/data local memory (ILM/DLM) for increased parallelism by allowing simultaneous instruction fetches and data accesses. Memory management unit (MMU) 2324 may manage system memory and cache, and provide for branch execution, issuance of instruction pairs, L1 instruction/data caches and local memory storage. Core 2310 can include Physical memory protection and programmable physical memory attribute unit (PMP/PPMA) 2322. Core 2310 can include a digital signal processor (DSP) 2328, and a floating-point unit (FPU) 2326 as well as load-store unit (LSU) 2332 to interface with memory hierarchy (D$ 2334 and I$ 2330). Core 2310 can include branch prediction unit 2318 and multiplier unit 2320.

Vector processing unit (VPU) 2342 can include one or more vector functional units (FUs) 2346(A)-2346(N) that can be chained together for parallel processing, independent memory paths for RISC-V vector (RVV) load/store via ACE-RVV 2348 and Andes Streaming port (ASP) 2344 load/store, and a vector load/store unit (VLSU) 2350.

Vector processor 2300 can include bus interfaces, such as, but not limited to, L2 cache memory port 2356 for cacheable access, a MMIO port 2354 for non-cacheable access, an input-output coherence Port (IOCP) 2358 for cacheless bus master, local memory access ports for ILM/DLM 2312, which can be coupled to SRAM 2306, and high-bandwidth vector memory (HVM) 2336 access, a shared peripheral port (SPP) 2352 for external peripherals. Other memory ports include LM slave port AXI 2302, HVM subordinate port AXI 2304, MEM (AXI) 2362, and AXI 2360. Trace I/F 2314 can capture, encode, and transmit off-chip via Inst. Trace I/F 2308, e.g., a record of executed processor instructions, which software tools can use to reconstruct the exact execution sequence of a program.

With respect to any processors in processor 2300 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of processor 2300 (e.g., in cache and/or memory). A result of API(s) can then be stored in storage within or outside of processor 2300, including registers, DRAM, flash, SRAM, cache, or other memory equivalents.

In at least one embodiment, vector processor 2300 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

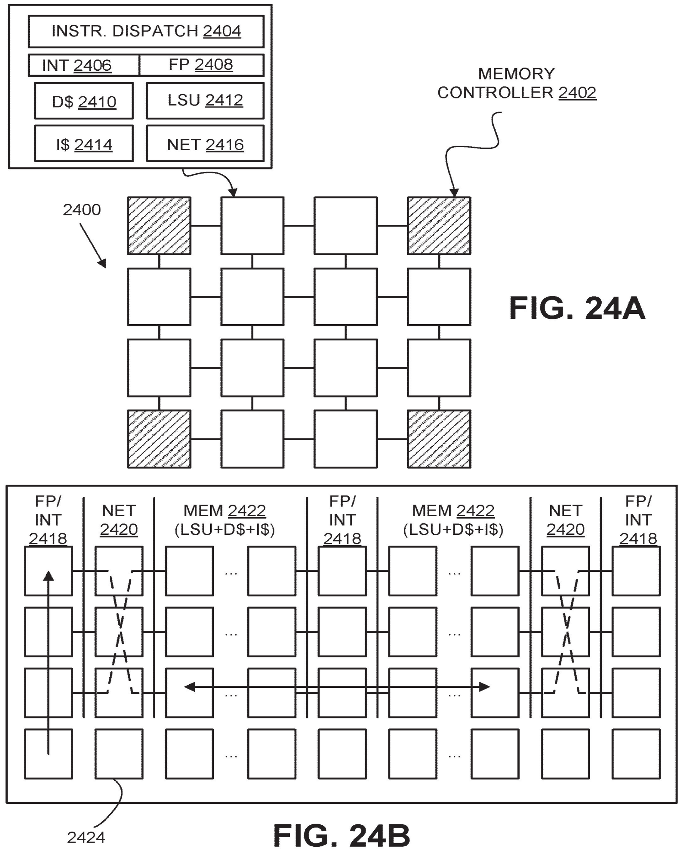

FIG. 24A illustrates a diagram of an example many-core tiled processor microarchitecture. Many-core tiled processor in FIG. 24A can include a language processing processor. As illustrated in FIG. 24A, each "tile" of a processor architecture is a processing element tied together using a network-on-chip (NoC) that can be used, e.g., to perform some or all of the operations described above or elsewhere herein. For example, each tile may have an instruction dispatch 2404 and an integer (INT) 2406 and floating-point (FP) unit 2408 as well as load-store unit (LSU) 2412 to interface with memory hierarchy (data cache (D$) 2410 and instruction cache (I$) 2414) and network (NET) 2416 interface for communication with other tiles. Some tiles in processor 2400 may include memory controller 2402 for managing and controlling memory, as described further herein. Processor 2400 can have a functional slice architecture. Processor 2400 may be located on an application specific integrated circuit (ASIC), and FIG. 24A may represent a layout of an ASIC. Processor 2400 can include a co-processor that is designed to execute instructions for a predictive model. A predictive model is any model that is configured to make a prediction from input data. A predictive model can use a classifier to make a classification prediction. A predictive model may be a machine learning model such as, but not limited to, a tensor flow model, and processor 2400 is a tensor streaming processor.

Processor 2400 can employ different microarchitectures, which disaggregates functional units shown in each tile in FIG. 24B. Instead, functional tiles 2424 of processor 2400 may be aggregated into a plurality of functional process units (hereafter referred to as "slices") 2404, each corresponding to a particular function type (e.g., FP/INT 2418, NET 2420, MEM 2422). For example, as illustrated in FIG. 24B, each slice may correspond to a column of functional tiles extending in a north-south direction. In addition, processor 2400 also may include communication lanes to carry data between tiles of different slices, each running horizontally in an east-west direction. Each communication lane may be connected to each of slices 2404 of processor 2400.

Slices 2404 of processor 2400 may each correspond to a different function, and may include arithmetic logic slices (e.g., FP/INT2418), lane switching slices (e.g., NET 2420), and memory slices (e.g., MEM 2422). Arithmetic logic units may execute one or more arithmetic and/or logic operations on data received via communication lanes to generate output data. Examples of arithmetic logic units may be matrix multiplication units and vector multiplication units. Memory slices include memory cells that store data. Memory slices can provide data to other slices through communication lanes. Memory slices can also receive data from other slices through communication lanes. Lane switching slices can configurably route data from one communication lane to any other communication lane. For example, data from a first lane can be provided to a second lane through a lane switching slice. In some embodiments, a lane switching slice can be implemented as a crossbar switch. Each slice 2404 also includes its own instruction queue (not shown) that stores instructions, and an instruction control unit (ICU) to control execution of instructions. Instructions in a given instruction queue may be executed only by tiles in its associated functional slice and may not be executed by other slice(s) of processor 2400.

By arranging tiles of processor 2400 into different functional slices 2404, on-chip instruction and control flow of processor 2400 can be decoupled from data flow. For example, one arrow in FIG. 24B illustrates flow of instructions within processor architecture, in accordance with some embodiments. Another arrow in FIG. 24B illustrates data flow within processor architecture, in accordance with at least one embodiment. As illustrated, instructions and control flow can flow in a first direction across tiles of processor 2400 (e.g., north-south, along a length of functional slices, as shown by the first arrow), while data flows flow in a second direction across tiles of processor 2400 (e.g., east-west, across functional slices, as shown by the second arrow) that is perpendicular to the first direction.

Different functional slices of processor 2400 may correspond to MEM 2422 (memory), VXM (vector execution module), MXM (matrix execution module), NIM (numerical interpretation module), and SXM (switching and permutation module). Each slice may include N tiles that may all be controlled by a same instruction control unit (ICU) (not shown). Each slice may operate completely independently and can only be coordinated using barrier-like synchronization primitives or through a compiler by exploiting "tractable determinism." Each tile of processor 2400 can correspond to an execution unit organized as an ×M SIMD tile. For example, each tile of on-chip memory of processor 2400 may be organized to store an L-element vector atomically. As such, a MEM slice having N tiles may work together to store or process a large vector (e.g., having a total of N×M elements).

Tiles in a slice may execute instructions in a "staggered" fashion where instructions may be issued tile-by-tile within a slice over a period of N cycles. Functional slices may be arranged physically on-chip to allow efficient data-flow for pipelined execution across hundreds of cycles for common patterns. Data flows can perform a single "u-turn" (change in direction) corresponding to a single matrix operation before being written back to memory, in some embodiments, a particular data flow may change direction multiple times (due to multiple matrix and vector operations) before resulting data is written back into memory.

When using processor 2400 (e.g., TSP) having a functional slice architecture, TSP compiler (not shown) generates an explicit plan for how processor 2400 can execute a program (e.g., a microprogram). Compiler can specify when each operation will be executed, which functional slices will perform work, and which STREAM registers hold operands. Compiler can maintain a high-fidelity (cycle accurate) model of processor 2400 (e.g., TSP) hardware state so a microprogram can orchestrate data flow.

Processor 2400 (e.g., TSP) can use a Web-hosted compiler that takes as its input a model (e.g., a ML model such as, but not limited to, a TensorFlow model) and emits a proprietary instruction stream targeting processor 2400 (e.g., TSP). Compiler is responsible for coordinating control and data flow of a program, and specifies any instruction-level parallelism by explicitly bundling instructions that can and should execute concurrently so that they may be dispatched together. Primary hardware structure includes an architecturally-visible streaming register file (STREAMs), described in greater detail below, which serves as a conduit through which operands flow from MEM slices (e.g., SRAM) to functional slices and vice versa.

MEM 2422 of processor 2400 can serve as: (1) storage for model parameters, microprograms and data on which they operate, and (2) network-on-chip (NoC) for communicating data operands from MEM to functional slices and computed results back to MEM. In some embodiments, on-chip memory can consumes ≈75% of chip area of processor 2400. In some embodiments, due to bandwidth requirements of processor 2400, on-chip memory of MEM tiles may include SRAM, and not DRAM. On-chip memory capacity of processor 2400 can determine (i) number of ML models that can simultaneously reside on-chip, (ii) size of any given model, and (iii) partitioning of large models to fit into multi-chip systems. In some embodiments, MEM system of processor 2400 can provide a plurality of memory slices organized into two different hemispheres (referred to as "MEM WEST" and "MEM EAST", respectively).

Memory slices of each hemisphere may be mirrored, such that slices may be physically numbered {0, . .. L} in an East hemisphere, and {L, ... 0} in a West hemisphere, such that memory slice 0 for each hemisphere corresponds to a slice closest to VXM slices between hemispheres, where each hemisphere comprises L slices. Direction of data transfer towards the center of a chip may be referred to as inwards, while data transfer toward the outer (Eastern or Western most) edge of a chip may be referred to as outwards. Although hemispheres of memory of processor 2400 may be referred to as east and west, it is understood that in other embodiments, other names may be used to refer to different hemispheres of memory.

In some embodiments, a streaming register file, referred to as STREAMS, transfers operands and results between SRAM of MEM slices and functional slices of processor 2400. In some embodiments, a plurality of MEM slices (e.g., between 2 and 10 adjacent MEM slices) may be physically organized as a set. Each set of slices may be located between a pair of STREAM register files, such that each slice is able to read or write to STREAM registers in either direction. By placing STREAM register files between sets of MEM slices, a number of cycles needed for data operands to be transmitted across a hemisphere is decreased (e.g., by a factor corresponding to a number of slices per set). A number of slices per set may be configured based upon a distance over which data may be transmitted over a single clock cycle.

With respect to any processors in FIG. 24 and any components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of processor 2400 (e.g., in cache and/or memory). A result of API(s) can then be stored in storage within or outside of processor 2400, including registers, DRAM, flash, SRAM, cache, or other memory equivalents.

In at least one embodiment, processor 2400 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

### SOFTWARE CONSTRUCTIONS

The following figures set forth, without limitation, examples of software constructs for implementing at least one embodiment.

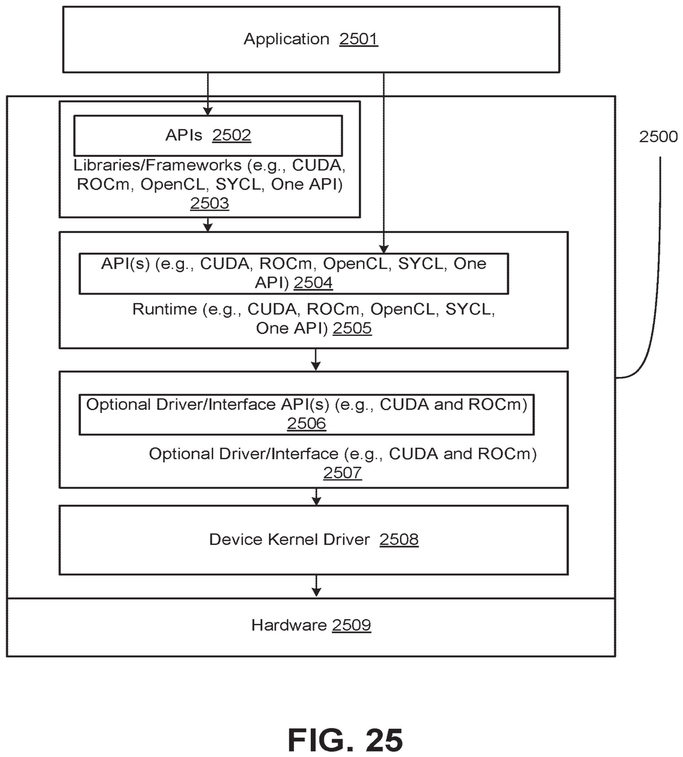

FIG. 25 illustrates a software stack of a programming platform, in accordance with at least one embodiment. A programming platform can include a platform for leveraging hardware on a computing system to accelerate computational tasks. A programming platform may be accessible to software developers through libraries, compiler directives, and/or extensions to programming languages, in at least one embodiment. A programming platform may be CUDA, Radeon Open Compute Platform ("ROCm"), OpenCL (OpenCL^{™} is developed by Khronos group), SYCL, or Intel oneAPI.

A software stack 2500 of a programming platform can provide an execution environment for an application 2501. Application 2501 may include any computer software capable of being launched on software stack 2500. Application 2501 may include an artificial intelligence ("AI")/machine learning ("ML") application, a high performance computing ("HPC") application, a virtual desktop infrastructure ("VDI"), or a data center workload.

Application 2501 and software stack 2500 run on hardware 2508. Hardware 2508 may include one or more GPUs, CPUs, FPGAs, AI engines, and/or other types of compute devices that support a programming platform. Software stack 2500 may be vendor specific and compatible with only devices from particular vendor(s), such as CUDA, ROCm, OneAPI, OpenCL, or other implementations. Hardware 2508 can include a host connected to one more devices that can be accessed to perform computational tasks via application programming interface ("API") calls. A device within hardware 2508 may include a GPU, FPGA, AI engine, or other compute device (but may also include a CPU) and its memory, as opposed to a host within hardware 2508 that may include a CPU (but may also include a compute device) and its memory, in at least one embodiment. With respect to any hardware 2508 described above or elsewhere herein, one or more of APIs described herein can, for example, get compiled into instructions, which may be fetched by instruction fetch logic, decoded by a processor decoder, scheduled (e.g., in order or out of order) for execution by a scheduler, executed by execution logic, reordered, and then retired by retirement logic. API(s) (and/or compiled instructions including API(s)) can be stored in any storage outside or inside of hardware 2508 (e.g., in cache and/or memory). A result of API(s) can then be stored in storage within or outside of hardware 2508, including registers, DRAM, flash, SRAM, cache, or other memory. One or more of APIs described herein can receive a call. One or more of APIs described herein can communicate with a library or a portion of a library to perform a function described by the call. One or more of APIs described herein can receive a call and communicate with a library or portion of a library to perform a function described by the call.

Software stack 2500 of a programming platform can include a number of libraries 2503, a runtime 2505, an optional driver/interface 2507, and a device kernel driver 2508. Each of libraries 2503 may include data and programming code that can be used by computer programs and leveraged during software development. Libraries 2503 may include pre-written code and subroutines, classes, values, type specifications, configuration data, documentation, help data, and/or message templates. Libraries 2503 can include functions that may be optimized for execution on one or more types of devices. Libraries 2503 may include functions for performing mathematical, deep learning, and/or other types of operations on devices. Libraries 2503 can be associated with corresponding APIs 2502, which may include one or more APIs, that expose functions implemented in libraries 2503. A processor (e.g. CPU, GPU) may perform, call, or otherwise use one or more APIs to prioritize kernels. For example, a first kernel (e.g., parent) can launch a second kernel (e.g., child kernel), and said second kernel can be used by a processor to launch additional kernels (e.g., grandchildren kernels) independent of said first kernel. A processor may perform an API or calls an API from memory to be performed to support dynamic stream priority (e.g., updating priority while a stream is being used to perform operations). For example, when a processor performs said API, it allows a programmer to copy stream priority from one stream to one or more other streams.

Software stack 2500 may include an API to support dynamic stream priority (e.g., updating priority while a stream is being used to perform operations), which can allow a programmer to set priority of a stream at any time after creation. Software stack 2500 can include an API to support dynamic stream priority (e.g., updating priority while the stream is being used to perform operations), which may allow a programmer to obtain current priority of a stream, where the priority is one of a plurality of attributes of a stream. Software stack 2500 can include an API to support dynamic stream priority (e.g., updating priority while the stream is being used to perform operations), which may allow a programmer to obtain current priority of a stream as a single attribute. Software stack 2500 can include an API to support dynamic stream priority (e.g., updating priority while the stream is being used to perform operations), which allows a programmer to launch a kernel to perform operations on a stream at a set priority, which may be different from the stream priority. Software stack 2500 may include an API to indicate whether an object (e.g., a thread synchronization object such as, but not limited to, a barrier) tracks whether all data movement operations for a set of threads operating on a GPU may be complete has a specified state after a specified period of time, where a specified state can be a state indicating that data has been moved and is ready for use, and is specified using an expected parity value as an input to the API.

Software stack 2500 can include one or more APIs to updated kernels. A processor can perform an API or call an API from memory to be performed to update to an existing API is to support context-free kernels, which may allow a programmer to add a kernel node to a graph without a graphics context, so that a graphics context can be dynamically associated with a kernel at runtime. Software stack 2500 may include one or more APIs to allow a programmer to obtain a kernel identifier and a graphics context as separate parameters from a kernel node, so that parameters to be obtained from kernels and from context-free kernels. Software stack 2500 can include one or more APIs to use parallel processor(s), such as, but not limited to, one or more graphics processing units, to launch task graphs (e.g., task graphs) and to execute one or more task graphs (e.g., including one or more programs).

Software stack 2500 may include one or more APIs to associate one or more instructions with one or more memory ordering operations, such as, but not limited to, a fence or membar operation. Instructions can be associated with one or more domains such that a memory ordering operation is executed in association to one or more particular domains without interfering with instructions of other domains. An API can indicate a thread has arrived (e.g., at a thread synchronization barrier), or finished a stage of work in relation to asynchronous data movement operations on a GPU. Software stack 2500 may include one or more to allow programmers to manually indicate an expected transaction count when a thread has finished a stage of work, which can be used to update an object that tracks whether all data movement operations for a set of threads may be complete.

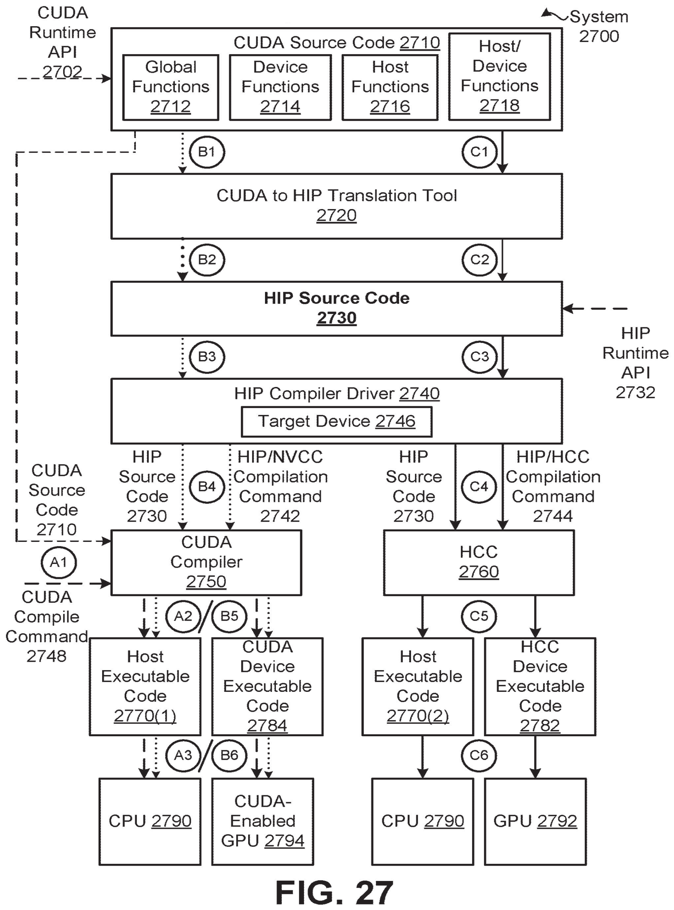

Application 2501 can be written as source code that is compiled into executable code, as discussed in greater detail below in conjunction with FIGS. 26 and 27. Executable code of application 2501 may run, at least in part, on an execution environment provided by software stack 2500. During execution of application 2501, code may be reached that needs to run on a device, as opposed to a host. In such a case, runtime 2505 may be called to load and launch requisite code on a device. Runtime 2505 may include any technically feasible runtime system that is able to support execution of application 2501.

Runtime 2505 can be implemented as one or more runtime libraries associated with corresponding APIs, which are shown as API(s) 2504. One or more of such runtime libraries may include functions for memory management, execution control, device management, error handling, and/or synchronization, among other things. Memory management functions may include functions to allocate, deallocate, and copy device memory, as well as transfer data between host memory and device memory. Execution control functions may include functions to launch a function (sometimes referred to as a "kernel" when a function is a global function callable from a host) on a device and set attribute values in a buffer maintained by a runtime library for a given function to be executed on a device.

Runtime libraries and corresponding API(s) 2504 may be implemented in any technically feasible manner. One (or any number of) API may expose a low-level set of functions for fine-grained control of a device, while another (or any number of) API may expose a higher-level set of such functions. A high-level runtime API may be built on top of a low-level API. One or more of runtime APIs may be language-specific APIs that may be layered on top of a language-independent runtime API.

An optional driver or interface 2507 may be implemented, e.g., for CUDA and ROCm implementations, that are described further below. Optional driver/interface 2507 may be associated with optional driver or interface API(s), such as, but not limited to, CUDA and/or ROCm API(s).

One or more processors disclosed in "processing systems" can perform, access, or otherwise use software stack 2500. For example, system-on-a-chip 1200, parallel processor 1300, graphics multiprocessor 1334, processor 1400, processor 1500, accelerator 1600, neuromorphic processor 1705, supercomputer 1800, acceleration processing unit 1900, processor 2000, processor 2100, tensor processing unit 2200, processor 2300, and language processing unit 2400 can perform, use, call, or otherwise implement (e.g., through accessing a memory) one or more APIs included in software stack 2500.

Device kernel driver 2508 can be configured to facilitate communication with an underlying device. Device kernel driver 2508 may provide low-level functionalities upon which APIs, such as, but not limited to, API(s) 2504, and/or other software relies. Device kernel driver 2508 may be configured to compile intermediate representation ("IR") code into binary code at runtime. For CUDA or other implementations such as, but not limited to, ROCm, OneAPI, or OpenCL, device kernel driver 2508 may compile Parallel Thread Execution ("PTX") IR code that is not hardware specific into binary code for a specific target device at runtime (with caching of compiled binary code), which is also sometimes referred to as "finalizing" code. Doing so may permit finalized code to run on a target device, which may not have existed when source code was originally compiled into PTX code. Alternatively, device source code may be compiled into binary code offline, without requiring device kernel driver 2508 to compile IR code at runtime.

Processors described elsewhere herein, such as, but not limited to, processors in FIGS. 12-24 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software, e.g., software stack 2500 to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

In accordance with at least one embodiment, software stack 2500 of FIG. 25 can be performed in a CUDA implementation. A CUDA software stack 2500, on which an application 2501 may be launched, may include CUDA libraries 2503, a CUDA runtime 2505, a CUDA driver 2507, and a device kernel driver 2508. CUDA software stack 2500 can execute on hardware (e.g., graphics multiprocessor 1334 that may include a GPU that supports CUDA and is developed by NVIDIA Corporation of Santa Clara, CA.

Application 2501, CUDA runtime 2505, and device kernel driver 2508 can perform functionalities that are described above and elsewhere herein. CUDA driver 2507 can include a library (libcuda.so) that may implement a CUDA driver API 2506. Similar to a CUDA runtime API 2504 implemented by a CUDA runtime library (cudart), CUDA driver API 2506 may expose functions for memory management, execution control, device management, error handling, synchronization, and/or graphics interoperability, among other things. CUDA driver API 2506 can differ from CUDA runtime API 2504 in that CUDA runtime API 2504 simplifies device code management by providing implicit initialization, context (analogous to a process) management, and module (analogous to dynamically loaded libraries) management. In contrast to high-level CUDA runtime API 2504, CUDA driver API 2506 can be a low-level API providing more fine-grained control of a device, particularly with respect to contexts and module loading. CUDA driver API 2506 may expose functions for context management that may be not exposed by CUDA runtime API 2504. CUDA driver API 2506 may also be language-independent and support, e.g., OpenCL, in addition to CUDA runtime API 2504. Further, development libraries, including CUDA runtime 2505, may be considered as separate from driver components, including user-mode CUDA driver 2507 and kernel-mode device driver 2508 (also sometimes referred to as a "display" driver).

CUDA libraries 2503 may include mathematical libraries, deep learning libraries, parallel algorithm libraries, and/or signal/image/video processing libraries, which parallel computing applications such as, but not limited to, application 2501 may utilize. CUDA libraries 2503 may include mathematical libraries such as, but not limited to, a cuBLAS library that is an implementation of Basic Linear Algebra Subprograms ("BLAS") for performing linear algebra operations, a cuFFT library for computing fast Fourier transforms ("FFTs"), and a cuRAND library for generating random numbers, among others. CUDA libraries 2503 may include deep learning libraries such as, but not limited to, a cuDNN library of primitives for deep neural networks and a TensorRT platform for high-performance deep learning inference, among others.

In at least one embodiment, processors described elsewhere herein, such as, but not limited to, processors in FIGS. 12-24 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software, e.g., software stack 2500 to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

In accordance with at least one embodiment, software stack 2500 of FIG. 25 can be performed in a ROCm implementation. A ROCm software stack 2500, on which an application 2501 may be launched, includes a language runtime 2503, a system runtime 2505, a thunk 2507, and a ROCm kernel driver 2508. ROCm software stack 2500 executes on hardware 2509, which may include a GPU that supports ROCm and is developed by AMD Corporation of Santa Clara, CA.

Application 2501 may perform similar functionalities as discussed above in conjunction with FIG. 25. In addition, language runtime 2503 and system runtime 2505 may perform similar functionalities as runtime 2505 discussed above in conjunction with FIG. 25. Language runtime 2503 and system runtime 2505 may differ in that system runtime 2505 is a language-independent runtime that implements a ROCr system runtime API 2504 and makes use of a Heterogeneous System Architecture ("HSA") Runtime API. HSA runtime API can include a thin, user-mode API that exposes interfaces to access and interact with an AMD GPU, including functions for memory management, execution control via architected dispatch of kernels, error handling, system and agent information, and runtime initialization and shutdown, among other things. In contrast to system runtime 2505, language runtime 2503 can be an implementation of a language-specific runtime API 2502 layered on top of ROCr system runtime API 2504. Language runtime API may include a Heterogeneous compute Interface for Portability ("HIP") language runtime API, a Heterogeneous Compute Compiler ("HCC") language runtime API, or an OpenCL API, among others. HIP language in particular is an extension of C++ programming language with functionally similar versions of CUDA mechanisms, and a HIP language runtime API may include functions that may be similar to those of CUDA runtime API discussed above in conjunction with FIG. 25, such as, but not limited to, functions for memory management, execution control, device management, error handling, and synchronization, among other things.

Thunk (ROCt) 2507 can be an interface 2506 that can be used to interact with underlying ROCm driver 2508. ROCm driver 2508 can be a ROCk driver, which is a combination of an AMDGPU driver and a HSA kernel driver (amdkfd). AMDGPU driver can be a device kernel driver for GPUs developed by AMD that performs similar functionalities as device kernel driver 2509 discussed above in conjunction with FIG. 25. HSA kernel driver can be a driver permitting different types of processors to share system resources more effectively via hardware features.

Various libraries (not shown) may be included in ROCm software stack 2500 above language runtime 2503 and provide functionality similar to CUDA libraries 2503, discussed above in conjunction with FIG. 25. Various libraries may include mathematical, deep learning, and/or other libraries such as, but not limited to, a hipBLAS library that implements functions similar to those of CUDA cuBLAS, a rocFFT library for computing FFTs that is similar to CUDA cuFFT, among others.

Processors described elsewhere herein, such as, but not limited to, processors in FIGS. 12-24 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software, e.g., software stack 2500 to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

In accordance with at least one embodiment, software stack 2500 of FIG. 25 can be performed in a OpenCL implementation. An OpenCL software stack 2500, on which an application 2501 may be launched, can include an OpenCL framework 2503, an OpenCL runtime 2505, and a driver 2508. OpenCL software stack 2500 may execute on hardware 2509 that is not vendor-specific. As OpenCL is supported by devices developed by different vendors, specific OpenCL drivers may be required to interoperate with hardware from such vendors.

Application 2501, OpenCL runtime 2505, device kernel driver 2508, and hardware 2509 may perform similar functionalities as other implementations of application 2501, runtime 2505, device kernel driver 2508, and hardware 2509, respectively, that are discussed above in conjunction with FIG. 25. Application 2501 can further include an OpenCL kernel (not shown) with code that is to be executed on a device.

OpenCL may define a "platform" that allows a host to control devices connected to a host. An OpenCL framework can provide a platform layer API and a runtime API, shown as platform API 2502 and runtime API 2504. Runtime API 2504 can use contexts to manage execution of kernels on devices. Each identified device may be associated with a respective context, which runtime API 2504 may use to manage command queues, program objects, and kernel objects, share memory objects, among other things, for that device. Platform API 2502 can expose functions that permit device contexts to be used to select and initialize devices, submit work to devices via command queues, and enable data transfer to and from devices, among other things. In addition, OpenCL framework can provide various built-in functions (not shown), including math functions, relational functions, and image processing functions, among others.

A compiler (not shown) can also be included in OpenCL framework 2503. Source code may be compiled offline prior to executing an application or online during execution of an application. In contrast to CUDA and ROCm, OpenCL applications may be compiled online by a compiler that is representative of any number of compilers that may be used to compile source code and/or IR code, such as, but not limited to, Standard Portable Intermediate Representation ("SPIR-V") code, into binary code. Alternatively, OpenCL applications may be compiled offline, prior to execution of such applications.

In at least one embodiment, processors described elsewhere herein, such as, but not limited to, processors in FIGS. 12-24 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software, e.g., software stack 2500 to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

In accordance with at least one embodiment, software can be supported by a programming platform that is configured to support various programming models, middlewares and/or libraries, and frameworks that an application may rely upon. Application may be an AI/ML application implemented using, for example, a deep learning framework such as, but not limited to, MXNet, PyTorch, or TensorFlow, which may rely on libraries such as, but not limited to, cuDNN, NVIDIA Collective Communications Library ("NCCL"), and/or NVIDA Developer Data Loading Library ("DALI") CUDA libraries to provide accelerated computing on underlying hardware.

Programming platform may be one of a CUDA, ROCm, or OpenCL platform described above in conjunction with FIG. 25. Programming platform can support multiple programming models, which may be abstractions of an underlying computing system permitting expressions of algorithms and data structures. Programming models may expose features of underlying hardware in order to improve performance. Programming models may include CUDA, HIP, OpenCL, C++ Accelerated Massive Parallelism ("C++AMP"), Open Multi-Processing ("OpenMP"), Open Accelerators ("OpenACC"), and/or Vulcan Compute.

Libraries and/or middlewares may provide implementations of abstractions of programming models. Such libraries can include data and programming code that may be used by computer programs and leveraged during software development. Such middlewares can include software that provides services to applications beyond those available from programming platform. Libraries and/or middlewares may include cuBLAS, cuFFT, cuRAND, and other CUDA libraries, or rocBLAS, rocFFT, rocRAND, and other ROCm libraries. In addition, libraries and/or middlewares may include NCCL and ROCm Communication Collectives Library ("RCCL") libraries providing communication routines for GPUs, a MIOpen library for deep learning acceleration, and/or an Eigen library for linear algebra, matrix and vector operations, geometrical transformations, numerical solvers, and related algorithms.

Application frameworks may depend on libraries and/or middlewares. Each of application frameworks can be a software framework used to implement a standard structure of application software. Returning to the AI/ML example discussed above, an AI/ML application may be implemented using a framework such as, but not limited to, Caffe, Caffe2, TensorFlow, Keras, PyTorch, or MxNet deep learning frameworks, for example.

In at least one embodiment, processors described elsewhere herein, such as, but not limited to, processors in FIGS. 12-24 can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits can be configured by software, e.g., programming platforms described herein, to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

FIG. 26 illustrates compiling code to execute on one of programming platforms of FIGS. 25 described above, in accordance with at least one embodiment. A compiler 2601 is configured to receive source code 2600, compile source code 2600, and output an executable file 2610. Complier 2601 can be configured to convert source code 2600 into host executable code 2607 for execution on a host and device executable code 2608 for execution on a device. Source code 2600 may either be compiled offline prior to execution of an application, or online during execution of an application. Source code 2600 may include code in any programming language supported by compiler 2601, such as, but not limited to, C++, C, Fortran, etc. Source code 2600 may be included in a single-source file having a mixture of host code and device code, with locations of device code being indicated therein. A single-source file may be a .cu file that includes CUDA code or a .hip.cpp file that includes HIP code or a file in another format that includes both host code and device code. Alternatively, source code 2600 may include multiple source code files, rather than a single-source file, into which host code and device code may be separated. Compiler 2601 includes or has access to one or more libraries to recognize a sequence of API calls to perform a single fused API, where a single fused API is a combined API for two or more APIs. In at least one embodiment, compiler 2601 may be an NVIDIA CUDA compiler ("NVCC") for compiling CUDA code in .cu files, or a HCC compiler for compiling HIP code in .hip.cpp files, or other compilers.

Compiler 2601 can be configured to compile source code 2600 into host executable code 2607 for execution on a host and device executable code 2608 for execution on a device. Compiler 2601 performs operations including parsing source code 2600 into an abstract system tree (AST), performing optimizations, and generating executable code. When source code 2600 includes a single-source file, compiler 2601 may separate device code from host code in such a single-source file, compile device code and host code into device executable code 2608 and host executable code 2607, respectively, and link device executable code 2608 and host executable code 2607 together in a single file.

Compiler 2601 can include a compiler front end 2602, a host compiler 2605, a device compiler 2606, and a linker 2609. Compiler front end 2602 can be configured to separate device code 2604 from host code 2603 in source code 2600. Device code 2604 may be compiled by device compiler 2606 into device executable code 2608, which as described may include binary code or IR code, in at least one embodiment. Separately, host code 2603 may be compiled by host compiler 2605 into host executable code 2607. For NVCC other compilers, such as, but not limited to, those for oneAPI, ROCm, and OpenCL, host compiler 2605 may be a general purpose C/C++ compiler that outputs native object code, while device compiler 2606 may be a Low Level Virtual Machine ("LLVM")-based compiler that forks a LLVM compiler infrastructure and outputs PTX code or binary code. For HCC, both host compiler 2605 and device compiler 2606 may be LLVM-based compilers that output target binary code.

Subsequent to compiling source code 2600 into host executable code 2607 and device executable code 2608, linker 2609 can link host and device executable code 2607 and 2608 together in executable file 2610. Native object code for a host and PTX or binary code for a device may be linked together in an Executable and Linkable Format ("ELF") file, which is a container format used to store object code. Host executable code 2607 and device executable code 2608 may be in any suitable format, such as, but not limited to, binary code and/or IR code. In the case of CUDA, host executable code 2607 may include native object code and device executable code 2608 may include code in PTX intermediate representation, in at least one embodiment. In the case of ROCm, both host executable code 2607 and device executable code 2608 may include target binary code, in at least one embodiment. Other implementations, such as, but not limited to, oneAPI, OpenCL are contemplated and can be performed similarly to the CUDA and ROCm implementations above.

Source code 2600 may be translated prior to compiling source code. Source code is passed through a translation tool (not shown), which translates source code 2600 into translated source code. A compiler 2601 can be used to compile translated source code into host executable code 2607 and device executable code 2608 in a process that is similar to compilation of source code 2600 by compiler 2601 into host executable code 2607 and device executable code 2608, as discussed above in conjunction with FIG. 26.

A translation performed by translation tool can be used to port source code 2600 for execution in a different environment than that in which it was originally intended to run. Translation tool may include a HIP translator that is used to "hipify" CUDA code intended for a CUDA platform into HIP code that can be compiled and executed on a ROCm platform. Translation of source code 2600 may include parsing source code 2600 and converting calls to API(s) provided by one programming model (e.g., CUDA) into corresponding calls to API(s) provided by another programming model (e.g., HIP), as discussed in greater detail below in conjunction with FIG. 27. Returning to the example of hipifying CUDA code, calls to CUDA runtime API, CUDA driver API, and/or CUDA libraries may be converted to corresponding HIP API calls. Automated translations performed by translation tool 2601 may sometimes be incomplete, requiring additional, manual effort to fully port source code 2600.

One or more techniques described herein may utilize other methods of converting one type of code to another type of code to enable interchangeability between different device architectures. In at least one embodiment, an application for one platform (e.g., a CUDA application) can be compiled into code for implementation on another platform (e.g., an AMD processor, Intel processor, or other processor). For example, source code 2600 can include source code for one platform (e.g., CUDA). Compiler 2601 can compile the source 2600 into an executable file 2610 that can be used by another platform (e.g., AMD or Intel). Programming toolkits can allow applications for one platform (e.g., CUDA) to be compiled (e.g., natively) for another platform (e.g., AMD or Intel). For example, a GPGPU programming toolkit can allow for CUDA applications to be natively compiled for AMD GPUs. Programs (e.g., CUDA programs) or its build system do not have to be modified or translated to another language before compiling to code for another platform. A compiler may accept the same command-line options and programming dialect (e.g., CUDA dialect) as another compiler (e.g., nvcc for CUDA), serving as a drop-in replacement to impersonate an installation of a toolkit (e.g., NVIDIA CUDA Toolkit), so existing build tools and scripts (e.g., like cmake) work without further modification. In at least one embodiment, an nvcc-compatible compiler can be used to compile nvce-dialect CUDA for AMD GPUs, including PTX asm. Implementations of CUDA runtime and driver APIs for AMD GPUs can be used. Libraries (e.g., open source wrapper libraries) can provide APIs, such as "CUDA-X" APIs by delegating to the corresponding ROCm libraries. An example implementation includes SCALE from Spectral Compute in London, England. Instead of providing a new way to write GPGPU software, SCALE allows programs written using the widely-popular CUDA language to be directly compiled for AMD GPUs. Additional implementations can include a Clang compiler that provides a language front-end and tooling infrastructure for languages in the C language family (C, C++, Objective C/C++, OpenCL, CUDA, and RenderScript). In at least one embodiment, compilers described herein, such as, but not limited to compiler 2601, compiler 2605, and/or compiler 2606 can include one or more circuits to compile code (e.g., CUDA, HIP, OpenCL, OneAPI, or others) to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations and/or perform any of the operations described above or elsewhere herein.

FIG. 27 illustrates a system 2700 configured to compile and execute CUDA source code 2710 using different types of processing units, in accordance with at least one embodiment. System 2700 includes CUDA source code 2710, a CUDA compiler 2750, host executable code 2770(1), host executable code 2770(2), CUDA device executable code 2784, a CPU 2790, a CUDA-enabled GPU 2794, a GPU 2792, a CUDA to HIP translation tool 2720, HIP source code 2730, a HIP compiler driver 2740, an HCC 2760, and HCC device executable code 2782.

CUDA source code 2710 may be a collection of human-readable code in a CUDA programming language. A CUDA programming language can be an extension of the C++ programming language that includes mechanisms to define device code and distinguish between device code and host code. Device code can include source code that, after compilation, is executable in parallel on a device. A device may be a processor that is optimized for parallel instruction processing, such as, but not limited to, CUDA-enabled GPU 2790, GPU 2792, or another GPGPU, etc. Host code is source code that, after compilation, is executable on a host. A host is a processor that is optimized for sequential instruction processing, such as, but not limited to, CPU 2790.

CUDA source code 2710 can include any number (including zero) of global functions 2712, any number (including zero) of device functions 2714, any number (including zero) of host functions 2716, and any number (including zero) of host/device functions 2718. Global functions 2712, device functions 2714, host functions 2716, and host/device functions 2718 may be mixed in CUDA source code 2710. Each of global functions 2712 may be executable on a device and callable from a host. One or more of global functions 2712 may therefore act as entry points to a device. Each of global functions 2712 can be a kernel. In a technique known as dynamic parallelism, one or more of global functions 2712 can define a kernel that is executable on a device and callable from such a device. A kernel can be executed N (where N is any positive integer) times in parallel by N different threads on a device during execution.

Each of device functions 2714 can be executed on a device and callable from such a device only. Each of host functions 2716 can be executed on a host and callable from such a host only. Each of host/device functions 2716 may define both a host version of a function that is executable on a host and callable from such a host only and a device version of the function that is executable on a device and callable from such a device only.

CUDA source code 2710 may also include any number of calls to any number of functions that may be defined via a CUDA runtime API 2702. CUDA runtime API 2702 may include any number of functions that execute on a host to allocate and deallocate device memory, transfer data between host memory and device memory, manage systems with multiple devices, etc. CUDA source code 2710 may also include any number of calls to any number of functions that may be specified in any number of other CUDA APIs. A CUDA API may be any API that is designed for use by CUDA code. CUDA APIs can include CUDA runtime API 2702, a CUDA driver API, APIs for any number of CUDA libraries, etc, including any API(s) described elsewhere herein. Relative to CUDA runtime API 2702, a CUDA driver API can be a lower-level API but can provide finer-grained control of a device. Examples of CUDA libraries include cuBLAS, cuFFT, cuRAND, cuDNN, etc.

CUDA compiler 2750 may compile input CUDA code (e.g., CUDA source code 2710) to generate host executable code 2770(1) and CUDA device executable code 2784. CUDA compiler 2750 may be, but is not limited to, NVCC. Host executable code 2770(1) can be a compiled version of host code included in input source code that is executable on CPU 2790. CPU 2790 may be any processor that is optimized for sequential instruction processing.

CUDA device executable code 2784 may be a compiled version of device code included in input source code that is executable on CUDA-enabled GPU 2794. CUDA device executable code 2784 may include binary code. CUDA device executable code 2784 can include IR code, such as, but not limited to, PTX code, that is further compiled at runtime into binary code for a specific target device (e.g., CUDA-enabled GPU 2794) by a device driver. CUDA-enabled GPU 2794 may include any processor that is optimized for parallel instruction processing and that supports CUDA. CUDA-enabled GPU 2794 may be developed by NVIDIA Corporation of Santa Clara, CA.

CUDA to HIP translation tool 2720 can be configured to translate CUDA source code 2710 to functionally similar HIP source code 2730. HIP source code 2730 may include a collection of human-readable code in a HIP programming language. HIP code can include human-readable code in a HIP programming language. A HIP programming language can include an extension of the C++ programming language that includes functionally similar versions of CUDA mechanisms to define device code and distinguish between device code and host code. A HIP programming language may include a subset of functionality of a CUDA programming language. For example, a HIP programming language includes mechanism(s) to define global functions 2712, but such a HIP programming language may lack support for dynamic parallelism and therefore global functions 2712 defined in HIP code may be callable from a host only.

HIP source code 2730 may include any number (including zero) of global functions 2712, any number (including zero) of device functions 2714, any number (including zero) of host functions 2716, and any number (including zero) of host/device functions 2718. HIP source code 2730 may also include any number of calls to any number of functions that may be specified in a HIP runtime API 2732. HIP runtime API 2732 may include functionally similar versions of a subset of functions included in CUDA runtime API 2702. HIP source code 2730 may also include any number of calls to any number of functions that may be specified in any number of other HIP APIs. A HIP API may be any API that is designed for use by HIP code and/or ROCm. HIP APIs may include HIP runtime API 2732, a HIP driver API, APIs for any number of HIP libraries, APIs for any number of ROCm libraries, etc.

CUDA to HIP translation tool 2720 can convert each kernel call in CUDA code from a CUDA syntax to a HIP syntax and can convert any number of other CUDA calls in CUDA code to any number of other functionally similar HIP calls. A CUDA call can include a call to a function specified in a CUDA API, and a HIP call can include a call to a function specified in a HIP API. CUDA to HIP translation tool 2720 may convert any number of calls to functions specified in CUDA runtime API 2702 to any number of calls to functions specified in HIP runtime API 2732.

CUDA to HIP translation tool 2720 can include a tool known as hipify-perl that executes a text-based translation process. CUDA to HIP translation tool 2720 can include a tool known as hipify-clang that, relative to hipify-perl, executes a more complex and more robust translation process that involves parsing CUDA code using clang (a compiler front-end) and then translating resulting symbols. Converting CUDA code to HIP code may include modifications (e.g., manual edits) in addition to those performed by CUDA to HIP translation tool 2720.

HIP compiler driver 2740 can include a front end that determines a target device 2746 and then configures a compiler that is compatible with target device 2746 to compile HIP source code 2730. Target device 2746 can include a processor that is optimized for parallel instruction processing. HIP compiler driver 2740 may determine target device 2746 in any technically feasible fashion.

If target device 2746 is compatible with CUDA (e.g., CUDA-enabled GPU 2794), then HIP compiler driver 2740 can generate a HIP/NVCC compilation command 2742. HIP/NVCC compilation command 2742 can configure CUDA compiler 2750 to compile HIP source code 2730 using a HIP to CUDA translation header and a CUDA runtime library. In response to HIP/NVCC compilation command 2742, CUDA compiler 2750 may generate host executable code 2770(1) and CUDA device executable code 2784.

If target device 2746 is not compatible with CUDA, then HIP compiler driver 2740 may generate a HIP/HCC compilation command 2744. HIP/HCC compilation command 2744 can configure HCC 2760 to compile HIP source code 2730 using an HCC header and a HIP/HCC runtime library. In response to HIP/HCC compilation command 2744, HCC 2760 may generate host executable code 2770(2) and HCC device executable code 2782. HCC device executable code 2782 may be a compiled version of device code included in HIP source code 2730 that is executable on GPU 2792. GPU 2792 may be any processor that is optimized for parallel instruction processing, is not compatible with CUDA, and is compatible with HCC. GPU 2792 can be developed by AMD Corporation of Santa Clara, CA. GPU 2792 can include a non-CUDA-enabled GPU 2792.

For explanatory purposes only, three different flows that may be implemented in at least one embodiment to compile CUDA source code 2710 for execution on CPU 2790 and different devices are depicted in FIG. 27. A direct CUDA flow can compile CUDA source code 2710 for execution on CPU 2790 and CUDA-enabled GPU 2794 without translating CUDA source code 2710 to HIP source code 2730. An indirect CUDA flow can translate CUDA source code 2710 to HIP source code 2730 and then compiles HIP source code 2730 for execution on CPU 2790 and CUDA-enabled GPU 2794. A CUDA/HCC flow can translate CUDA source code 2710 to HIP source code 2730 and then can compile HIP source code 2730 for execution on CPU 2790 and GPU 2792.

A direct CUDA flow that may be implemented is depicted via dashed lines and a series of bubbles annotated A1-A3. As depicted with bubble annotated A1, CUDA compiler 2750 can receive CUDA source code 2710 and a CUDA compile command 2748 that can configure CUDA compiler 2750 to compile CUDA source code 2710. CUDA source code 2710 that can be used in a direct CUDA flow can be written in a CUDA programming language that is based on a programming language other than C++ (e.g., C, Fortran, Python, Java, etc.). In response to CUDA compile command 2748, CUDA compiler 2750 can generate host executable code 2770(1) and CUDA device executable code 2784 (depicted with bubble annotated A2). As depicted with bubble annotated A3, host executable code 2770(1) and CUDA device executable code 2784 may be executed on, respectively, CPU 2790 and CUDA-enabled GPU 2794. CUDA device executable code 2784 can include binary code. CUDA device executable code 2784 can include PTX code and can be further compiled into binary code for a specific target device at runtime.

An indirect CUDA flow that may be implemented is depicted via dotted lines and a series of bubbles annotated B1-B6. As depicted with bubble annotated B1, CUDA to HIP translation tool 2720 can receive CUDA source code 2710. As depicted with bubble annotated B2, CUDA to HIP translation tool 2720 can translate CUDA source code 2710 to HIP source code 2730. As depicted with bubble annotated B3, HIP compiler driver 2740 can receive HIP source code 2730 and can determine that target device 2746 is CUDA-enabled.

As depicted with bubble annotated B4, HIP compiler driver 2740 can generate HIP/NVCC compilation command 2742 and can transmit both HIP/NVCC compilation command 2742 and HIP source code 2730 to CUDA compiler 2750. HIP/NVCC compilation command 2742 can configure CUDA compiler 2750 to compile HIP source code 2730 using a HIP to CUDA translation header and a CUDA runtime library. HIP to CUDA translation header can translate any number of mechanisms (e.g., functions) specified in any number of HIP APIs to any number of mechanisms specified in any number of CUDA APIs. CUDA compiler 2750 may use HIP to CUDA translation header in conjunction with a CUDA runtime library corresponding to CUDA runtime API 2702 to generate host executable code 2770(1) and CUDA device executable code 2784. In response to HIP/NVCC compilation command 2742, CUDA compiler 2750 can generate host executable code 2770(1) and CUDA device executable code 2784 (depicted with bubble annotated B5). As depicted with bubble annotated B6, host executable code 2770(1) and CUDA device executable code 2784 may be executed on, respectively, CPU 2790 and CUDA-enabled GPU 2794. CUDA device executable code 2784 can include binary code. CUDA device executable code 2784 can include PTX code and can be further compiled into binary code for a specific target device at runtime.

A CUDA/HCC flow that may be implemented is depicted via solid lines and a series of bubbles annotated C1-C6. As depicted with bubble annotated C1, CUDA to HIP translation tool 2720 can receive CUDA source code 2710. As depicted with bubble annotated C2, CUDA to HIP translation tool 2720 can translate CUDA source code 2710 to HIP source code 2730. As depicted with bubble annotated C3, HIP compiler driver 2740 can receive HIP source code 2730 and can determine that target device 2746 is not CUDA-enabled.

HIP compiler driver 2740 may generate HIP/HCC compilation command 2744 and may transmit both HIP/HCC compilation command 2744 and HIP source code 2730 to HCC 2760 (depicted with bubble annotated C4). HIP/HCC compilation command 2744 can configure HCC 2760 to compile HIP source code 2730 using an HCC header and a HIP/HCC runtime library. HIP/HCC runtime library can correspond to HIP runtime API 2732. HCC header may include any number and type of interoperability mechanisms for HIP and HCC. In response to HIP/HCC compilation command 2744, HCC 2760 can generate host executable code 2770(2) and HCC device executable code 2782 (depicted with bubble annotated C5). As depicted with bubble annotated C6, host executable code 2770(2) and HCC device executable code 2782 may be executed on, respectively, CPU 2790 and GPU 2792.

After CUDA source code 2710 is translated to HIP source code 2730, HIP compiler driver 2740 may subsequently be used to generate executable code for either CUDA-enabled GPU 2794 or GPU 2792 without re-executing CUDA to HIP translation tool 2720. CUDA to HIP translation tool 2720 can translate CUDA source code 2710 to HIP source code 2730 that is then stored in memory. HIP compiler driver 2740 can then configure HCC 2760 to generate host executable code 2770(2) and HCC device executable code 2782 based on HIP source code 2730. In at least one embodiment, HIP compiler driver 2740 subsequently configures CUDA compiler 2750 to generate host executable code 2770(1) and CUDA device executable code 2784 based on stored HIP source code 2730.

An example kernel may be translated by CUDA-to-HIP translation tool 2720 of FIG. 27, in accordance with at least one embodiment. CUDA source code 2710 partitions an overall problem that a given kernel is designed to solve into relatively coarse sub-problems that can independently be solved using thread blocks. Each thread block includes any number of threads. Each sub-problem can be partitioned into relatively fine pieces that can be solved cooperatively in parallel by threads within a thread block. Threads within a thread block can cooperate by sharing data through shared memory and by synchronizing execution to coordinate memory accesses.

CUDA source code 2710 can organize thread blocks associated with a given kernel into a one-dimensional, a two-dimensional, or a three-dimensional grid of thread blocks. Each thread block includes any number of threads, and a grid includes any number of thread blocks.

A kernel can be a function in device code that is defined using a "_global_" declaration specifier. The dimension of a grid that executes a kernel for a given kernel call and associated streams may be specified using a CUDA kernel launch syntax. CUDA kernel launch syntax is specified as "KernelName<<<GridSize, BlockSize, SharedMemorySize, Stream>>>(KernelArguments);". An execution configuration syntax can include a "<<<...>>>" construct that is inserted between a kernel name ("KernelName") and a parenthesized list of kernel arguments ("KernelArguments"). CUDA kernel launch syntax can include a CUDA launch function syntax instead of an execution configuration syntax.

"GridSize" can be of a type dim3 and specify the dimension and size of a grid. Type dim3 may be a CUDA-defined structure that includes unsigned integers x, y, and z. If z is not specified, then z may default to one. If y is not specified, then y may default to one. The number of thread blocks in a grid can be equal to the product of GridSize.x, GridSize.y, and GridSize.z. "BlockSize" can be of type dim3 and specify the dimension and size of each thread block. The number of threads per thread block may be equal to the product of BlockSize.x, BlockSize.y, and BlockSize.z. Each thread that executes a kernel may be given a unique thread ID that is accessible within the kernel through a built-in variable (e.g., "threadIdx").

With respect to CUDA kernel launch syntax, "SharedMemorySize" may be an optional argument that may specify a number of bytes in a shared memory that is dynamically allocated per thread block for a given kernel call in addition to statically allocated memory. With respect to CUDA kernel launch syntax, SharedMemorySize may default to zero. With respect to CUDA kernel launch syntax, "Stream" may be an optional argument that specifies an associated stream and defaults to zero to specify a default stream. A stream may be a sequence of commands (possibly issued by different host threads) that execute in order. Different streams may execute commands out of order with respect to one another or concurrently.

CUDA source code 2710 may include a kernel definition for an example kernel "MatAdd" and a main function. Main function may be host code that executes on a host and includes a kernel call that causes kernel MatAdd to execute on a device. Kernel MatAdd can add two matrices A and B of size NxN, where N is a positive integer, and store the result in a matrix C. Main function can define a threadsPerBlock variable as 16 by 16 and a numBlocks variable as N/16 by N/16. Main function can then specify kernel call "MatAdd<<<numBlocks, threadsPerBlock>>>(A, B, C);". As per CUDA kernel launch syntax, kernel MatAdd can be executed using a grid of thread blocks having a dimension N/16 by N/16, where each thread block has a dimension of 16 by 16. Each thread block can include 256 threads, a grid can be created with enough blocks to have one thread per matrix element, and each thread in such a grid may execute kernel MatAdd to perform one pair-wise addition.

While translating CUDA source code 2710 to HIP source code 2730, CUDA to HIP translation tool 2720 may translate each kernel call in CUDA source code 2710 from CUDA kernel launch syntax to a HIP kernel launch syntax and may convert any number of other CUDA calls in source code 2710 to any number of other functionally similar HIP calls. HIP kernel launch syntax can be specified as "hipLaunchKernelGGL(KernelName,GridSize, BlockSize, SharedMemorySize, Stream, KernelArguments);". Each of KernelName, GridSize, BlockSize, ShareMemorySize, Stream, and KernelArguments can have the same meaning in HIP kernel launch syntax as in CUDA kernel launch syntax (described previously herein). Arguments SharedMemorySize and Stream can be required in HIP kernel launch syntax and can be optional in CUDA kernel launch syntax.

A portion of HIP source code 2730 can be identical to a portion of CUDA source code 2710 depicted except for a kernel call that causes kernel MatAdd to execute on a device. Kernel MatAdd may be defined in HIP source code 2730 with the same "_global_" declaration specifier with which kernel MatAdd is defined in CUDA source code 2710. A kernel call in HIP source code 2730 may be "hipLaunchKernelGGL(MatAdd, numBlocks, threadsPerBlock, 0, 0, A, B, C);", while a corresponding kernel call in CUDA source code 2710 is "MatAdd<<<numBlocks, threadsPerBlock>>>(A, B, C);".

Other implementations are contemplated and can be performed similarly to the CUDA and HIP implementations above, such as oneAPI, OpenCL, and other programming platforms. Code can be translated in any direction. For example, CUDA can be translated to HIP, and CUDA can be translated to OpenCL. SnuCL-Tr and CUCL can be used to translate OpenCL to CUDA or CUDA to OpenCL, respectively. Compiled code or intermediate representations (e.g., CUDA PTX code) can also be translated to run on other processor platforms (e.g., AMD or Intel). For example, PTX code can be translated to run on Intel or AMD processors using a translation tool, such as ZLUDA.

One or more techniques described herein can utilize a oneAPI programming model. A oneAPI programming model can refer to a programming model for interacting with various compute accelerator architectures. OneAPI may refer to an application programming interface (API) designed to interact with various compute accelerator architectures. A oneAPI programming model may utilize a DPC++ programming language. A DPC++ programming language may refer to a high-level language for data parallel programming productivity. A DPC++ programming language can be based at least in part on C and/or C++ programming languages. A oneAPI programming model can be a programming model such as, but not limited to, those developed by Intel Corporation of Santa Clara, CA.

OneAPI and/or oneAPI programming model can be utilized to interact with various accelerator, GPU, processor, and/or variations thereof, architectures. OneAPI may include a set of libraries that implement various functionalities. OneAPI may include at least a oneAPI DPC++ library, a oneAPI math kernel library, a oneAPI data analytics library, a oneAPI deep neural network library, a oneAPI collective communications library, a oneAPI threading building blocks library, a oneAPI video processing library, and/or variations thereof.

A oneAPI DPC++ library, also referred to as oneDPL, can be a library that implements algorithms and functions to accelerate DPC++ kernel programming. OneDPL may implement one or more standard template library (STL) functions. OneDPL can implement one or more parallel STL functions. OneDPL can provide a set of library classes and functions such as, but not limited to, parallel algorithms, iterators, function object classes, range-based API, and/or variations thereof. OneDPL can implement one or more classes and/or functions of a C++ standard library. OneDPL can implement one or more random number generator functions.

A oneAPI math kernel library, also referred to as oneMKL, can be a library that implements various optimized and parallelized routines for various mathematical functions and/or operations. OneMKL can implement one or more basic linear algebra subprograms (BLAS) and/or linear algebra package (LAPACK) dense linear algebra routines. OneMKL may implement one or more sparse BLAS linear algebra routines. OneMKL can implement one or more random number generators (RNGs). OneMKL may implement one or more vector mathematics (VM) routines for mathematical operations on vectors. OneMKL may implement one or more Fast Fourier Transform (FFT) functions.

A oneAPI data analytics library, also referred to as oneDAL, can include a library that implements various data analysis applications and distributed computations. OneDAL can implement various algorithms for preprocessing, transformation, analysis, modeling, validation, and decision making for data analytics, in batch, online, and distributed processing modes of computation. OneDAL can implement various C++ and/or Java APIs and various connectors to one or more data sources. OneDAL may implement DPC++ API extensions to a traditional C++ interface and enables GPU usage for various algorithms.

A oneAPI deep neural network library, also referred to as oneDNN, can include a library that implements various deep learning functions. OneDNN may implement various neural network, machine learning, and deep learning functions, algorithms, and/or variations thereof.

A oneAPI collective communications library, also referred to as oneCCL, can include a library that implements various applications for deep learning and machine learning workloads. OneCCL can be built upon lower-level communication middleware, such as, but not limited to, message passing interface (MPI) and libfabrics. OneCCL can enable a set of deep learning specific optimizations, such as, but not limited to, prioritization, persistent operations, out of order executions, and/or variations thereof. OneCCL can implement various CPU and GPU functions.

A oneAPI threading building blocks library, also referred to as oneTBB, can include a library that implements various parallelized processes for various applications. OneTBB can be utilized for task-based, shared parallel programming on a host. OneTBB may implement generic parallel algorithms. OneTBB may implement concurrent containers. OneTBB may implement a scalable memory allocator. OneTBB may implement a work-stealing task scheduler. OneTBB may implement low-level synchronization primitives. OneTBB may be compiler-independent and usable on various processors, such as, but not limited to, GPUs, PPUs, CPUs, and/or variations thereof.

A oneAPI video processing library, also referred to as oneVPL, can include a library that is utilized for accelerating video processing in one or more applications. OneVPL can implement various video decoding, encoding, and processing functions. OneVPL can implement various functions for media pipelines on CPUs, GPUs, and other accelerators. OneVPL can implement device discovery and selection in media centric and video analytics workloads. OneVPL can implement API primitives for zero-copy buffer sharing.

A oneAPI programming model may utilize a DPC++ programming language. A DPC++ programming language can include a programming language that can include functionally similar versions of CUDA mechanisms to define device code and distinguish between device code and host code. A DPC++ programming language may include a subset of functionality of a CUDA programming language. One or more CUDA programming model operations may be performed using a oneAPI programming model using a DPC++ programming language.

Any application programming interface (API) described herein can be compiled into one or more instructions, operations, or any other signal by a compiler, interpreter, or other software tool. Compilation can include generating one or more machine-executable instructions, operations, or other signals from source code. An API compiled into one or more instructions, operations, or other signals, when performed, can cause one or more processors such as, but not limited to, processors described, e.g., in FIGS. 12-24, or any other logic circuit further described herein to perform one or more computing operations.

In at least one embodiment, translation tools described elsewhere herein, such as, but not limited to, can include one or more circuits to translate CUDA code to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations to HIP, oneAPI, OpenCL, or any other language used to perform any of the operations described above or elsewhere herein. One or more circuits can be configured by software to translate CUDA code to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations to HIP, oneAPI, OpenCL, or any other language used to perform any of the operations described above or elsewhere herein.

### AUTONOMOUS VEHICLE

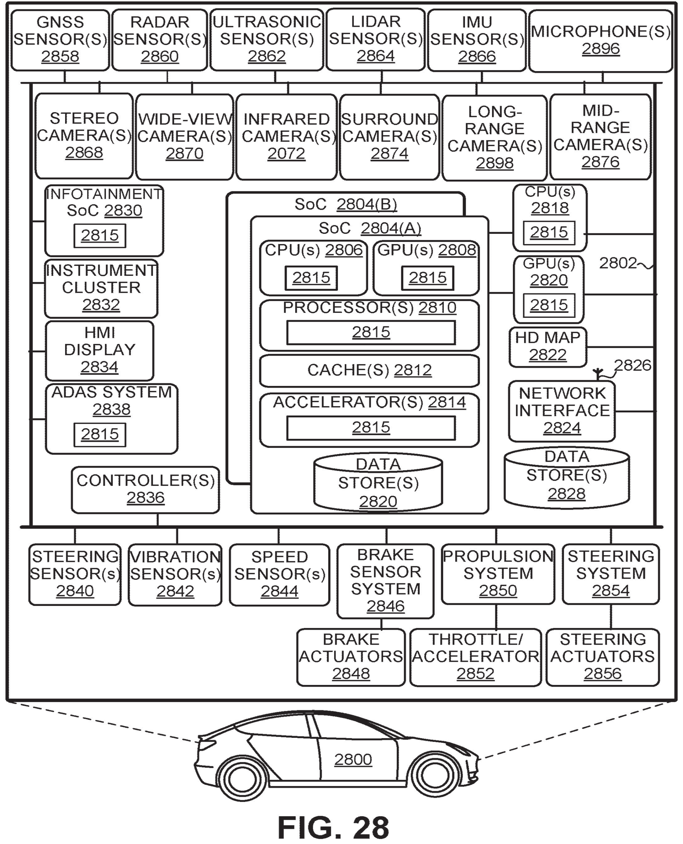

FIG. 28 illustrates an example of an autonomous vehicle 2800, in accordance with at least one embodiment. Autonomous vehicle 2800 (alternatively referred to herein as "vehicle 2800") may be a passenger vehicle, such as, but not limited to, a car, a truck, a bus, and/or another type of vehicle that accommodates one or more passengers. In at least one embodiment, vehicle 2800 may be a semi-tractor-trailer truck used for hauling cargo. Vehicle 2800 may be an airplane, robotic vehicle, or other kind of vehicle.

Autonomous vehicles may be described in terms of automation levels, defined by National Highway Traffic Safety Administration ("NHTSA"), a division of US Department of Transportation, and Society of Automotive Engineers ("SAE") "Taxonomy and Definitions for Terms Related to Driving Automation Systems for On-Road Motor Vehicles" (e.g., Standard No. J3016-201806, published on June 15, 2018, Standard No. J3016-201609, published on September 30, 2016, and previous and future versions of this standard). In at least one embodiment, vehicle 2800 may be capable of functionality in accordance with one or more of Level 1 through Level 5 of autonomous driving levels. For example, in at least one embodiment, vehicle 2800 may be capable of conditional automation (Level 3), high automation (Level 4), and/or full automation (Level 5), depending on embodiment.

Vehicle 2800 may include components such as, but not limited to, a chassis, a vehicle body, wheels (e.g., 2, 4, 6, 8, 18, etc.), tires, axles, and other components of a vehicle. Vehicle 2800 may include a propulsion system 2850, such as, but not limited to, an internal combustion engine, hybrid electric power plant, an all-electric engine, and/or another propulsion system type. Propulsion system 2850 may be connected to a drive train of vehicle 2800, which may include a transmission, to enable propulsion of vehicle 2800. Propulsion system 2850 may be controlled in response to receiving signals from a throttle/accelerator(s) 2852.

A steering system 2854, which may include a steering wheel, is used to steer vehicle 2800 (e.g., along a desired path or route) when propulsion system 2850 is operating (e.g., when vehicle 2800 is in motion). Steering system 2854 may receive signals from steering actuator(s) 2856. A steering wheel may be optional for full automation (Level 5) functionality. A brake sensor system 2846 may be used to operate vehicle brakes in response to receiving signals from brake actuator(s) 2848 and/or brake sensors.

Controller(s) 2836, which may include one or more system on chips ("SoCs") and/or graphics processing unit(s) ("GPU(s)"), can provide signals (e.g., representative of commands) to one or more components and/or systems of vehicle 2800. For instance, controller(s) 2836 may send signals to operate vehicle brakes via brake actuator(s) 2848, to operate steering system 2854 via steering actuator(s) 2856, to operate propulsion system 2850 via throttle/accelerator(s) 2852. Controller(s) 2836 may include one or more onboard (e.g., integrated) computing devices that process sensor signals, and output operation commands (e.g., signals representing commands) to enable autonomous driving and/or to assist a human driver in driving vehicle 2800. Controller(s) 2836 may include a first controller for autonomous driving functions, a second controller for functional safety functions, a third controller for artificial intelligence functionality (e.g., computer vision), a fourth controller for infotainment functionality, a fifth controller for redundancy in emergency conditions, and/or other controllers. A single controller may handle two or more of above functionalities, two or more controllers may handle a single functionality, and/or any combination thereof.

Controller(s) 2836 may provide signals for controlling one or more components and/or systems of vehicle 2800 in response to sensor data received from one or more sensors (e.g., sensor inputs). Sensor data may be received from, for example, global navigation satellite systems ("GNSS") sensor(s) 2858 (e.g., Global Positioning System sensor(s)), RADAR sensor(s) 2860, ultrasonic sensor(s) 2862, LIDAR sensor(s) 2864, inertial measurement unit ("IMU") sensor(s) 2866 (e.g., accelerometer(s), gyroscope(s), a magnetic compass or magnetic compasses, magnetometer(s), etc.), microphone(s) 2896, stereo camera(s) 2868, wide-view camera(s) 2870 (e.g., fisheye cameras), infrared camera(s) 2872, surround camera(s) 2874 (e.g., 360 degree cameras), long-range cameras 2898, mid-range camera(s) 2876, speed sensor(s) 2844 (e.g., for measuring speed of vehicle 2800), vibration sensor(s) 2842, steering sensor(s) 2840, brake sensor(s) (e.g., as part of brake sensor system 2846), and/or other sensor types.

One or more of controller(s) 2836 may receive inputs (e.g., represented by input data) from an instrument cluster 2832 of vehicle 2800 and provide outputs (e.g., represented by output data, display data, etc.) via a human-machine interface ("HMI") display 2834, an audible annunciator, a loudspeaker, and/or via other components of vehicle 2800. Outputs may include information such as, but not limited to, vehicle velocity, speed, time, map data (e.g., a High Definition map (not shown), location data (e.g., vehicle's 2800 location, such as, but not limited to, on a map), direction, location of other vehicles (e.g., an occupancy grid), information about objects and status of objects as perceived by controller(s) 2836, etc. For example, HMI display 2834 may display information about presence of one or more objects (e.g., a street sign, caution sign, traffic light changing, etc.), and/or information about driving maneuvers vehicle has made, is making, or will make (e.g., changing lanes now, taking exit 34B in two miles, etc.).

Each of components, features, and systems of vehicle 2800 in FIG. 28 may be connected via a bus 2802. Bus 2802 may include a CAN data interface (alternatively referred to herein as a "CAN bus"). A CAN may be a network inside vehicle 2800 used to aid in control of various features and functionality of vehicle 2800, such as, but not limited to, actuation of brakes, acceleration, braking, steering, windshield wipers, etc. Bus 2802 may be configured to have dozens or even hundreds of nodes, each with its own unique identifier (e.g., a CAN ID). Bus 2802 may be read to find steering wheel angle, ground speed, engine revolutions per minute ("RPMs"), button positions, and/or other vehicle status indicators. Bus 2802 may be a CAN bus that is ASIL B compliant.

In addition to, or alternatively from CAN, FlexRay and/or Ethernet protocols may be used. There may be any number of busses forming bus 2802, which may include zero or more CAN busses, zero or more FlexRay busses, zero or more Ethernet busses, and/or zero or more other types of busses using different protocols. Two or more busses may be used to perform different functions, and/or may be used for redundancy. For example, a first bus may be used for collision avoidance functionality and a second bus may be used for actuation control. Each bus of bus 2802 may communicate with any of components of vehicle 2800, and two or more busses of bus 2802 may communicate with corresponding components. Each of any number of system(s) on chip(s) ("SoC(s)") 2804 (such as, but not limited to, SoC 2804(A) and SoC 2804(B)), each of controller(s) 2836, and/or each computer within vehicle may have access to same input data (e.g., inputs from sensors of vehicle 2800), and may be connected to a common bus, such CAN bus.

Any number of cameras can be positioned at any choice of camera locations and fields of view for autonomous vehicle 2800 of FIG. 28A, in accordance with at least one embodiment. Cameras and respective fields of view may be one example embodiment and are not intended to be limiting. For instance, additional and/or alternative cameras may be included and/or cameras may be located at different locations on vehicle 2800.

Camera types for cameras may include digital cameras that may be adapted for use with components and/or systems of vehicle 2800. Camera(s) may operate at automotive safety integrity level ("ASIL") B and/or at another ASIL. Camera types may be capable of any image capture rate, such as, but not limited to, 60 frames per second (fps), 1220 fps, 240 fps, etc., depending on embodiment. Cameras may be capable of using rolling shutters, global shutters, another type of shutter, or a combination thereof. In at least one embodiment, color filter array may include a red clear clear clear ("RCCC") color filter array, a red clear clear blue ("RCCB") color filter array, a red blue green clear ("RBGC") color filter array, a Foveon X3 color filter array, a Bayer sensors ("RGGB") color filter array, a monochrome sensor color filter array, and/or another type of color filter array. Clear pixel cameras, such as, but not limited to, cameras with an RCCC, an RCCB, and/or an RBGC color filter array, may be used in an effort to increase light sensitivity.

One or more of camera(s) may be used to perform advanced driver assistance systems ("ADAS") functions (e.g., as part of a redundant or fail-safe design). For example, a MultiFunction Mono Camera may be installed to provide functions including lane departure warning, traffic sign assist and intelligent headlamp control. One or more of camera(s) (e.g., all cameras) may record and provide image data (e.g., video) simultaneously.

One or more cameras may be mounted in a mounting assembly, such as, but not limited to, a custom designed (three-dimensional ("3D") printed) assembly, in order to cut out stray light and reflections from within vehicle 2800 (e.g., reflections from dashboard reflected in windshield mirrors) which may interfere with camera image data capture abilities. With reference to wing-mirror mounting assemblies, wing-mirror assemblies may be custom 3D printed so that a camera mounting plate matches a shape of a wing-mirror. Camera(s) may be integrated into wing-mirrors. For side-view cameras, camera(s) may also be integrated within four pillars at each corner of a cabin.

Cameras with a field of view that include portions of an environment in front of vehicle 2800 (e.g., front-facing cameras) may be used for surround view, to help identify forward facing paths and obstacles, as well as aid in, with help of one or more of controller(s) 2836 and/or control SoCs, providing information critical to generating an occupancy grid and/or determining preferred vehicle paths. Front-facing cameras may be used to perform many similar ADAS functions as LIDAR, including emergency braking, pedestrian detection, and collision avoidance. Front-facing cameras may also be used for ADAS functions and systems including Lane Departure Warnings ("LDW"), Autonomous Cruise Control ("ACC"), and/or other functions such as, but not limited to, traffic sign recognition.

A variety of cameras may be used in a front-facing configuration, including, for example, a monocular camera platform that includes a CMOS ("complementary metal oxide semiconductor") color imager. A wide-view camera 2870 may be used to perceive objects coming into view from a periphery (e.g., pedestrians, crossing traffic or bicycles). There may be any number (including zero) wide-view cameras 2870 on vehicle 2800. Any number of long-range camera(s) 2898 (e.g., a long-view stereo camera pair) may be used for depth-based object detection, especially for objects for which a neural network has not yet been trained. Long-range camera(s) 2898 may also be used for object detection and classification, as well as basic object tracking.

Any number of stereo camera(s) 2868 may also be included in a front-facing configuration. One or more of stereo camera(s) 2868 may include an integrated control unit comprising a scalable processing unit, which may provide a programmable logic ("FPGA") and a multi-core micro-processor with an integrated Controller Area Network ("CAN") or Ethernet interface on a single chip. Such a unit may be used to generate a 3D map of an environment of vehicle 2800, including a distance estimate for all points in an image. One or more of stereo camera(s) 2868 may include compact stereo vision sensor(s) that may include two camera lenses (one each on left and right) and an image processing chip that may measure distance from vehicle 2800 to target object and use generated information (e.g., metadata) to activate autonomous emergency braking and lane departure warning functions. Other types of stereo camera(s) 2868 may be used in addition to, or alternatively from, those described herein.

Cameras with a field of view that include portions of environment to sides of vehicle 2800 (e.g., side-view cameras) may be used for surround view, providing information used to create and update an occupancy grid, as well as to generate side impact collision warnings. For example, surround camera(s) 2874 (e.g., four surround cameras) could be positioned on vehicle 2800. Surround camera(s) 2874 may include any number and combination of wide-view cameras, fisheye camera(s), 360 degree camera(s), and/or similar cameras. For instance, four fisheye cameras may be positioned on a front, a rear, and sides of vehicle 2800. Vehicle 2800 may use three surround camera(s) 2874 (e.g., left, right, and rear), and may leverage one or more other camera(s) (e.g., a forward-facing camera) as a fourth surround-view camera.

Cameras with a field of view that include portions of an environment behind vehicle 2800 (e.g., rear-view cameras) may be used for parking assistance, surround view, rear collision warnings, and creating and updating an occupancy grid. A wide variety of cameras may be used including, but not limited to, cameras that may be also suitable as a front-facing camera(s) (e.g., long-range cameras 2898 and/or mid-range camera(s) 2876, stereo camera(s) 2868, infrared camera(s) 2872, etc.,) as described herein.

Vehicle 2800 may include any number of SoCs 2804 or other processors described elsewhere herein, such as, but not limited to, processors and/or components illustrated and described for FIGS. 12-24. Each of SoCs 2804 may include central processing units ("CPU(s)") 2806, graphics processing units ("GPU(s)") 2808, processor(s) 2810, cache(s) 2812, accelerator(s) 2814, data store(s) 2816, and/or other components and features not illustrated. SoC(s) 2804 may be used to control vehicle 2800 in a variety of platforms and systems. For example, SoC(s) 2804 may be combined in a system (e.g., system of vehicle 2800) with a High Definition ("HD") map 2822 which may obtain map refreshes and/or updates via network interface 2824 from one or more servers (not shown). SoCs 2804 may include logic 2815 that can include any combination of software logic, hardware logic, and/or firmware logic to provide functionality or operations described herein, wherein logic may be, collectively or individually, embodied as circuitry that forms part of a larger system, for example, an integrated circuit (IC), system-on-chip (SoC), or one or processors (e.g., CPU, GPU).

CPU(s) 2806 may include a CPU cluster or CPU complex (alternatively referred to herein as a "CCPLEX"). CPU(s) 2806 may include multiple cores and/or level two ("L2") caches. For instance, CPU(s) 2806 may include eight cores in a coherent multi-processor configuration. CPU(s) 2806 may include four dual-core clusters where each cluster has a dedicated L2 cache (e.g., a 2 megabyte (MB) L2 cache). CPU(s) 2806 (e.g., CCPLEX) may be configured to support simultaneous cluster operations enabling any combination of clusters of CPU(s) 2806 to be active at any given time.

One or more of CPU(s) 2806 may implement power management capabilities that include one or more of following features: individual hardware blocks may be clock-gated automatically when idle to save dynamic power; each core clock may be gated when such core is not actively executing instructions due to execution of Wait for Interrupt ("WFI")/Wait for Event ("WFE") instructions; each core may be independently power-gated; each core cluster may be independently clock-gated when all cores may be clock-gated or power-gated; and/or each core cluster may be independently power-gated when all cores may be power-gated. CPU(s) 2806 may further implement an enhanced algorithm for managing power states, where allowed power states and expected wakeup times may be specified, and hardware/microcode determines which best power state to enter for core, cluster, and CCPLEX. Processing cores may support simplified power state entry sequences in software with work offloaded to microcode.

GPU(s) 2808 may include an integrated GPU (alternatively referred to herein as an "iGPU"). GPU(s) 2808 may be programmable and may be efficient for parallel workloads. GPU(s) 2808 may use an enhanced tensor instruction set. GPU(s) 2808 may include one or more streaming microprocessors, where each streaming microprocessor may include a level one ("L1") cache (e.g., an L1 cache with at least 96 KB storage capacity), and two or more streaming microprocessors may share an L2 cache (e.g., an L2 cache with a 512 KB storage capacity). GPU(s) 2808 may include at least eight streaming microprocessors. GPU(s) 2808 may use compute application programming interface(s) (API(s)). GPU(s) 2808 may use one or more parallel computing platforms and/or programming models (e.g., NVIDIA's CUDA model). Streaming microprocessors may be referred to as streaming multiprocessors ("SMs"), stream processors ("SPs"), stream processing units ("SPUs"), compute units ("CUs"), execution units ("EUs"), and/or slices, where a slice in this context can refer to a portion of processing resources in a processing unit (e.g., 16 cores, a ray tracing unit, a thread director or scheduler).

One or more of GPU(s) 2808 may be power-optimized for best performance in automotive and embedded use cases. For example, GPU(s) 2808 could be fabricated on Fin field-effect transistor ("FinFET") circuitry. Each streaming microprocessor may incorporate a number of mixed-precision processing cores partitioned into multiple blocks. For example, 64 PF32 cores and 32 FP64 cores could be partitioned into four processing blocks. Each processing block could be allocated 16 FP32 cores, 8 FP64 cores, 16 INT32 cores, two mixed-precision NVIDIA Tensor cores for deep learning matrix arithmetic, a level zero ("L0") instruction cache, a scheduler (e.g., warp scheduler) or sequencer, a dispatch unit, and/or a 64 KB register file. Streaming microprocessors may include independent parallel integer and floating-point data paths to provide for efficient execution of workloads with a mix of computation and addressing calculations. Streaming microprocessors may include independent thread scheduling capability to enable finer-grain synchronization and cooperation between parallel threads. Streaming microprocessors may include a combined L1 data cache and shared memory unit in order to improve performance while simplifying programming.

One or more of GPU(s) 2808 may include a high bandwidth memory ("HBM") and/or a 16 GB HBM2 memory subsystem to provide, in some examples, about 900 GB/second peak memory bandwidth. In addition to, or alternatively from, HBM memory, a synchronous graphics random-access memory ("SGRAM") may be used, such as, but not limited to, a graphics double data rate type five synchronous random-access memory ("GDDR5").

GPU(s) 2808 may include unified memory technology. Address translation services ("ATS") support may be used to allow GPU(s) 2808 to access CPU(s) 2806 page tables directly. When a GPU of GPU(s) 2808 memory management unit ("MMU") experiences a miss, an address translation request may be transmitted to CPU(s) 2806. In response, 2 CPU of CPU(s) 2806 may look in its page tables for a virtual-to-physical mapping for an address and transmit translation back to GPU(s) 2808. Unified memory technology may allow a single unified virtual address space for memory of both CPU(s) 2806 and GPU(s) 2808, thereby simplifying GPU(s) 2808 programming and porting of applications to GPU(s) 2808.

GPU(s) 2808 may include any number of access counters that may keep track of frequency of access of GPU(s) 2808 to memory of other processors. Access counter(s) may help ensure that memory pages may be moved to physical memory of a processor that is accessing pages most frequently, thereby improving efficiency for memory ranges shared between processors.

One or more of SoC(s) 2804 may include any number of cache(s) 2812, including those described herein. For example, cache(s) 2812 could include a level three ("L3") cache that is available to both CPU(s) 2806 and GPU(s) 2808 (e.g., that is connected to CPU(s) 2806 and GPU(s) 2808). Cache(s) 2812 may include a write-back cache that may keep track of states of lines, such as, but not limited to, by using a cache coherence protocol (e.g., MEI, MESI, MSI, etc.). A L3 cache may include 4 MB of memory or more, depending on embodiment, although smaller cache sizes may be used.

One or more of SoC(s) 2804 may include one or more accelerator(s) 2814 (e.g., hardware accelerators, software accelerators, or a combination thereof). SoC(s) 2804 may include a hardware acceleration cluster that may include optimized hardware accelerators and/or large on-chip memory. Large on-chip memory (e.g., 4 MB of SRAM), may enable a hardware acceleration cluster to accelerate neural networks and other calculations. A hardware acceleration cluster may be used to complement GPU(s) 2808 and to off-load some of tasks of GPU(s) 2808 (e.g., to free up more cycles of GPU(s) 2808 for performing other tasks). Accelerator(s) 2814 could be used for targeted workloads (e.g., perception, convolutional neural networks ("CNNs"), recurrent neural networks ("RNNs"), etc.) that may be stable enough to be amenable to acceleration. A CNN may include a region-based or regional convolutional neural networks ("RCNNs") and Fast RCNNs (e.g., as used for object detection) or other type of CNN.

Accelerator(s) 2814 (e.g., hardware acceleration cluster) may include one or more deep learning accelerator ("DLA"). DLA(s) may include one or more Tensor processing units ("TPUs") that may be configured to provide an additional ten trillion operations per second for deep learning applications and inferencing, such as TPU(s) described herein, e.g., in FIG. 22. TPUs may be accelerators configured to, and optimized for, performing image processing functions (e.g., for CNNs, RCNNs, etc.). DLA(s) may further be optimized for a specific set of neural network types and floating point operations, as well as inferencing. Design of DLA(s) may provide more performance per millimeter than a typical general-purpose GPU, and typically vastly exceeds performance of a CPU. TPU(s) may perform several functions, including a single-instance convolution function, supporting, for example, INT8, INT16, and FP16 data types for both features and weights, as well as post-processor functions. DLA(s) may quickly and efficiently execute neural networks, especially CNNs, on processed or unprocessed data for any of a variety of functions, including, for example: a CNN for object identification and detection using data from camera sensors; a CNN for distance estimation using data from camera sensors; a CNN for emergency vehicle detection and identification and detection using data from microphones; a CNN for facial recognition and vehicle owner identification using data from camera sensors; and/or a CNN for security and/or safety related events.

DLA(s) may perform any function of GPU(s) 2808, and by using an inference accelerator, for example, a designer may target either DLA(s) or GPU(s) 2808 for any function. For example, a designer may focus processing of CNNs and floating point operations on DLA(s) and leave other functions to GPU(s) 2808 and/or accelerator(s) 2814.

Accelerator(s) 2814 may include programmable vision accelerator ("PVA"), which may alternatively be referred to herein as a computer vision accelerator. PVA may be designed and configured to accelerate computer vision algorithms for advanced driver assistance system ("ADAS") 2838, autonomous driving, augmented reality ("AR") applications, and/or virtual reality ("VR") applications. PVA may provide a balance between performance and flexibility. For example, each PVA may include, for example, any number of reduced instruction set computer ("RISC") cores, direct memory access ("DMA"), and/or any number of vector processors.

RISC cores may interact with image sensors (e.g., image sensors of any cameras described herein), image signal processor(s), etc. Each RISC core may include any amount of memory. RISC cores may use any of a number of protocols, depending on embodiment. RISC cores may execute a real-time operating system ("RTOS"). RISC cores may be implemented using one or more integrated circuit devices, application specific integrated circuits ("ASICs"), and/or memory devices. For example, RISC cores could include an instruction cache and/or a tightly coupled RAM.

DMA may enable components of PVA to access system memory independently of CPU(s) 2806. DMA may support any number of features used to provide optimization to a PVA including supporting multi-dimensional addressing and/or circular addressing. DMA may support up to six or more dimensions of addressing, which may include block width, block height, block depth, horizontal block stepping, vertical block stepping, and/or depth stepping.

Vector processors may be programmable processors that may be designed to efficiently and flexibly execute programming for computer vision algorithms and provide signal processing capabilities. A PVA may include a PVA core and two vector processing subsystem partitions. A PVA core may include a processor subsystem, DMA engine(s) (e.g., two DMA engines), and/or other peripherals. A vector processing subsystem may operate as a primary processing engine of a PVA, and may include a vector processing unit ("VPU"), an instruction cache, and/or vector memory (e.g., "VMEM"). VPU core may include a digital signal processor such as, but not limited to, a single instruction, multiple data ("SIMD"), very long instruction word ("VLIW") digital signal processor. A combination of SIMD and VLIW may enhance throughput and speed.

Each of vector processors may include an instruction cache and may be coupled to dedicated memory. As a result, each of vector processors may be configured to execute independently of other vector processors. Vector processors that may be included in a particular PVA may be configured to employ data parallelism. For instance, plurality of vector processors included in a single PVA may execute a common computer vision algorithm, but on different regions of an image. Vector processors included in a particular PVA may simultaneously execute different computer vision algorithms, on one image, or even execute different algorithms on sequential images or portions of an image. Among other things, any number of PVAs may be included in hardware acceleration cluster and any number of vector processors may be included in each PVA. PVA may include additional error correcting code ("ECC") memory, to enhance overall system safety.

Accelerator(s) 2814 may include a computer vision network on-chip and static random-access memory ("SRAM"), for providing a high-bandwidth, low latency SRAM for accelerator(s) 2814. On-chip memory may include at least 4 MB SRAM, including, for example, eight field-configurable memory blocks, that may be accessible by both a PVA and a DLA. Each pair of memory blocks may include an advanced peripheral bus ("APB") interface, configuration circuitry, a controller, and a multiplexer. Any type of memory may be used. A PVA and a DLA may access memory via a backbone that provides a PVA and a DLA with high-speed access to memory. A backbone may include a computer vision network on-chip that interconnects a PVA and a DLA to memory (e.g., using APB).

A computer vision network on-chip may include an interface that determines, before transmission of any control signal/address/data, that both a PVA and a DLA provide ready and valid signals. An interface may provide for separate phases and separate channels for transmitting control signals/addresses/data, as well as burst-type communications for continuous data transfer. An interface may comply with International Organization for Standardization ("ISO") 26262 or International Electrotechnical Commission ("IEC") 61508 standards, although other standards and protocols may be used.

One or more of SoC(s) 2804 may include a real-time ray-tracing hardware accelerator. Real-time ray-tracing hardware accelerator may be used to quickly and efficiently determine positions and extents of objects (e.g., within a world model), to generate real-time visualization simulations, for RADAR signal interpretation, for sound propagation synthesis and/or analysis, for simulation of SONAR systems, for general wave propagation simulation, for comparison to LIDAR data for purposes of localization and/or other functions, and/or for other uses.

Accelerator(s) 2814 can have a wide array of uses for autonomous driving. A PVA may be used for key processing stages in ADAS and autonomous vehicles. A PVA's capabilities may be a good match for algorithmic domains needing predictable processing, at low power and low latency. In other words, a PVA can perform well on semi-dense or dense regular computation, even on small data sets, which might require predictable run-times with low latency and low power. In vehicle 2800, PVAs might be designed to run classic computer vision algorithms, as they can be efficient at object detection and operating on integer math. For example, a PVA is used to perform computer stereo vision. A semi-global matching-based algorithm may be used in some examples, although this is not intended to be limiting. Applications for Level 3-5 autonomous driving use motion estimation/stereo matching on-the-fly (e.g., structure from motion, pedestrian recognition, lane detection, etc.). A PVA may perform computer stereo vision functions on inputs from two monocular cameras. A PVA may be used to perform dense optical flow. For example, a PVA could process raw RADAR data (e.g., using a 4D Fast Fourier Transform) to provide processed RADAR data. A PVA is used for time of flight depth processing, by processing raw time of flight data to provide processed time of flight data, for example.

A DLA may be used to run any type of network to enhance control and driving safety, including, for example, a neural network that outputs a measure of confidence for each object detection. Confidence may be represented or interpreted as a probability, or as providing a relative "weight" of each detection compared to other detections. A confidence measure enables a system to make further decisions regarding which detections should be considered as true positive detections rather than false positive detections. A system may set a threshold value for confidence and consider only detections exceeding threshold value as true positive detections. When an automatic emergency braking ("AEB") system is used, false positive detections can cause vehicle to automatically perform emergency braking, which is obviously undesirable. Highly confident detections may be considered as triggers for AEB. a DLA may run a neural network for regressing confidence value. A neural network may take as its input at least some subset of parameters, such as, but not limited to, bounding box dimensions, ground plane estimate obtained (e.g., from another subsystem), output from IMU sensor(s) 2866 that correlates with vehicle 2800 orientation, distance, 3D location estimates of object obtained from neural network and/or other sensors (e.g., LIDAR sensor(s) 2864 or RADAR sensor(s) 2860), among others.

One or more of SoC(s) 2804 may include data store(s) 2816 (e.g., memory). Data store(s) 2816 may be on-chip memory of SoC(s) 2804, which may store neural networks to be executed on GPU(s) 2808 and/or a DLA. Data store(s) 2816 may be large enough in capacity to store multiple instances of neural networks for redundancy and safety. Data store(s) 2816 may comprise L2 or L3 cache(s).

One or more of SoC(s) 2804 may include any number of processor(s) 2810 (e.g., embedded processors). Processor(s) 2810 may include a boot and power management processor that may be a dedicated processor and subsystem to handle boot power and management functions and related security enforcement. A boot and power management processor may be a part of a boot sequence of SoC(s) 2804 and may provide runtime power management services. A boot power and management processor may provide clock and voltage programming, assistance in system low power state transitions, management of SoC(s) 2804 thermals and temperature sensors, and/or management of SoC(s) 2804 power states. Each temperature sensor may be implemented as a ring-oscillator whose output frequency is proportional to temperature, and SoC(s) 2804 may use ring-oscillators to detect temperatures of CPU(s) 2806, GPU(s) 2808, and/or accelerator(s) 2814. If temperatures may be determined to exceed a threshold, then a boot and power management processor may enter a temperature fault routine and put SoC(s) 2804 into a lower power state and/or put vehicle 2800 into a chauffeur to safe stop mode (e.g., bring vehicle 2800 to a safe stop).

Processor(s) 2810 may further include a set of embedded processors that may serve as an audio processing engine which may be an audio subsystem that enables full hardware support for multi-channel audio over multiple interfaces, and a broad and flexible range of audio I/O interfaces. An audio processing engine is a dedicated processor core with a digital signal processor with dedicated RAM.

Processor(s) 2810 may further include an always-on processor engine that may provide necessary hardware features to support low power sensor management and wake use cases. An always-on processor engine may include a processor core, a tightly coupled RAM, supporting peripherals (e.g., timers and interrupt controllers), various I/O controller peripherals, and routing logic.

Processor(s) 2810 may further include a safety cluster engine that may include a dedicated processor subsystem to handle safety management for automotive applications. A safety cluster engine may include two or more processor cores, a tightly coupled RAM, support peripherals (e.g., timers, an interrupt controller, etc.), and/or routing logic. In a safety mode, two or more cores may operate, in a lockstep mode and function as a single core with comparison logic to detect any differences between their operations. Processor(s) 2810 may further include a real-time camera engine that may include a dedicated processor subsystem for handling real-time camera management. Processor(s) 2810 may further include a high-dynamic range signal processor that may include an image signal processor that is a hardware engine that is part of a camera processing pipeline.

Processor(s) 2810 may include a video image compositor that may be a processing block (e.g., implemented on a microprocessor) that implements video post-processing functions needed by a video playback application to produce a final image for a player window. A video image compositor may perform lens distortion correction on wide-view camera(s) 2870, surround camera(s) 2874, and/or on in-cabin monitoring camera sensor(s). In-cabin monitoring camera sensor(s) may be preferably monitored by a neural network running on another instance of SoC 2804, configured to identify in cabin events and respond accordingly. An in-cabin system may perform lip reading to activate cellular service and place a phone call, dictate emails, change a vehicle's destination, activate or change a vehicle's infotainment system and settings, or provide voice-activated web surfing. Certain functions may be available to a driver when a vehicle is operating in an autonomous mode and may be disabled otherwise.

A video image compositor may include enhanced temporal noise reduction for both spatial and temporal noise reduction. For example, where motion occurs in a video, noise reduction weights spatial information appropriately, decreasing weights of information provided by adjacent frames. Where an image or portion of an image does not include motion, temporal noise reduction performed by video image compositor may use information from a previous image to reduce noise in a current image.

A video image compositor may also be configured to perform stereo rectification on input stereo lens frames. A video image compositor may further be used for user interface composition when an operating system desktop is in use, and GPU(s) 2808 may not be required to continuously render new surfaces. When GPU(s) 2808 are powered on and active doing 3D rendering, a video image compositor may be used to offload GPU(s) 2808 to improve performance and responsiveness.

One or more SoC of SoC(s) 2804 may further include a mobile industry processor interface ("MIPI") camera serial interface for receiving video and input from cameras, a high-speed interface, and/or a video input block that may be used for a camera and related pixel input functions. One or more of SoC(s) 2804 may further include an input/output controller(s) that may be controlled by software and may be used for receiving I/O signals that may be uncommitted to a specific role.

One or more SoC of SoC(s) 2804 may further include a broad range of peripheral interfaces to enable communication with peripherals, audio encoders/decoders ("codecs"), power management, and/or other devices. SoC(s) 2804 may be used to process data from cameras (e.g., connected over Gigabit Multimedia Serial Link and Ethernet channels), sensors (e.g., LIDAR sensor(s) 2864, RADAR sensor(s) 2860, etc. that may be connected over Ethernet channels), data from bus 2802 (e.g., speed of vehicle 2800, steering wheel position, etc.), data from GNSS sensor(s) 2858 (e.g., connected over a Ethernet bus or a CAN bus), etc. One or more SoC of SoC(s) 2804 may further include dedicated high-performance mass storage controllers that may include their own DMA engines, and that may be used to free CPU(s) 2806 from routine data management tasks.

SoC(s) 2804 may be an end-to-end platform with a flexible architecture that spans automation Levels 3-5, thereby providing a comprehensive functional safety architecture that leverages and makes efficient use of computer vision and ADAS techniques for diversity and redundancy, and provides a platform for a flexible, reliable driving software stack, along with deep learning tools. SoC(s) 2804 may be faster, more reliable, and even more energy-efficient and space-efficient than conventional systems. For example, accelerator(s) 2814, when combined with CPU(s) 2806, GPU(s) 2808, and data store(s) 2816, may provide for a fast, efficient platform for Level 3-5 autonomous vehicles.

Computer vision algorithms may be executed on CPUs, which may be configured using a high-level programming language, such as, but not limited to, C, to execute a wide variety of processing algorithms across a wide variety of visual data. However, CPUs may be oftentimes unable to meet performance requirements of many computer vision applications, such as, but not limited to, those related to execution time and power consumption, for example. Many CPUs may be unable to execute complex object detection algorithms in real-time, which is used in in-vehicle ADAS applications and in practical Level 3-5 autonomous vehicles.

Embodiments described herein allow for multiple neural networks to be performed simultaneously and/or sequentially, and for results to be combined together to enable Level 3-5 autonomous driving functionality. For example, a CNN executing on a DLA or a discrete GPU (e.g., GPU(s) 2820) may include text and word recognition, allowing reading and understanding of traffic signs, including signs for which a neural network has not been specifically trained. A DLA may further include a neural network that is able to identify, interpret, and provide semantic understanding of a sign, and to pass that semantic understanding to path planning modules running on a CPU Complex.

Multiple neural networks may be run simultaneously, as for Level 3, 4, or 5 driving. For example, a warning sign stating "Caution: flashing lights indicate icy conditions," along with an electric light, may be independently or collectively interpreted by several neural networks. Such warning sign itself may be identified as a traffic sign by a first deployed neural network (e.g., a neural network that has been trained), text "flashing lights indicate icy conditions" may be interpreted by a second deployed neural network, which informs a vehicle's path planning software (preferably executing on a CPU Complex) that when flashing lights may be detected, icy conditions exist. A flashing light may be identified by operating a third deployed neural network over multiple frames, informing a vehicle's path-planning software of a presence (or an absence) of flashing lights. All three neural networks may run simultaneously, such as, but not limited to, within a DLA and/or on GPU(s) 2808.

A CNN for facial recognition and vehicle owner identification may use data from camera sensors to identify presence of an authorized driver and/or owner of vehicle 2800. An always-on sensor processing engine may be used to unlock a vehicle when an owner approaches a driver door and turns on lights, and, in a security mode, to disable such vehicle when an owner leaves such vehicle. In this way, SoC(s) 2804 can provide for security against theft and/or carjacking.

A CNN for emergency vehicle detection and identification may use data from microphones 2896 to detect and identify emergency vehicle sirens. SoC(s) 2804 use a CNN for classifying environmental and urban sounds, as well as classifying visual data. A CNN running on a DLA is trained to identify a relative closing speed of an emergency vehicle (e.g., by using a Doppler effect). A CNN may also be trained to identify emergency vehicles specific to a local area in which a vehicle is operating, as identified by GNSS sensor(s) 2858. When operating in Europe, a CNN may seek to detect European sirens, and when in North America, a CNN may seek to identify only North American sirens. Once an emergency vehicle is detected, a control program may be used to execute an emergency vehicle safety routine, slowing a vehicle, pulling over to a side of a road, parking a vehicle, and/or idling a vehicle, with assistance of ultrasonic sensor(s) 2862, until emergency vehicles pass.

Vehicle 2800 may include CPU(s) 2818 (e.g., discrete CPU(s), or dCPU(s)), that may be coupled to SoC(s) 2804 via a high-speed interconnect (e.g., PCIe). CPU(s) 2818 may include an X86 processor, for example. CPU(s) 2818 may be used to perform any of a variety of functions, including arbitrating potentially inconsistent results between ADAS sensors and SoC(s) 2804, and/or monitoring status and health of controller(s) 2836 and/or an infotainment system on a chip ("infotainment SoC") 2830, for example. SoC(s) 2804 may include one or more interconnects, and an interconnect can include a peripheral component interconnect express (PCIe).

Vehicle 2800 may include GPU(s) 2820 (e.g., discrete GPU(s), or dGPU(s)), that may be coupled to SoC(s) 2804 via a high-speed interconnect (e.g., NVIDIA's NVLINK channel). GPU(s) 2820 may provide additional artificial intelligence functionality, such as, but not limited to, by executing redundant and/or different neural networks, and may be used to train and/or update neural networks based at least in part on input (e.g., sensor data) from sensors of a vehicle 2800.

Vehicle 2800 may further include network interface 2824 which may include wireless antenna(s) (e.g., one or more wireless antennas 2826 for different communication protocols, such as, but not limited to, a cellular antenna, a Bluetooth antenna, etc.). Network interface 2824 may be used to enable wireless connectivity to Internet cloud services (e.g., with server(s) and/or other network devices), with other vehicles, and/or with computing devices (e.g., client devices of passengers). To communicate with other vehicles, a direct link may be established between vehicle 2800 and another vehicle and/or an indirect link may be established (e.g., across networks and over the Internet). Direct links may be provided using a vehicle-to-vehicle communication link. A vehicle-to-vehicle communication link may provide vehicle 2800 information about vehicles in proximity to vehicle 2800 (e.g., vehicles in front of, on a side of, and/or behind vehicle 2800). Such aforementioned functionality may be part of a cooperative adaptive cruise control functionality of vehicle 2800.

Network interface 2824 may include an SoC that provides modulation and demodulation functionality and enables controller(s) 2836 to communicate over wireless networks. Network interface 2824 may include a radio frequency front-end for up-conversion from baseband to radio frequency, and down conversion from radio frequency to baseband. Frequency conversions may be performed in any technically feasible fashion. For example, frequency conversions could be performed through well-known processes, and/or using superheterodyne processes. Radio frequency front end functionality may be provided by a separate chip. Network interfaces may include wireless functionality for communicating over LTE, WCDMA, UMTS, GSM, CDMA2000, Bluetooth, Bluetooth LE, Wi-Fi, Z-Wave, ZigBee, LoRaWAN, and/or other wireless protocols.

Vehicle 2800 may further include data store(s) 2828 which may include off-chip (e.g., off SoC(s) 2804) storage. Data store(s) 2828 may include one or more storage elements including RAM, SRAM, dynamic random-access memory ("DRAM"), video random-access memory ("VRAM"), flash memory, hard disks, and/or other components and/or devices that may store at least one bit of data.

Vehicle 2800 may further include GNSS sensor(s) 2858 (e.g., GPS and/or assisted GPS sensors), to assist in mapping, perception, occupancy grid generation, and/or path planning functions. Any number of GNSS sensor(s) 2858 may be used, including, for example, a GPS using a USB connector with an Ethernet-to-Serial (e.g., RS-232) bridge.

Vehicle 2800 may further include RADAR sensor(s) 2860. RADAR sensor(s) 2860 may be used by vehicle 2800 for long-range vehicle detection, even in darkness and/or severe weather conditions. RADAR functional safety levels may be ASIL B. RADAR sensor(s) 2860 may use a CAN bus and/or bus 2802 (e.g., to transmit data generated by RADAR sensor(s) 2860) for control and to access object tracking data, with access to Ethernet channels to access raw data in some examples. A wide variety of RADAR sensor types may be used. For example, RADAR sensor(s) 2860 may be suitable for front, rear, and side RADAR use. One or more sensor of RADAR sensors(s) 2860 is a Pulse Doppler RADAR sensor.

RADAR sensor(s) 2860 may include different configurations, such as, but not limited to, long-range with narrow field of view, short-range with wide field of view, short-range side coverage, etc. Long-range RADAR may be used for adaptive cruise control functionality. Long-range RADAR systems may provide a broad field of view realized by two or more independent scans, such as, but not limited to, within a 250 m (meter) range. RADAR sensor(s) 2860 may help in distinguishing between static and moving objects, and may be used by ADAS system 2838 for emergency brake assist and forward collision warning. Sensors 2860(s) included in a long-range RADAR system may include monostatic multimodal RADAR with multiple (e.g., six or more) fixed RADAR antennae and a high-speed CAN and FlexRay interface. With six antennae, a central four antennae may create a focused beam pattern, designed to record vehicle's 2800 surroundings at higher speeds with minimal interference from traffic in adjacent lanes. Another two antennae may expand field of view, making it possible to quickly detect vehicles entering or leaving a lane of vehicle 2800.

Mid-range RADAR systems may include, as an example, a range of up to 160 m (front) or 80 m (rear), and a field of view of up to 42 degrees (front) or 150 degrees (rear). Short-range RADAR systems may include any number of RADAR sensor(s) 2860 designed to be installed at both ends of a rear bumper. When installed at both ends of a rear bumper, a RADAR sensor system may create two beams that constantly monitor blind spots in a rear direction and next to a vehicle. Short-range RADAR systems may be used in ADAS system 2838 for blind spot detection and/or lane change assist.

Vehicle 2800 may further include ultrasonic sensor(s) 2862. Ultrasonic sensor(s) 2862, which may be positioned at a front, a back, and/or side location of vehicle 2800, may be used for parking assist and/or to create and update an occupancy grid. A wide variety of ultrasonic sensor(s) 2862 may be used, and different ultrasonic sensor(s) 2862 may be used for different ranges of detection (e.g., 2.5 m, 4 m). Ultrasonic sensor(s) 2862 may operate at functional safety levels of ASIL B.

Vehicle 2800 may include LIDAR sensor(s) 2864. LIDAR sensor(s) 2864 may be used for object and pedestrian detection, emergency braking, collision avoidance, and/or other functions. LIDAR sensor(s) 2864 may operate at functional safety level ASIL B. Vehicle 2800 may include multiple LIDAR sensors 2864 (e.g., two, four, six, etc.) that may use an Ethernet channel (e.g., to provide data to a Gigabit Ethernet switch).

LIDAR sensor(s) 2864 may be capable of providing a list of objects and their distances for a 360-degree field of view. Commercially available LIDAR sensor(s) 2864 may have an advertised range of approximately 100 m, with an accuracy of 2 cm to 3 cm, and with support for a 100 Mbps Ethernet connection, for example. One or more non-protruding LIDAR sensors may be used. LIDAR sensor(s) 2864 may include a small device that may be embedded into a front, a rear, a side, and/or a corner location of vehicle 2800. LIDAR sensor(s) 2864, in such an embodiment, may provide up to a 120-degree horizontal and 35-degree vertical field-of-view, with a 200 m range even for low-reflectivity objects. Front-mounted LIDAR sensor(s) 2864 may be configured for a horizontal field of view between 45 degrees and 135 degrees.

LIDAR technologies, such as, but not limited to, 3D flash LIDAR, may also be used. 3D flash LIDAR uses a flash of a laser as a transmission source, to illuminate surroundings of vehicle 2800 up to approximately 200 m. A flash LIDAR unit may include a receptor, which records laser pulse transit time and reflected light on each pixel, which in turn corresponds to a range from vehicle 2800 to objects. Flash LIDAR may allow for highly accurate and distortion-free images of surroundings to be generated with every laser flash. Four flash LIDAR sensors may be deployed, one at each side of vehicle 2800. 3D flash LIDAR systems include a solid-state 3D staring array LIDAR camera with no moving parts other than a fan (e.g., a non-scanning LIDAR device). Flash LIDAR device may use a 5 nanosecond class I (eye-safe) laser pulse per frame and may capture reflected laser light as a 3D range point cloud and co-registered intensity data.

Vehicle 2800 may further include IMU sensor(s) 2866. IMU sensor(s) 2866 may be located at a center of a rear axle of vehicle 2800. IMU sensor(s) 2866 may include, for example, accelerometer(s), magnetometer(s), gyroscope(s), a magnetic compass, magnetic compasses, and/or other sensor types. In six-axis applications, but not limited to, IMU sensor(s) 2866 may include accelerometers and gyroscopes. In nine-axis applications, but not limited to, IMU sensor(s) 2866 may include accelerometers, gyroscopes, and magnetometers.

IMU sensor(s) 2866 may be implemented as a miniature, high performance GPS-Aided Inertial Navigation System ("GPS/INS") that combines micro-electro-mechanical systems ("MEMS") inertial sensors, a high-sensitivity GPS receiver, and advanced Kalman filtering algorithms to provide estimates of position, velocity, and attitude. IMU sensor(s) 2866 may enable vehicle 2800 to estimate its heading without requiring input from a magnetic sensor by directly observing and correlating changes in velocity from a GPS to IMU sensor(s) 2866. IMU sensor(s) 2866 and GNSS sensor(s) 2858 may be combined in a single integrated unit.

Vehicle 2800 may include microphone(s) 2896 placed in and/or around vehicle 2800. Microphone(s) 2896 may be used for emergency vehicle detection and identification, among other things.

Vehicle 2800 may further include any number of camera types, including stereo camera(s) 2868, wide-view camera(s) 2870, infrared camera(s) 2872, surround camera(s) 2874, long-range camera(s) 2898, mid-range camera(s) 2876, and/or other camera types. Cameras may be used to capture image data around an entire periphery of vehicle 2800. Types of cameras used may depend on vehicle 2800. Any combination of camera types may be used to provide necessary coverage around vehicle 2800. A number of cameras deployed may differ depending on embodiment. For example, vehicle 2800 could include six cameras, seven cameras, ten cameras, twelve cameras, or another number of cameras. Cameras may support, as an example, Gigabit Multimedia Serial Link ("GMSL") and/or Gigabit Ethernet communications. Each camera might be as described with more detail previously herein.

Vehicle 2800 may further include vibration sensor(s) 2842. Vibration sensor(s) 2842 may measure vibrations of components of vehicle 2800, such as, but not limited to, axle(s). For example, changes in vibrations may indicate a change in road surfaces. When two or more vibration sensors 2842 may be used, differences between vibrations may be used to determine friction or slippage of road surface (e.g., when a difference in vibration is between a power-driven axle and a freely rotating axle).

Vehicle 2800 may include ADAS system 2838. ADAS system 2838 may include an SoC, in some examples. ADAS system 2838 may include any number and combination of an autonomous/adaptive/automatic cruise control ("ACC") system, a cooperative adaptive cruise control ("CACC") system, a forward crash warning ("FCW") system, an automatic emergency braking ("AEB") system, a lane departure warning ("LDW") system, a lane keep assist ("LKA") system, a blind spot warning ("BSW") system, a rear cross-traffic warning ("RCTW") system, a collision warning ("CW") system, a lane centering ("LC") system, and/or other systems, features, and/or functionality.

ACC system may use RADAR sensor(s) 2860, LIDAR sensor(s) 2864, and/or any number of camera(s). ACC system may include a longitudinal ACC system and/or a lateral ACC system. A longitudinal ACC system monitors and controls distance to another vehicle immediately ahead of vehicle 2800 and automatically adjusts speed of vehicle 2800 to maintain a safe distance from vehicles ahead. A lateral ACC system performs distance keeping, and advises vehicle 2800 to change lanes when necessary. A lateral ACC is related to other ADAS applications, such as, but not limited to, LC and CW.

A CACC system uses information from other vehicles that may be received via network interface 2824 and/or wireless antenna(s) 2826 from other vehicles via a wireless link, or indirectly, over a network connection (e.g., over the Internet). Direct links may be provided by a vehicle-to-vehicle ("V2V") communication link, while indirect links may be provided by an infrastructure-to-vehicle ("I2V") communication link. In general, V2V communication provides information about immediately preceding vehicles (e.g., vehicles immediately ahead of and in same lane as vehicle 2800), while I2V communication provides information about traffic further ahead. A CACC system may include either or both I2V and V2V information sources. Given information of vehicles ahead of vehicle 2800, a CACC system may be more reliable and it has potential to improve traffic flow smoothness and reduce congestion on road.

An FCW system is designed to alert a driver to a hazard, so that such driver may take corrective action. An FCW system uses a front-facing camera and/or RADAR sensor(s) 2860, coupled to a dedicated processor, DSP, FPGA, and/or ASIC, that is electrically coupled to provide driver feedback, such as, but not limited to, a display, speaker, and/or vibrating component. An FCW system may provide a warning, such as, but not limited to, in form of a sound, visual warning, vibration and/or a quick brake pulse.

An AEB system detects an impending forward collision with another vehicle or other object, and may automatically apply brakes if a driver does not take corrective action within a specified time or distance parameter. AEB system may use front-facing camera(s) and/or RADAR sensor(s) 2860, coupled to a dedicated processor, DSP, FPGA, and/or ASIC. When an AEB system detects a hazard, it will typically first alert a driver to take corrective action to avoid collision and, if that driver does not take corrective action, that AEB system may automatically apply brakes in an effort to prevent, or at least mitigate, an impact of a predicted collision. An AEB system may include techniques such as, but not limited to, dynamic brake support and/or crash imminent braking.

An LDW system provides visual, audible, and/or tactile warnings, such as, but not limited to, steering wheel or seat vibrations, to alert driver when vehicle 2800 crosses lane markings. An LDW system does not activate when a driver indicates an intentional lane departure, such as, but not limited to, by activating a turn signal. An LDW system may use frontside facing cameras, coupled to a dedicated processor, DSP, FPGA, and/or ASIC, that is electrically coupled to provide driver feedback, such as, but not limited to, a display, speaker, and/or vibrating component. An LKA system is a variation of an LDW system. An LKA system provides steering input or braking to correct vehicle 2800 if vehicle 2800 starts to exit its lane.

A BSW system detects and warns a driver of vehicles in an automobile's blind spot. A BSW system may provide a visual, audible, and/or tactile alert to indicate that merging or changing lanes is unsafe. A BSW system may provide an additional warning when a driver uses a turn signal. A BSW system may use rear-side facing camera(s) and/or RADAR sensor(s) 2860, coupled to a dedicated processor, DSP, FPGA, and/or ASIC, that is electrically coupled to driver feedback, such as, but not limited to, a display, speaker, and/or vibrating component.

An RCTW system may provide visual, audible, and/or tactile notification when an object is detected outside a rear-camera range when vehicle 2800 is backing up. An RCTW system includes an AEB system to ensure that vehicle brakes may be applied to avoid a crash. An RCTW system may use one or more rear-facing RADAR sensor(s) 2860, coupled to a dedicated processor, DSP, FPGA, and/or ASIC, that is electrically coupled to provide driver feedback, such as, but not limited to, a display, speaker, and/or vibrating component.

Conventional ADAS systems may be prone to false positive results which may be annoying and distracting to a driver, but typically may not be catastrophic, because conventional ADAS systems alert a driver and allow that driver to decide whether a safety condition truly exists and act accordingly. Vehicle 2800 itself decides, in case of conflicting results, whether to heed result from a primary computer or a secondary computer (e.g., a first controller or a second controller of controllers 2836). For example, ADAS system 2838 may be a backup and/or secondary computer for providing perception information to a backup computer rationality module. A backup computer rationality monitor may run redundant diverse software on hardware components to detect faults in perception and dynamic driving tasks. Outputs from ADAS system 2838 may be provided to a supervisory MCU. If outputs from a primary computer and outputs from a secondary computer conflict, a supervisory MCU can determine how to reconcile conflict to ensure safe operation.

A primary computer may be configured to provide a supervisory MCU with a confidence score, indicating that primary computer's confidence in a chosen result. If that confidence score exceeds a threshold, that supervisory MCU may follow that primary computer's direction, regardless of whether that secondary computer provides a conflicting or inconsistent result. Where a confidence score does not meet a threshold, and where primary and secondary computers indicate different results (e.g., a conflict), a supervisory MCU may arbitrate between computers to determine an appropriate outcome.

A supervisory MCU may be configured to run a neural network(s) that is trained and configured to determine, based at least in part on outputs from a primary computer and outputs from a secondary computer, conditions under which that secondary computer provides false alarms. Neural network(s) in a supervisory MCU may learn when a secondary computer's output may be trusted, and when it cannot. For example, when that secondary computer is a RADAR-based FCW system, a neural network(s) in that supervisory MCU may learn when an FCW system is identifying metallic objects that may not be, in fact, hazards, such as, but not limited to, a drainage grate or manhole cover that triggers an alarm. When a secondary computer is a camera-based LDW system, a neural network in a supervisory MCU may learn to override LDW when bicyclists or pedestrians may be present and a lane departure is, in fact, a safest maneuver. A supervisory MCU may include at least one of a DLA or a GPU suitable for running neural network(s) with associated memory. A supervisory MCU may comprise and/or be included as a component of SoC(s) 2804.

ADAS system 2838 may include a secondary computer that performs ADAS functionality using traditional rules of computer vision, and that secondary computer may use classic computer vision rules (if-then), and presence of a neural network(s) in a supervisory MCU may improve reliability, safety and performance. For example, diverse implementation and intentional non-identity makes an overall system more fault-tolerant, especially to faults caused by software (or software-hardware interface) functionality. For example, if there is a software bug or error in software running on a primary computer, and non-identical software code running on a secondary computer provides a consistent overall result, then a supervisory MCU may have greater confidence that an overall result is correct, and a bug in software or hardware on that primary computer is not causing a material error.

An output of ADAS system 2838 may be fed into a primary computer's perception block and/or a primary computer's dynamic driving task block. For example, if ADAS system 2838 indicates a forward crash warning due to an object immediately ahead, a perception block may use this information when identifying objects. A secondary computer may have its own neural network that is trained and thus reduces a risk of false positives, as described herein.

Vehicle 2800 may further include infotainment SoC 2830 (e.g., an in-vehicle infotainment system (IVI)). Although illustrated and described as an SoC, infotainment system SoC 2830, may not be an SoC, and may include two or more discrete components. Infotainment SoC 2830 may include a combination of hardware and software that may be used to provide audio (e.g., music, a personal digital assistant, navigational instructions, news, radio, etc.), video (e.g., TV, movies, streaming, etc.), phone (e.g., hands-free calling), network connectivity (e.g., LTE, WiFi, etc.), and/or information services (e.g., navigation systems, rear-parking assistance, a radio data system, vehicle related information such as, but not limited to, fuel level, total distance covered, brake fuel level, oil level, door open/close, air filter information, etc.) to vehicle 2800. For example, infotainment SoC 2830 could include radios, disk players, navigation systems, video players, USB and Bluetooth connectivity, carputers, in-car entertainment, WiFi, steering wheel audio controls, hands free voice control, a heads-up display ("HUD"), HMI display 2834, a telematics device, a control panel (e.g., for controlling and/or interacting with various components, features, and/or systems), and/or other components. Infotainment SoC 2830 may further be used to provide information (e.g., visual and/or audible) to user(s) of vehicle 2800, such as, but not limited to, information from ADAS system 2838, autonomous driving information such as, but not limited to, planned vehicle maneuvers, trajectories, surrounding environment information (e.g., intersection information, vehicle information, road information, etc.), and/or other information.

Infotainment SoC 2830 may include any amount and type of GPU functionality. Infotainment SoC 2830 may communicate over bus 2802 with other devices, systems, and/or components of vehicle 2800. Infotainment SoC 2830 may be coupled to a supervisory MCU such that a GPU of an infotainment system may perform some self-driving functions in event that primary controller(s) 2836 (e.g., primary and/or backup computers of vehicle 2800) fail. Infotainment SoC 2830 may put vehicle 2800 into a chauffeur to safe stop mode, as described herein.

Vehicle 2800 may further include instrument cluster 2832 (e.g., a digital dash, an electronic instrument cluster, a digital instrument panel, etc.). Instrument cluster 2832 may include a controller and/or supercomputer (e.g., a discrete controller or supercomputer). Instrument cluster 2832 may include any number and combination of a set of instrumentation such as, but not limited to, a speedometer, fuel level, oil pressure, tachometer, odometer, turn indicators, gearshift position indicator, seat belt warning light(s), parking-brake warning light(s), engine-malfunction light(s), supplemental restraint system (e.g., airbag) information, lighting controls, safety system controls, navigation information, etc. Information may be displayed and/or shared among infotainment SoC 2830 and instrument cluster 2832. Instrument cluster 2832 may be included as part of infotainment SoC 2830, or vice versa.

System may include server(s), network(s), and any number and type of vehicles, including vehicle 2800. Server(s) may include a plurality of GPUs, PCIe switches, and/or CPUs. GPUs, CPUs, and PCIe switches may be interconnected with high-speed interconnects such as, but not limited to, for example, NVLink interfaces developed by NVIDIA and/or PCIe connections. GPUs can be connected via any interconnects, such as NVLink and/or NVSwitch SoC, and GPUs and PCIe switches can be, for example, connected via PCIe interconnects. Each of server(s) may include any number of GPUs, CPUs, and/or PCIe switches, in any combination. For example, server(s) could each include eight, sixteen, thirty-two, and/or more GPUs.

Server(s) may receive, over network(s) and from vehicles, image data representative of images showing unexpected or changed road conditions, such as, but not limited to, recently commenced road-work. Server(s) may transmit, over network(s) and to vehicles, neural networks, updated or otherwise, and/or map information, including information regarding traffic and road conditions. Updates to map information may include updates for HD map, such as, but not limited to, information regarding construction sites, potholes, detours, flooding, and/or other obstructions. Neural networks, and/or map information may have resulted from new training and/or experiences represented in data received from any number of vehicles in an environment, and/or based at least in part on training performed at a data center (e.g., using server(s) and/or other servers).

Server(s) may be used to train machine learning models (e.g., neural networks) based at least in part on training data. Training data may be generated by vehicles, and/or may be generated in a simulation (e.g., using a game engine). Any amount of training data can be tagged (e.g., where associated neural network benefits from supervised learning) and/or undergoes other pre-processing. Any amount of training data may not be tagged and/or pre-processed (e.g., where associated neural network does not require supervised learning). Once machine learning models are trained, machine learning models may be used by vehicles (e.g., transmitted to vehicles over network(s)), and/or machine learning models may be used by server(s) to remotely monitor vehicles.

Server(s) may receive data from vehicles and apply data to up-to-date real-time neural networks for real-time intelligent inferencing. Server(s) may include deep-learning supercomputers and/or dedicated AI computers powered by GPU(s), such as, but not limited to, a DGX and DGX Station machines developed by NVIDIA. Alternatively, server(s) may include deep learning infrastructure that uses CPU-powered data centers.

Deep-learning infrastructure of server(s) may be capable of fast, real-time inferencing, and may use that capability to evaluate and verify health of processors, software, and/or associated hardware in vehicle 2800. For example, deep-learning infrastructure may receive periodic updates from vehicle 2800, such as, but not limited to, a sequence of images and/or objects that vehicle 2800 has located in that sequence of images (e.g., via computer vision and/or other machine learning object classification techniques). Deep-learning infrastructure may run its own neural network to identify objects and compare them with objects identified by vehicle 2800 and, if results do not match and deep-learning infrastructure concludes that AI in vehicle 2800 is malfunctioning, then server(s) may transmit a signal to vehicle instructing a fail-safe computer of vehicle 2800 to assume control, notify passengers, and complete a safe parking maneuver.

Server(s) may include GPU(s) and one or more programmable inference accelerators (e.g., NVIDIA's TensorRT 3 devices). A combination of GPU-powered servers and inference acceleration may make real-time responsiveness possible. Where performance is less critical, servers powered by CPUs, FPGAs, and other processors may be used for inferencing.

In at least one embodiment, autonomous vehicle 2800 described elsewhere herein, can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits in autonomous vehicle 2800 can be configured by software, e.g., programming platforms described herein, to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

### CLOUD AND WEB-BASED SERVICES

The following description sets forth, without limitation, cloud-based and/or web-based services and/or systems that can be used to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform some or all of processes, operations and/or and techniques described elsewhere herein. cloud-based and/or web-based services and/or systems can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

Cloud computing can include a style of computing in which dynamically scalable and often virtualized resources are provided as a service over the Internet. Users need not have knowledge of, expertise in, or control over technology infrastructure, which can be referred to as "in the cloud," that supports them. Cloud computing may incorporate infrastructure as a service, platform as a service, software as a service, and other variations that have a common theme of reliance on the Internet for satisfying computing needs of users. A typical cloud deployment, such as in a private cloud (e.g., enterprise network), or a data center (DC) in a public cloud (e.g., Internet) can include thousands of servers (or alternatively, VMs), hundreds of Ethernet, Fiber Channel or Fiber Channel over Ethernet (FCoE) ports, switching and storage infrastructure, etc. A cloud can also include network services infrastructure like IPsec VPN hubs, firewalls, load balancers, wide area network (WAN) optimizers etc. Remote subscribers can access cloud applications and services securely by connecting via a VPN tunnel, such as an IPsec VPN tunnel.

Cloud computing may include a model for enabling convenient, on-demand network access to a shared pool of configurable computing resources (e.g., networks, servers, storage, applications, and services) that can be rapidly provisioned and released with minimal management effort or service provider interaction.

Cloud computing may be characterized by on-demand self-service, in which a consumer can unilaterally provision computing capabilities, such as server time and network storage, as needed automatically without requiring human inter-action with each service's provider. Cloud computing may be characterized by broad network access, in which capabilities are available over a network and accessed through standard mechanisms that promote use by heterogeneous thin or thick client platforms (e.g., mobile phones, laptops, and PDAs). Cloud computing may be characterized by resource pooling, in which a provider's computing resources are pooled to serve multiple consumers using a multi-tenant model, with different physical and virtual resources dynamically as-signed and reassigned according to consumer demand. In at least one embodiment, there is a sense of location independence in that a customer generally has no control or knowledge over an exact location of provided resources, but may be able to specify location at a higher level of abstraction (e.g., country, state, or datacenter). Examples of resources include storage, processing, memory, network bandwidth, and virtual machines. Cloud computing may be characterized by rapid elasticity, in which capabilities can be rapidly and elastically provisioned, in some cases automatically, to quickly scale out and rapidly released to quickly scale in. In at least one embodiment, to a consumer, capabilities available for provisioning often appear to be unlimited and can be purchased in any quantity at any time. Cloud computing may be characterized by measured service, in which cloud systems automatically control and optimize resource use by leveraging a metering capability at some level of abstraction appropriate to a type of service (e.g., storage, processing, bandwidth, and active user accounts). Resource usage can be monitored, controlled, and reported providing transparency for both a provider and consumer of a utilized service.

Cloud computing may be associated with various services. Cloud Software as a Service (SaaS) may refer to as service in which a capability provided to a consumer is to use a provider's applications running on a cloud infrastructure. Applications can be accessible from various client devices through a thin client interface such as a web browser (e.g., web-based email). In at least one embodiment, consumer does not manage or control underlying cloud infrastructure including network, servers, operating systems, storage, or even individual application capabilities, with a possible exception of limited user-specific application configuration settings.

Cloud Platform as a Service (PaaS) may refer to a service in which a capability provided to consumer is to deploy onto cloud infrastructure consumer-created or acquired applications created using programming languages and tools supported by a provider. In at least one embodiment, a consumer does not manage or control underlying cloud infrastructure including networks, servers, operating systems, or storage, but has control over deployed applications and possibly application hosting environment configurations.

Cloud Infrastructure as a Service (IaaS) may refer to a service in which a capability provided to a consumer is to provision processing, storage, networks, and other fundamental computing resources where a consumer is able to deploy and run arbitrary software, which can include operating systems and applications. In at least one embodiment, consumer does not manage or control underlying cloud infrastructure, but has control over operating systems, storage, deployed applications, and possibly limited control of select networking components (e.g., host firewalls).

Cloud computing may be deployed in various ways. A private cloud may refer to a cloud infrastructure that is operated solely for an organization. A private cloud may be managed by an organization or a third party and may exist on-premises or off-premises. A community cloud may refer to a cloud infrastructure that is shared by several organizations and supports a specific community that has shared concerns (e.g., mission, security requirements, policy, and compliance considerations). A community cloud may be managed by organizations or a third party and may exist on-premises or off-premises. A public cloud may refer to a cloud infrastructure that is made available to a general public or a large industry group and is owned by an organization providing cloud services. A hybrid cloud may refer to a cloud infrastructure that is a composition of two or more clouds (private, community, or public) that remain unique entities, but are bound together by standardized or proprietary technology that enables data and application portability (e.g., cloud bursting for load-balancing between clouds). A cloud computing environment is service oriented with a focus on statelessness, low coupling, modularity, and semantic interoperability.

### LOGIC AND NEURAL NETWORK TRAINING AND DEPLOYMENT

The following figures set forth, without limitation, examples of logic and artificial intelligence-based systems that can be used to implement functionality and/or operations described herein.

FIGS. 29A and 29B illustrate logic 2915 which, as described elsewhere herein, can be used in one or more devices or systems (e.g., such as any of the processors (e.g., any processor in FIGS. 12-24), data centers, cloud or web-based services described herein) to perform operations such as, but not limited to, those discussed herein, in accordance with at least one embodiment. Logic can refer to any combination of software logic, hardware logic, and/or firmware logic to provide functionality and/or operations described herein, wherein logic may be, collectively or individually, embodied as circuitry that forms part of a larger system, for example, an integrated circuit (IC), an application-specific integrated circuit (ASIC), a field programmable array (FPGA), system-on-chip (SoC), or one or processors (e.g., CPU, GPU). Logic 2915 illustrated in FIGS. 29A and 29B may be used in conjunction with an application-specific integrated circuit ("ASIC"), such as, but not limited to, a TensorFlow^{®} Processing Unit from Google, an inference processing unit (IPU) from Graphcore^{™}, or a Nervana^{®} (e.g., "Lake Crest") processor from Intel Corp. Logic 2915 illustrated in FIG. 29A and 29B may be used in conjunction with central processing unit ("CPU") hardware, graphics processing unit ("GPU") hardware or other hardware, such as, but not limited to, field programmable gate arrays ("FPGAs").

Logic 2915 can be used to perform inferencing and/or training operations associated with one or more embodiments. Logic 2915 may be inference and/or training logic. In at least one embodiment, FIG. 29A illustrates inference and/or training logic 2915 used to perform inferencing and/or training operations associated with one or more embodiments. Inference and/or training logic 2915 may include code and/or data storage 2901 to store forward and/or output weight and/or input/output data, and/or other parameters to configure neurons or layers of a neural network trained and/or used for inferencing in aspects of one or more embodiments. Training logic 2915 may include, or be coupled to code and/or data storage 2901 to store graph code or other software to control timing and/or order, in which weight and/or other parameter information is to be loaded to configure, logic, including integer and/or floating point units (collectively, arithmetic logic units (ALUs). Code, such as, but not limited to, graph code, can load weight or other parameter information into processor ALUs based on an architecture of a neural network to which such code corresponds. Code and/or data storage 2901 can store weight parameters and/or input/output data of each layer of a neural network trained or used in conjunction with one or more embodiments during forward propagation of input/output data and/or weight parameters during training and/or inferencing using aspects of one or more embodiments. Any portion of code and/or data storage 2901 may be included with other on-chip or off-chip data storage, including a processor's L1, L2, or L3 cache or system memory.

Any portion of code and/or data storage 2901 may be internal or external to one or more processors or other hardware logic devices or circuits. Code and/or code and/or data storage 2901 may be cache memory, dynamic randomly addressable memory ("DRAM"), static randomly addressable memory ("SRAM"), non-volatile memory (e.g., flash memory), or other storage. A choice of whether code and/or code and/or data storage 2901 is internal or external to a processor, for example, or comprising DRAM, SRAM, flash or some other storage type may depend on available storage on-chip versus off-chip, latency requirements of training and/or inferencing functions being performed, batch size of data used in inferencing and/or training of a neural network, or some combination of these factors.

Inference and/or training logic 2915 may include a code and/or data storage 2905 to store backward and/or output weight and/or input/output data corresponding to neurons or layers of a neural network trained and/or used for inferencing in aspects of one or more embodiments. Code and/or data storage 2905 can store weight parameters and/or input/output data of each layer of a neural network trained or used in conjunction with one or more embodiments during backward propagation of input/output data and/or weight parameters during training and/or inferencing using aspects of one or more embodiments. Training logic 2915 may include, or be coupled to code and/or data storage 2905 to store graph code or other software to control timing and/or order, in which weight and/or other parameter information is to be loaded to configure, logic, including integer and/or floating point units (collectively, arithmetic logic units (ALUs).

Code, such as, but not limited to, graph code, may cause loading of weight or other parameter information into processor ALUs based on an architecture of a neural network to which such code corresponds. Any portion of code and/or data storage 2905 may be included with other on-chip or off-chip data storage, including a processor's L1, L2, or L3 cache or system memory. Any portion of code and/or data storage 2905 may be internal or external to one or more processors or other hardware logic devices or circuits. Code and/or data storage 2905 may be cache memory, DRAM, SRAM, non-volatile memory (e.g., flash memory), or other storage. A choice of whether code and/or data storage 2905 is internal or external to a processor, for example, or comprising DRAM, SRAM, flash memory or some other storage type may depend on available storage on-chip versus off-chip, latency requirements of training and/or inferencing functions being performed, batch size of data used in inferencing and/or training of a neural network, or some combination of these factors.

Code and/or data storage 2901 and code and/or data storage 2905 may be separate storage structures. Code and/or data storage 2901 and code and/or data storage 2905 may be a combined storage structure. Code and/or data storage 2901 and code and/or data storage 2905 may be partially combined and partially separate. Any portion of code and/or data storage 2901 and code and/or data storage 2905 may be included with other on-chip or off-chip data storage, including a processor's L1, L2, or L3 cache or system memory.

Inference and/or training logic 2915 may include one or more arithmetic logic unit(s) ("ALU(s)") 2910, including integer and/or floating point units, to perform logical and/or mathematical operations based, at least in part on, or indicated by, training and/or inference code (e.g., graph code), a result of which may produce activations (e.g., output values from layers or neurons within a neural network) stored in an activation storage 2920 that may be functions of input/output and/or weight parameter data stored in code and/or data storage 2901 and/or code and/or data storage 2905. Activations stored in activation storage 2920 may be generated according to linear algebraic and or matrix-based mathematics performed by ALU(s) 2910 in response to performing instructions or other code, wherein weight values stored in code and/or data storage 2905 and/or data storage 2901 may be used as operands along with other values, such as, but not limited to, bias values, gradient information, momentum values, or other parameters or hyperparameters, any or all of which may be stored in code and/or data storage 2905 or code and/or data storage 2901 or another storage on or off-chip.

ALU(s) 2910 can be included within one or more processors or other hardware logic devices or circuits, whereas in another embodiment, ALU(s) 2910 may be external to a processor or other hardware logic device or circuit that uses them (e.g., a co-processor). ALUs 2910 may be included within a processor's execution units or otherwise within a bank of ALUs accessible by a processor's execution units either within same processor or distributed between different processors of different types (e.g., central processing units, graphics processing units, fixed function units, etc.). Code and/or data storage 2901, code and/or data storage 2905, and activation storage 2920 may share a processor or other hardware logic device or circuit, whereas in another embodiment, they may be in different processors or other hardware logic devices or circuits, or some combination of same and different processors or other hardware logic devices or circuits. Any portion of activation storage 2920 may be included with other on-chip or off-chip data storage, including a processor's L1, L2, or L3 cache or system memory. Furthermore, inferencing and/or training code may be stored with other code accessible to a processor or other hardware logic or circuit and fetched and/or processed using a processor's fetch, decode, scheduling, execution, retirement and/or other logical circuits.

Activation storage 2920 may be cache memory, DRAM, SRAM, non-volatile memory (e.g., flash memory), or other storage. Activation storage 2920 may be completely or partially within or external to one or more processors or other logical circuits. A choice of whether activation storage 2920 is internal or external to a processor, for example, or comprising DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, inference and/or training logic 2915 illustrated in FIG. 29A may be used in conjunction with an application-specific integrated circuit ("ASIC"), such as, but not limited to, a TensorFlow^{®} Processing Unit from Google, an inference processing unit (IPU) from Graphcore^{™}, or a Nervana^{®} (e.g., "Lake Crest") processor from Intel Corp. In at least one embodiment, inference and/or training logic 2915 illustrated in FIG. 29A may be used in conjunction with central processing unit ("CPU") hardware, graphics processing unit ("GPU") hardware or other hardware, such as, but not limited to, field programmable gate arrays ("FPGAs").

FIG. 29B illustrates inference and/or training logic 2915, in accordance with at least one embodiment. Inference and/or training logic 2915 may include hardware logic in which computational resources may be dedicated or otherwise exclusively used in conjunction with weight values or other information corresponding to one or more layers of neurons within a neural network. Inference and/or training logic 2915 illustrated in FIG. 29B may be used in conjunction with an application-specific integrated circuit (ASIC), such as, but not limited to, TensorFlow^{®} Processing Unit from Google, an inference processing unit (IPU) from Graphcore^{™}, or a Nervana^{®} (e.g., "Lake Crest") processor from Intel Corp. Inference and/or training logic 2915 illustrated in FIG. 29B may be used in conjunction with central processing unit (CPU) hardware, graphics processing unit (GPU) hardware or other hardware, such as, but not limited to, field programmable gate arrays (FPGAs). Inference and/or training logic 2915 can include code and/or data storage 2901 and code and/or data storage 2905, which may be used to store code (e.g., graph code), weight values and/or other information, including bias values, gradient information, momentum values, and/or other parameter or hyperparameter information. In FIG. 29B, for example, each of code and/or data storage 2901 and code and/or data storage 2905 is associated with a dedicated computational resource, such as, but not limited to, computational hardware 2902 and computational hardware 2906, respectively. Each of computational hardware 2902 and computational hardware 2906 can include one or more ALUs that perform mathematical functions, such as, but not limited to, linear algebraic functions, only on information stored in code and/or data storage 2901 and code and/or data storage 2905, respectively, result of which is stored in activation storage 2920.

Each of code and/or data storage 2901 and 2905 and corresponding computational hardware 2902 and 2906, respectively, correspond to different layers of a neural network, such that resulting activation from one storage/computational pair 2901/2902 of code and/or data storage 2901 and computational hardware 2902 is provided as an input to a next storage/computational pair 2905/2906 of code and/or data storage 2905 and computational hardware 2906, in order to mirror a conceptual organization of a neural network. Each of storage/computational pairs 2901/2902 and 2905/2906 may correspond to more than one neural network layer. Additional storage/computation pairs (not shown) subsequent to or in parallel with storage/computation pairs 2901/2902 and 2905/2906 may be included in inference and/or training logic 2915.

In at least one embodiment, logic 2915 described elsewhere herein, can include one or more circuits to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more circuits in logic 2915 can be configured by software described herein, to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

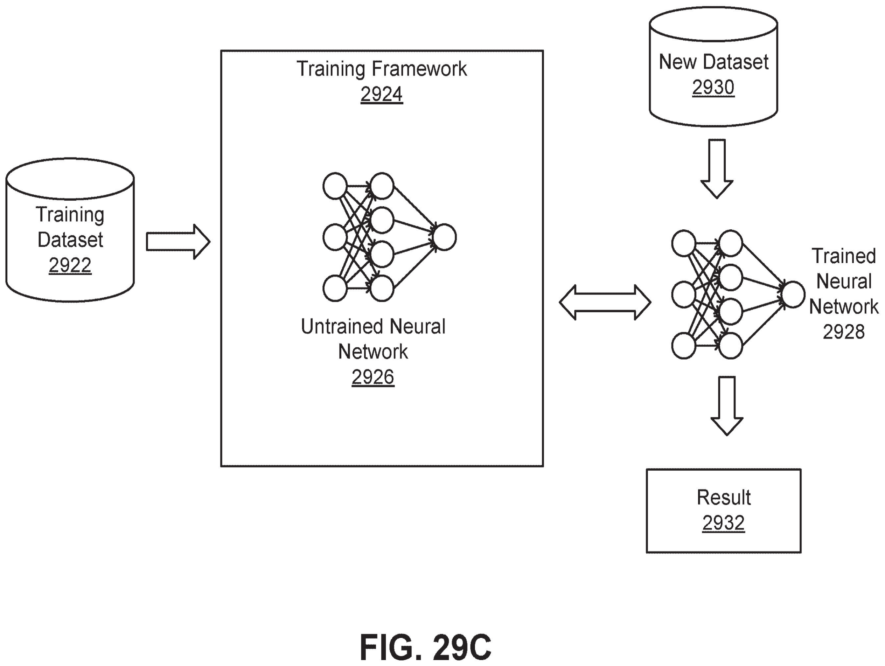

FIG. 29C illustrates training and deployment of a deep neural network, in accordance with at least one embodiment. An untrained neural network 2926 can be trained using a training dataset 2922. Training framework 2924 can be a PyTorch framework, and/or a training framework 2904 can include a TensorFlow, Boost, Caffe, Microsoft Cognitive Toolkit/CNTK, MXNet, Chainer, Keras, Deeplearning4j, or other training framework. Training framework 2924 can train an untrained neural network 2926 and enables it to be trained using processing resources described herein to generate a trained neural network 2928. Weights may be chosen randomly or by pre-training using a deep belief network. Training may be performed in either a supervised, partially supervised, or unsupervised manner.

Untrained neural network 2926 can be trained using supervised learning, wherein training dataset 2922 includes an input paired with a desired output for an input, or where training dataset 2922 includes input having a known output and an output of neural network 2926 is manually graded. Untrained neural network 2926 can be trained in a supervised manner and processes inputs from training dataset 2922 and compares resulting outputs against a set of expected or desired outputs. Errors can then be propagated back through untrained neural network 2926. Training framework 2924 can adjust weights that control untrained neural network 2926. Training framework 2924 can include tools to monitor how well untrained neural network 2926 is converging towards a model, such as, but not limited to, trained neural network 2928, suitable to generating correct answers, such as, but not limited to, in result 2932, based on input data such as, but not limited to, a new dataset 2930. Training framework 2924 can train untrained neural network 2926 repeatedly while adjust weights to refine an output of untrained neural network 2926 using a loss function and adjustment algorithm, such as, but not limited to, stochastic gradient descent. Training framework 2924 can train untrained neural network 2926 until untrained neural network 2926 achieves a desired accuracy. Trained neural network 2928 can then be deployed to implement any number of machine learning operations.

Untrained neural network 2926 can be trained using unsupervised learning, wherein untrained neural network 2926 attempts to train itself using unlabeled data. Unsupervised learning training dataset 2922 can include input data without any associated output data or "ground truth" data. Untrained neural network 2926 can learn groupings within training dataset 2922 and can determine how individual inputs may be related to untrained dataset 2922. Unsupervised training can be used to generate a self-organizing map in trained neural network 2928 capable of performing operations useful in reducing dimensionality of new dataset 2930. Unsupervised training can also be used to perform anomaly detection, which allows identification of data points in new dataset 2930 that deviate from normal patterns of new dataset 2930.

Semi-supervised learning may be used, which is a technique in which in training dataset 2922 includes a mix of labeled and unlabeled data. Training framework 2924 may be used to perform incremental learning, such as, but not limited to, through transferred learning techniques. Incremental learning can enable trained neural network 2928 to adapt to new dataset 2930 without forgetting knowledge instilled within trained neural network 2928 during initial training.

Training framework 2924 can include a framework processed in connection with a software development toolkit such as, but not limited to, an OpenVINO (Open Visual Inference and Neural network Optimization) toolkit. An OpenVINO toolkit can include a toolkit such as, but not limited to, those developed by Intel Corporation of Santa Clara, CA.

OpenVINO can include a toolkit for facilitating development of applications, specifically neural network applications, for various tasks and operations, such as, but not limited to, human vision emulation, speech recognition, natural language processing, recommendation systems, and/or variations thereof. OpenVINO can support neural networks such as, but not limited to, convolutional neural networks (CNNs), recurrent and/or attention-based neural networks, and/or various other neural network models. OpenVINO can support various software libraries such as, but not limited to, OpenCV, OpenCL, and/or variations thereof.

OpenVINO can support neural network models for various tasks and operations, such as, but not limited to, classification, segmentation, object detection, face recognition, speech recognition, pose estimation (e.g., humans and/or objects), monocular depth estimation, image inpainting, style transfer, action recognition, colorization, and/or variations thereof.

OpenVINO can include one or more software tools and/or modules for model optimization, also referred to as a model optimizer. A model optimizer can include a command line tool that facilitates transitions between training and deployment of neural network models. A model optimizer may optimize neural network models for execution on various devices and/or processing units, such as, but not limited to, a GPU, CPU, PPU, GPGPU, and/or variations thereof. A model optimizer can generate an internal representation of a model, and can optimize said model to generate an intermediate representation. A model optimizer may reduce a number of layers of a model. A model optimizer can remove layers of a model that may be utilized for training. A model optimizer may perform various neural network operations, such as, but not limited to, modifying inputs to a model (e.g., resizing inputs to a model), modifying a size of inputs of a model (e.g., modifying a batch size of a model), modifying a model structure (e.g., modifying layers of a model), normalization, standardization, quantization (e.g., converting weights of a model from a first representation, such as, but not limited to, floating point, to a second representation, such as, but not limited to, integer), and/or variations thereof.

OpenVINO can include one or more software libraries for inferencing, also referred to as an inference engine. An inference engine can include a C++ library, or any suitable programming language library. An inference engine can be utilized to infer input data. An inference engine may implement various classes to infer input data and generate one or more results. An inference engine can implement one or more API functions to process an intermediate representation, set input and/or output formats, and/or execute a model on one or more devices.

OpenVINO may provide various abilities for heterogeneous execution of one or more neural network models. Heterogeneous execution, or heterogeneous computing, can refer to one or more computing processes and/or systems that utilize one or more types of processors and/or cores. OpenVINO can provide various software functions to execute a program on one or more devices. OpenVINO may provide various software functions to execute a program and/or portions of a program on different devices. OpenVINO may provide various software functions to, for example, run a first portion of code on a CPU and a second portion of code on a GPU and/or FPGA. OpenVINO may provide various software functions to execute one or more layers of a neural network on one or more devices (e.g., a first set of layers on a first device, such as, but not limited to, a GPU, and a second set of layers on a second device, such as, but not limited to, a CPU).

OpenVINO can include various functionality similar to functionalities associated with a CUDA programming model, such as, but not limited to, various neural network model operations associated with frameworks such as, but not limited to, TensorFlow, PyTorch, and/or variations thereof. One or more CUDA programming model operations may be performed using OpenVINO. Various systems, methods, and/or techniques described herein may be implemented using OpenVINO.

In at least one embodiment, one or more circuits can be used to cause one or more neural networks and training frameworks described elsewhere herein to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9. One or more neural networks and training frameworks can be configured by software to generate, based on a tile operation to be performed on a tile, code to perform instruction groups corresponding to sub-tiles of a tile in a determined order, the sub-tiles sized according to accelerator characteristics, or generate code to perform tile operations in a second order determined based on usage constraints of accelerator functional units that are identified to perform operations in a first order indicated by a dependency graph of the tile operations or otherwise perform any of the operations described above or elsewhere herein, such as those described in connection with FIGS. 1-9.

At least one embodiment of the disclosure can be described in view of the following clauses:
1. One or more processors, comprising:
   circuitry to cause a compiler to:
   partition a tile of a tile program into a plurality of sub-tiles, wherein the compiler determines a size of the sub-tiles based, at least in part, on one or more accelerator hardware characteristics;
   generate a plurality of instruction groups to be performed on corresponding sub-tiles of the plurality of sub-tiles, wherein the instruction groups are based, at least in part, on a tile operation to be performed on the tile of the tile program;
   determine an order to perform individual instruction groups of the plurality of instruction groups; and
   generate code to cause individual instruction groups to be performed in the determined order.
2. The one or more processors of clause 1, wherein the compiler determines the size of the sub-tiles by applying heuristics based on memory constraints and processing capabilities of the accelerator hardware.
3. The one or more processors of any of clauses 1-2, wherein the compiler is to generate instruction groups that include sub-tile operations derived from tile-level operations, wherein each sub-tile operation corresponds to a portion of the tile.
4. The one or more processors of any of clauses 1-3, wherein the compiler is to merge separate loops corresponding to the instruction groups into a single loop to optimize scheduling efficiency.
5. The one or more processors of any of clauses 1-4, wherein the compiler is to:
   generate code that includes one or more loops to process coarse-grained sub-tiles of a tile, the coarse-grained sub-tiles having a first sub-tile size; and
   process fine-grained sub-tiles of the coarse-grained sub-tiles, the fine-grained sub-tiles having a second sub-tile size that corresponds to an input data size of an accelerator instruction.
6. The one or more processors of any of clauses 1-5, wherein the compiler is to generate a dependency graph to determine the order of execution for the instruction groups based on data dependencies between two or more operations to be performed on two or more corresponding sub-tiles.
7. The one or more processors of any of clauses 1-6, wherein the compiler is to modify the order in which to perform the individual instruction groups to satisfy one or more resource constraints indicated by the one or more accelerator hardware characteristics.
8. The one or more processors of any of clauses 1-7, wherein the compiler is to use resource reservation information to determine usage of functional units during specific clock cycles while scheduling the instruction groups, wherein the resource reservation information is generated by the one or more processors based, at least in part, on the one or more accelerator hardware characteristics.
9. The one or more processors of any of clauses 1-8, wherein the compiler performs loop unrolling.
10. A method, comprising:
   partitioning a tile of a tile program into a plurality of sub-tiles, wherein a size of the sub-tiles is determined, at least in part, based on one or more accelerator hardware characteristics;
   generating a plurality of instruction groups to be performed on corresponding sub-tiles of the plurality of sub-tiles, wherein the instruction groups are based, at least in part, on a tile operation to be performed on the tile of the tile program;
   determining an order to perform individual instruction groups of the plurality of instruction groups; and
   generating code to cause individual instruction groups to be performed in the determined order.
11. The method of clause 10, wherein determining the size of the sub-tiles comprises applying heuristics based on memory constraints and processing capabilities of the accelerator hardware.
12. The method of any of clauses 10-11, wherein generating the plurality of instruction groups comprises generating instruction groups that include sub-tile operations derived from tile-level operations, wherein each sub-tile operation corresponds to a portion of the tile.
13. The method of any of clauses 10-12, further comprising merging separate loops corresponding to the instruction groups into a single loop to optimize scheduling efficiency.
14. The method of any of clauses 10-13, wherein generating the code comprises:
   generating code that includes one or more loops to process coarse-grained sub-tiles of the tile, the coarse-grained sub-tiles having a first sub-tile size; and
   processing fine-grained sub-tiles of the coarse-grained sub-tiles, the fine-grained sub-tiles having a second sub-tile size that corresponds to an input data size of an accelerator instruction.
15. The method of any of clauses 10-14, further comprising generating a dependency graph to determine the order of execution for the instruction groups based on data dependencies between two or more operations to be performed on two or more corresponding sub-tiles.
16. The method of any of clauses 10-15, further comprising modifying the order in which to perform the individual instruction groups to satisfy one or more resource constraints indicated by the one or more accelerator hardware characteristics.
17. The method of any of clauses 10-16, further comprising using resource reservation information to determine usage of functional units during specific clock cycles while scheduling the instruction groups, wherein the resource reservation information is generated based, at least in part, on the one or more accelerator hardware characteristics.
18. The method of any of clauses 10-17, further comprising performing loop unrolling.
19. A system, comprising:
   one or more processors to cause a compiler to:
   partition a tile of a tile program into a plurality of sub-tiles, wherein the compiler determines a size of the sub-tiles based, at least in part, on one or more accelerator hardware characteristics;
   generate a plurality of instruction groups to be performed on corresponding sub-tiles of the plurality of sub-tiles, wherein the instruction groups are based, at least in part, on a tile operation to be performed on the tile of the tile program;
   determine an order to perform individual instruction groups of the plurality of instruction groups; and
   generate code to cause individual instruction groups to be performed in the determined order.
20. The system of clause 19, wherein the one or more processors are to cause the compiler to determine the size of the sub-tiles by applying heuristics based on memory constraints and processing capabilities of the accelerator hardware.
21. The system of any of clauses 19-20, wherein the one or more processors are to cause the compiler to generate instruction groups that include sub-tile operations derived from tile-level operations, wherein each sub-tile operation corresponds to a portion of the tile.
22. The system of any of clauses 19-21, wherein the one or more processors are to cause the compiler to merge separate loops corresponding to the instruction groups into a single loop to optimize scheduling efficiency.
23. The system of any of clauses 19-22, wherein the one or more processors are to cause the compiler to:
   generate code that includes one or more loops to process coarse-grained sub-tiles of the tile, the coarse-grained sub-tiles having a first sub-tile size; and
   process fine-grained sub-tiles of the coarse-grained sub-tiles, the fine-grained sub-tiles having a second sub-tile size that corresponds to an input data size of an accelerator instruction.
24. The system of any of clauses 19-23, wherein the one or more processors are to cause the compiler to generate a dependency graph to determine the order of execution for the instruction groups based on data dependencies between two or more operations to be performed on two or more corresponding sub-tiles.
25. The system of any of clauses 19-24, wherein the one or more processors are to cause the compiler to modify the order in which to perform the individual instruction groups to satisfy one or more resource constraints indicated by the one or more accelerator hardware characteristics.
26. The system of any of clauses 19-25, wherein the one or more processors are to cause the compiler to use resource reservation information to determine usage of functional units during specific clock cycles while scheduling the instruction groups, wherein the resource reservation information is generated based, at least in part, on the one or more accelerator hardware characteristics.
27. The system of any of clauses 19-26, wherein the one or more processors are to cause the compiler to perform loop unrolling.
28. One or more processors, comprising:
   circuitry to cause a compiler to:
   generate a dependency graph indicative of operations of a tile program;
   determine functional units of an accelerator that would be used to perform operations in a first order indicated by the dependency graph;
   determine a second order in which to perform the operations of the tile program based, at least in part, on constraints on usage of the determined functional units; and
   generate code to perform the tile program based, at least in part, on the determined second order.
29. The one or more processors of clause 28, wherein the compiler is to generate the dependency graph by identifying one or more data dependencies between two or more operations of the tile program, and wherein the one or more dependencies are represented in the dependency graph as one or more edges between two or more nodes of the graph, wherein the nodes represent the operations of the tile program.
30. The one or more processors of any of clauses 28-29, wherein the compiler is to generate the dependency graph by:
   creating nodes of the graph corresponding to sub-tile-level operations derived from tile-level operations; and
   creating edges of the graph representing data dependencies between the nodes.
31. The one or more processors of any of clauses 28-30, wherein the compiler is to determine the second order of operations by applying a scheduling algorithm to reduce execution time and conform to resource constraints.
32. The one or more processors of any of clauses 28-31, wherein the compiler is to determine the second order based, at least in part, on application of one or more scheduling algorithms to the dependency graph and resource reservation information.
33. The one or more processors of any of clauses 28-32, wherein the compiler is to adjust the dependency graph to serialize operations that exceed resource constraints.
34. The one or more processors of any of clauses 28-33, wherein the compiler is to:
   determine whether a candidate schedule generated from the dependency graph and resource reservation information satisfies one or more resource usage constraints; and
   in response to the candidate schedule not satisfying the one or more resource usage constraints, add one or more dependency edges to the dependency graph to serialize two or more operations.
35. The one or more processors of any of clauses 28-34, wherein the compiler is to determine the second order of operations by at least tracking potential usage of functional units during one or more periods of execution of the tile program.
36. A method, comprising:
   generating, using a compiler, a dependency graph indicative of operations of a tile program;
   determining functional units of an accelerator that would be used to perform operations in a first order indicated by the dependency graph;
   determining a second order in which to perform the operations of the tile program based, at least in part, on constraints on usage of the determined functional units; and
   generating code to perform the tile program based, at least in part, on the determined second order.
37. The method of clause 36, wherein generating the dependency graph comprises identifying one or more data dependencies between two or more operations of the tile program, and representing the one or more dependencies in the dependency graph as one or more edges between two or more nodes of the graph, wherein the nodes represent the operations of the tile program.
38. The method of any of clauses 36-37, wherein generating the dependency graph comprises:
   creating nodes of the graph corresponding to sub-tile-level operations derived from tile-level operations; and
   creating edges of the graph representing data dependencies between the nodes.
39. The method of any of clauses 36-38, wherein determining the second order of operations comprises applying a scheduling algorithm to reduce execution time and to conform to resource constraints.
40. The method of any of clauses 36-39, wherein determining the second order is based, at least in part, on application of one or more scheduling algorithms to the dependency graph and on resource reservation information.
41. The method of any of clauses 36-40, further comprising adjusting the dependency graph to serialize operations that exceed resource constraints.
42. The method of any of clauses 36-41, further comprising:
   determining whether a candidate schedule generated from the dependency graph and resource reservation information satisfies one or more resource usage constraints; and
   in response to the candidate schedule not satisfying the one or more resource usage constraints, adding one or more dependency edges to the dependency graph to serialize two or more operations.
43. The method of any of clauses 36-42, wherein determining the second order of operations comprises tracking potential usage of functional units during one or more periods of execution of the tile program.
44. A system, comprising:
   one or more processors to cause a compiler to:
   generate a dependency graph indicative of operations of a tile program;
   determine functional units of an accelerator that would be used to perform operations in a first order indicated by the dependency graph;
   determine a second order in which to perform the operations of the tile program based, at least in part, on constraints on usage of the determined functional units; and
   generate code to perform the tile program based, at least in part, on the determined second order.
45. The system of clause 44, wherein the compiler is to generate the dependency graph by identifying one or more data dependencies between two or more operations of the tile program, and wherein the one or more dependencies are represented in the dependency graph as one or more edges between two or more nodes of the graph, wherein the nodes represent the operations of the tile program.
46. The system of any of clauses 44-45, wherein the compiler is to generate the dependency graph by:
   creating nodes of the graph corresponding to sub-tile-level operations derived from tile-level operations; and
   creating edges of the graph representing data dependencies between the nodes.
47. The system of any of clauses 44-46, wherein the compiler is to determine the second order of operations by applying a scheduling algorithm to reduce execution time and conform to resource constraints.
48. The system of any of clauses 44-47, wherein the compiler is to determine the second order based, at least in part, on application of one or more scheduling algorithms to the dependency graph and resource reservation information.
49. The system of any of clauses 44-48, wherein the compiler is to adjust the dependency graph to serialize operations that exceed resource constraints.
50. The system of any of clauses 44-49, wherein the compiler is to:
   determine whether a candidate schedule generated from the dependency graph and resource reservation information satisfies one or more resource usage constraints; and
   in response to the candidate schedule not satisfying the one or more resource usage constraints, add one or more dependency edges to the dependency graph to serialize two or more operations.
51. The system of any of clauses 44-50, wherein the compiler is to determine the second order of operations by at least tracking potential usage of functional units during one or more periods of execution of the tile program.
52. The one or more processors of any of clauses 1-9, wherein the one or more processors are comprised in at least one of:
   a control system for an autonomous or semi-autonomous machine;
   a perception system for an autonomous or semi-autonomous machine;
   a system for performing simulation operations;
   a system for performing digital twin operations;
   a system for performing light transport simulation;
   a system for performing collaborative content creation for 3D assets;
   a system for performing deep learning operations;
   a system for performing remote operations;
   a system for performing real-time streaming;
   a system for generating or presenting one or more of augmented reality content, virtual reality content, or mixed reality content;
   a system implemented using an edge device;
   a system implemented using a robot;
   a system for performing conversational AI operations;
   a system implementing one or more multi-model language models (MMLM);
   a system implementing one or more large language models (LLMs);
   a system implementing one or more small language models (SLMs);
   a system implementing one or more vision language models (VLMs);
   a system for generating synthetic data;
   a system for generating synthetic data using AI;
   a system incorporating one or more virtual machines (VMs);
   a system implemented at least partially in a data center; or
   a system implemented at least partially using cloud computing resources.
53. The one or more processors of any of clauses 28-35, wherein the one or more processors are comprised in at least one of:
   a control system for an autonomous or semi-autonomous machine;
   a perception system for an autonomous or semi-autonomous machine;
   a system for performing simulation operations;
   a system for performing digital twin operations;
   a system for performing light transport simulation;
   a system for performing collaborative content creation for 3D assets;
   a system for performing deep learning operations;
   a system for performing remote operations;
   a system for performing real-time streaming;
   a system for generating or presenting one or more of augmented reality content, virtual reality content, or mixed reality content;
   a system implemented using an edge device;
   a system implemented using a robot;
   a system for performing conversational AI operations;
   a system implementing one or more multi-model language models (MMLM);
   a system implementing one or more large language models (LLMs);
   a system implementing one or more small language models (SLMs);
   a system implementing one or more vision language models (VLMs);
   a system for generating synthetic data;
   a system for generating synthetic data using AI;
   a system incorporating one or more virtual machines (VMs);
   a system implemented at least partially in a data center; or
   a system implemented at least partially using cloud computing resources.

As will be apparent to one of ordinary skill in the art, other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. Use of "may" and/or "can" is intended to indicate by way of example without limiting any particular embodiment or component or other function described above, below, or elsewhere herein. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. Use of term "set" (e.g., "a set of items") or "subset" unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as, but not limited to, phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). Number of items in a plurality can be at least two, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. A process such as, but not limited to, those processes described herein (or variations and/or combinations thereof) can be performed under control of one or more computer systems configured with executable instructions and is implemented as code (e.g., executable instructions, one or more computer programs or one or more applications) executing collectively on one or more processors, by hardware or combinations thereof. Code can be stored on a computer-readable storage medium, for example, in form of a computer program comprising a plurality of instructions executable by one or more processors. A computer-readable storage medium can be a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. Code (e.g., executable code or source code) can be stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. A set of non-transitory computer-readable storage media can include multiple non-transitory computer-readable storage media and one or more of individual non-transitory storage media of multiple non-transitory computer-readable storage media lack all of code while multiple non-transitory computer-readable storage media collectively store all of code. Executable instructions can be executed such that different instructions are executed by different processors - for example, a non-transitory computer-readable storage medium store instructions and a main central processing unit ("CPU") executes some of instructions while a graphics processing unit ("GPU") executes other instructions. Different components of a computer system can have separate processors and different processors execute different subsets of instructions.

An arithmetic logic unit can include a set of combinational logic circuitry that takes one or more inputs to produce a result. An arithmetic logic unit can be used by a processor to implement mathematical operation such as, but not limited to, addition, subtraction, or multiplication. An arithmetic logic unit is used to implement logical operations such as, but not limited to, logical AND/OR or XOR. An arithmetic logic unit can be stateless, and made from physical switching components such as, but not limited to, semiconductor transistors arranged to form logical gates. An arithmetic logic unit may operate internally as a stateful logic circuit with an associated clock. An arithmetic logic unit may be constructed as an asynchronous logic circuit with an internal state not maintained in an associated register set. An arithmetic logic unit can be used by a processor to combine operands stored in one or more registers of the processor and produce an output that can be stored by the processor in another register or a memory location.

As a result of processing an instruction retrieved by the processor, the processor may present one or more inputs or operands to an arithmetic logic unit, causing the arithmetic logic unit to produce a result based at least in part on an instruction code provided to inputs of the arithmetic logic unit. The instruction codes provided by the processor to the ALU may be based at least in part on the instruction executed by the processor. Combinational logic in the ALU may process the inputs and produces an output which is placed on a bus within the processor. A processor can select a destination register, memory location, output device, or output storage location on the output bus so that clocking the processor causes the results produced by the ALU to be sent to the desired location.

In the scope of this application, the term arithmetic logic unit, or ALU, is used to refer to any computational logic circuit that processes operands to produce a result. For example, in the present document, the term ALU can refer to a floating point unit, a DSP, a tensor core, a shader core, a coprocessor, or a CPU.

One or more components of systems and/or processors disclosed above can communicate with one or more CPUs, ASICs, GPUs, FPGAs, or other hardware, circuitry, or integrated circuit components that include, e.g., an upscaler or upsampler to upscale an image, an image blender or image blender component to blend, mix, or add images together, a sampler to sample an image (e.g., as part of a DSP), a neural network circuit that is configured to perform an upscaler to upscale an image (e.g., from a low resolution image to a high resolution image), or other hardware to modify or generate an image, frame, or video to adjust its resolution, size, or pixels; one or more components of systems and/or processors disclosed above can use components described in this disclosure to perform methods, operations, or instructions that generate or modify an image.

Computer systems can be configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or example language (e.g., "such as, but not limited to,") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as, but not limited to, "processing," "computing," "calculating," "determining," or like, refer to action and/or processes of a computer or computing system, or similar electronic computing device, that manipulate and/or transform data represented as physical, such as, but not limited to, electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as, but not limited to, tasks, threads, and intelligent agents. Also, each process may refer to multiple processes, for carrying out instructions in sequence or in parallel, continuously or intermittently. Terms "system" and "method" are used herein interchangeably insofar as system may embody one or more methods and methods may be considered a system.

References may be made to obtaining, acquiring, receiving, or inputting analog or digital data into a subsystem, computer system, or computer-implemented machine. Processes of obtaining, acquiring, receiving, or inputting analog and digital data can be accomplished in a variety of ways such as, but not limited to, by receiving data as a parameter of a function call or a call to an application programming interface. Processes of obtaining, acquiring, receiving, or inputting analog or digital data can be accomplished by transferring data via a serial or parallel interface. Processes of obtaining, acquiring, receiving, or inputting analog or digital data can be accomplished by transferring data via a computer network from providing entity to acquiring entity. References may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or interprocess communication mechanism.

Although descriptions herein set forth example implementations of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as example forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. One or more processors, comprising:
circuitry to cause a compiler to:
partition a tile of a tile program into a plurality of sub-tiles, wherein the compiler determines a size of the sub-tiles based, at least in part, on one or more accelerator hardware characteristics;
generate a plurality of instruction groups to be performed on corresponding sub-tiles of the plurality of sub-tiles, wherein the instruction groups are based, at least in part, on a tile operation to be performed on the tile of the tile program;
determine an order to perform individual instruction groups of the plurality of instruction groups; and
generate code to cause individual instruction groups to be performed in the determined order.

2. The one or more processors of claim 1, wherein the compiler determines the size of the sub-tiles by applying heuristics based on memory constraints and processing capabilities of the accelerator hardware.

3. The one or more processors of claim 1 or 2, wherein the compiler is to generate instruction groups that include sub-tile operations derived from tile-level operations, wherein each sub-tile operation corresponds to a portion of the tile.

4. The one or more processors of claim 1, 2, or 3, wherein the compiler is to merge separate loops corresponding to the instruction groups into a single loop to tune scheduling efficiency.

5. The one or more processors of any of claims 1-4, wherein the compiler is to:
generate code that includes one or more loops to process coarse-grained sub-tiles of a tile, the coarse-grained sub-tiles having a first sub-tile size; and
process fine-grained sub-tiles of the coarse-grained sub-tiles, the fine-grained sub-tiles having a second sub-tile size that corresponds to an input data size of an accelerator instruction.

6. The one or more processors of any of claims 1-5, wherein the compiler is to generate a dependency graph to determine the order of execution for the instruction groups based on data dependencies between two or more operations to be performed on two or more corresponding sub-tiles.

7. The one or more processors of any of claims 1-6, wherein the compiler is to modify the order in which to perform the individual instruction groups to satisfy one or more resource constraints indicated by the one or more accelerator hardware characteristics.

8. The one or more processors of any of claims 1-7, wherein the compiler is to use resource reservation information to determine usage of functional units during specific clock cycles while scheduling the instruction groups, wherein the resource reservation information is generated by the one or more processors based, at least in part, on the one or more accelerator hardware characteristics.

9. The one or more processors of any of claims 1-8, wherein the compiler performs loop unrolling.

10. The one or more processors of any of claims 1-9, wherein the one or more processors are comprised in at least one of:
a control system for an autonomous or semi-autonomous machine;
a perception system for an autonomous or semi-autonomous machine;
a system for performing simulation operations;
a system for performing digital twin operations;
a system for performing light transport simulation;
a system for performing collaborative content creation for 3D assets;
a system for performing deep learning operations;
a system for performing remote operations;
a system for performing real-time streaming;
a system for generating or presenting one or more of augmented reality content, virtual reality content, or mixed reality content;
a system implemented using an edge device;
a system implemented using a robot;
a system for performing conversational AI operations;
a system implementing one or more multi-model language models (MMLM);
a system implementing one or more large language models (LLMs);
a system implementing one or more small language models (SLMs);
a system implementing one or more vision language models (VLMs);
a system for generating synthetic data;
a system for generating synthetic data using AI;
a system incorporating one or more virtual machines (VMs);
a system implemented at least partially in a data center; or
a system implemented at least partially using cloud computing resources.

11. A method, comprising:
partitioning a tile of a tile program into a plurality of sub-tiles, wherein a size of the sub-tiles is determined base, at least in part, on one or more accelerator hardware characteristics;
generating a plurality of instruction groups to be performed on corresponding sub-tiles of the plurality of sub-tiles, wherein the instruction groups are based, at least in part, on a tile operation to be performed on the tile of the tile program;
determining an order to perform individual instruction groups of the plurality of instruction groups; and
generating code to cause individual instruction groups to be performed in the determined order.

12. The method of claim 11, wherein determining the size of the sub-tiles comprises applying heuristics based on memory constraints and processing capabilities of the accelerator hardware.

13. The method of claim 11 or 12, wherein generating the plurality of instruction groups comprises generating instruction groups that include sub-tile operations derived from tile-level operations, wherein each sub-tile operation corresponds to a portion of the tile.

14. The method of claim 11, 12, or 13, further comprising merging separate loops corresponding to the instruction groups into a single loop to tune scheduling efficiency.

15. A system, comprising:
one or more processors to cause a compiler to:
partition a tile of a tile program into a plurality of sub-tiles, wherein the compiler determines a size of the sub-tiles based, at least in part, on one or more accelerator hardware characteristics;
generate a plurality of instruction groups to be performed on corresponding sub-tiles of the plurality of sub-tiles, wherein the instruction groups are based, at least in part, on a tile operation to be performed on the tile of the tile program;
determine an order to perform individual instruction groups of the plurality of instruction groups; and
generate code to cause individual instruction groups to be performed in the determined order.
